Europäisches Patentamt

European Patent Office

Office européen des brevets

(19)

(11) **EP 0 469 885 B1**

(12) # EUROPEAN PATENT SPECIFICATION

(45) Date of publication and mention
of the grant of the patent:
**12.11.1997 Bulletin 1997/46**

(51) Int Cl.6: **G06F 15/80**, G06G 7/60

(21) Application number: **91307013.2**

(22) Date of filing: **31.07.1991**

(54) **System for performing weighted summations**

Gewichtetes Summierungsleistungssystem

Système pour l'exécution des sommations pondérées

(84) Designated Contracting States:
**DE FR GB IT NL**

(30) Priority: **01.08.1990 US 561404**
**14.12.1990 US 628257**

(43) Date of publication of application:
**05.02.1992 Bulletin 1992/06**

(73) Proprietor: **GENERAL ELECTRIC COMPANY**
**Schenectady, NY 12345 (US)**

(72) Inventor: **Engeler, William Ernest**
**Scotia, New York 12302 (GB)**

(74) Representative: **Goode, Ian Roy et al**
**London Patent Operation**
**General Electric International, Inc.,**
**Essex House,**
**12-13 Essex Street**
**London WC2R 3AA (GB)**

(56) References cited:
- **TWENTY-SECOND ASILOMAR CONFERENCE ON SIGNALS , SYSTEMS & COMPUTERS vol. 1, 31 October 1988, PACIFIC GROVE , USA pages 649 - 653 EBERHARDT 'Considerations for hardware implementations of neural networks'**
- **NEURAL INFORMATION PROCESSING SYSTEMS 1987, DENVER , USA pages 573 - 583 MURRAY 'Bit - serial neural networks'**
- **ELECTRONIC ENGINEERING vol. 62, no. 759, March 1990, LONDON GB page 70 'A bit- slice boost for neural networks'**
- **1990 IEEE INTERNATIONAL SYMPOSIUM ON CIRCUITS AND SYSTEMS vol. 4, 1 May 1990, NEW ORLEANS , USA pages 2982 - 2985 CILINGIROGLU 'Capacitive synapses for microelectronic neural networks'**
- **1989 INTERNATIONAL SYMPOSIUM ON CIRCUITS AND SYSTEMS vol. 3, 8 May 1989, PORTLAND , USA pages 2177 - 2180 HANSEN 'A time-multiplexed switched-capacitor circuit for neural network applications'**

## Description

The invention relates to analog computer structures for performing a plurality of weighted summations of a plurality of input signals (as are used in neural nets, for example) and more particularly, to adapting such analog computer structures for use with digital electronic circuits.

Computers of the von Neumann type-architecture have limited computational speed owing to the communication limitations of the single processor. These limitations can be overcome if a plurality of processors are utilized in the calculation and are operated at least partly in parallel. This alternative architecture, however, generally leads to difficulties associated with programming complexity. Therefore, it is often not a good solution. Recently, an entirely different alternative that does not require programming has shown promise. The networking ability of the neurons in the brain has served as a model for the formation of a highly interconnected set of analog processors, called a "neural network" or "neural net" that can provide computational and reasoning functions without the need of formal programming. The neural nets can learn the correct procedure by experience rather than being preprogrammed for performing the correct procedure. The reader is referred to R.P. Lippmann's article "An Introduction to Computing With Neural Nets" appearing on pages 4-21 of the April 1987 IEEE ASSP MAGAZINE (0740-7467/87/0400-0004/$10.00 " 1987 IEEE), incorporated herein by reference, for background concerning neural nets.

Neural nets are composed of a plurality of neuron models, analog processors each exhibiting "axon" output signal response to a plurality of "synapse" input signals. In a type of neural net called a "perceptron", each of these processors calculates the weighted sum of its "synapse" input signals, which are respectively weighted by respective weighting values that may be positive- or negative-valued, and responds nonlinearly to the weighted sum to generate the "axon" output response. This relationship may be described in mathematical symbols as follows.

$$v_j = f\left(\sum_{i=1}^{M} W_{i,j} X_i\right) \qquad j = 1, 2, \ldots N \tag{1}$$

Here, i indexes the input signals of the perceptron, of which there are an integral number M, and j indexes its output signals, of which there are an integral number N. $W_{i,j}$ is the weighting of the $i^{th}$ input signal as makes up the $j^{th}$ output signal at such low input signal levels that the function

$$f\left(\sum_{i=1}^{M} W_{i,j} X_i\right)$$

is approximately linear. At higher absolute values of its argument, the function

$$f\left(\sum_{i=1}^{M} W_{i,j} X_i\right)$$

no longer exhibits linearity but rather exhibits a reduced response to

$$\sum_{i=1}^{M} W_{i,j} X_i.$$

This type of non-linear response is termed "sigmoidal". The weighted summation of a large number of sampled-data terms can be viewed as the process of correlating the sampled-data function described by those sampled-data terms with the sampled-data function described by the pattern of weights; and the analog processor used as a neuron model in a "perceptron" can be viewed as a correlator with non-linear circuitry exhibiting a sigmoidal response connected thereafter.

A more complex artificial neural network arranges a plurality of perceptrons in hierarchic layers, the output signals of each earlier layer providing input signals for the next succeeding layer. Those layers preceding the output layer providing the ultimate output signal(s) are called "hidden" layers. The training of an artificial neural network comprising hierarchic layers of perceptrons is accomplished in the prior art by using a back-propagation training algorithm.

The back-propagation training algorithm is an iterative gradient algorithm designed to minimize the mean square error between the actual output of a multi-layer feed-forward neural net and the desired output. It requires continuous, differentiable non-linearities in the transfer function of the non-linear circutry used after the weighted summation circuits in the neural net layer. A recursive algorithm starting at the output nodes and working back to the first hidden layer is used iteratively to adjust weights in accordance with the following formula.

$$W_{i,j}(t+1) = W_{ij}(t) - \eta \delta_j x_i \tag{2}$$

In this equation $W_{i,j}(t)$ is the weight from hidden node i (or, in the case of the first hidden layer, from an input node) to node j at time t; $x_i$ is either the output of node i (or, in the case of the first hidden layer, is an input signal); $\eta$ is a gain term introduced to maintain stability in the feedback procedure used to minimize the mean square errors between the actual output(s) of the perceptron and its desired output(s); and $\delta_j$ is a derivative of error. The general definition of $\delta_j$ is the change in error energy from output node j of a neural net layer with a change in the weighted summation of the input signals used to supply that output node j.

Lippman presumes that a particular sigmoid logistic non-linearity is used. Presuming the non-linearity of processor response is to be defined not as restrictively as Lippmann does, then $\delta_j$ can be more particularly defined as in equation (2), following, if node j is an output node, or as in equation (3), following, if node j is an internal hidden node.

$$\delta_j = z_j' (d_j - z_j) \tag{3}$$

$$\delta_j = z_j' \sum_k \delta_k w_{j,k} \tag{4}$$

In equation (3) $\delta_j$ and $z_j$ are the desired and actual values of output response from the output layer and $z_j'$ is differential response of $z_j$ to the non-linearity in the output layer - i.e., the slope of the transfer function of that non-linearity. In equation (4) k is over all nodes in the neural net layer succeeding the hidden node j under consideration and $W_{j,k}$ is the weight between node j and each such node k. The term $z_{j'}$ is defined in the same way as in equation (3).

The general definition of the $z_{j'}$ term appearing in equations (3) and (4), rather than that general term being replaced by the specific value of $z_{j'}$ associated with a sigmoid logistic non-linearity, is the primary difference between the training algorithm as described here and as described by Lippmann. Also, Lippmann defines $d_j$ in opposite polarity from equations (1), (3) and (4) above.

During training of the neural net, prescribed patterns of input signals are sequentially repetitively applied, for which patterns of input signals there are corresponding prescribed patterns of output signals known. The pattern of output signals generated by the neural net, responsive to each prescribed pattern of input signals, is compared to the prescribed pattern of output signals to develop error signals, which are used to adjust the weights per equation (2) as the pattern of input signals is repeated several times, or until the error signals are detected as being negibly valued. Then training is done with the next set of patterns in the sequence. During extensive training the sequence of patterns may be recycled.

In the present-day development of the integrated electronic circuitry art, the weighted summation of a large number of terms, each of which has resolution that would require plural-bit digital sampling, can be done appreciably faster and at less cost in integrated circuit die area by processing in the analog regime rather than in the digital regime. Using capacitors to perform weighted summation in accordance with Coulomb's Law provides neural nets of given size operating at given speed that consume less power than those the analog processors of which use resistors to implement weighted summation in accordance with Ohm's Law.

There is a class of problems that can usefully employ neural nets for their solution, but for which synapse input signal samples are plural-bit digital samples. Particularly where there are numerous plural-bit digital synapse input signal samples, difficulties are encountered in getting the plural-bit digital samples into the monolithic integrated circuit in which a neural net layer reposes, because of practical limitations on the number of pins available on the integrated circuit package. An example of when this type of problem is encountered is when one attempts to use a neural net to perform the two-dimensional spatial filtering associated with the recognition of shapes in video signals generated by raster scanning a focal plane array of photosensors in a video camera. In such two-dimensional spatial filtering it is desirable to provide for the temporary storage of the raster-scanned video signal samples, so that they may be temporally aligned for application to the neural net. In the present state of technology the temporary storage of a substantial number of video samples is most advantageously done in digital memory. The synapse input signals made available to the neural net from the digital memory are in digital, not analog, form.

The problem of the synapse input signals made available to a neural net being in plural-bit digital form rather than in analog form can arise in other contexts, too. In systems where the neural net layers are not located in proximity to each other the axon output response ofa hidden neural net layer can be digitized in an analog-to-digital converter and transferred without error over substantial distances to another neural net layer. Using digital rather than analog signals to communicate between neural net layers can also be useful when back-propagation training algorithms are used to train a neural net, since it easier in the digital regime to alter the training algorithm in specified ways to take into account whether a new task is being learned or whether instead an old task is being modified to take into account a change in the operating environment.

Streams of digital samples have to be converted to respective analog input signals in order to be used with the neural nets known in the prior art; and, since the samples requiring conversion are parallel in time, a respective digital-to-analog converter is required for each input signal to the neural net. Except where the streams of digital samples are single-bit in nature, the well-known problems of avoiding the conversion non-linearity associated with converting a multiple-bit digital number code stream to a respective analog signal have to be faced with regard to each of these digital-to-analog converters, and these problems are known to be more difficult to solve as the size of the converters has to be made smaller to accommodate a large number of them on a monolithic integrated circuit.

Document : TWENTY-SECOND ASILOMAR CONFERENCE ON SIGNALS, SYSTEMS & COMPUTERS vol. 1, 31 October 1988, PACIFIC GROVE , USA pages 649 - 653 EBERHARDT 'Considerations for hardware implementations of neural networks' describes the performance of a single-layer feedback network incorporating simple binary interconnects being extended by using an analog prompt method. Each download interface is parallel, and consists of a memory for digital storage of the weights or network input values, a D/A converter for generating the analog refresh voltage, and an address counter for selecting the capacitor to be refreshed. A digital I/O bus under control of a host processor is used to program weights and network inputs.

Document : NEURAL INFORMATION PROCESSING SYSTEMS 1987, DENVER, USA pages 573 - 583 MURRAY 'Bit - serial neural network' discusses the importance of bit-serial architecture, bit-serial versus bit-parallel arithmetic. When an actual implementation is discussed, the bit-serial concept is used in its computational units. Input to these units are by parallel buses.

Document : ELECTRONIC ENGINEERING vol. 62, no. 759, March 1990, LONDON GB page 70 'A bit-slice boost for neural networks' discloses a digital neural network element containing eight neurons. Data is processed in the neuron in a bit-serial fashion in the synapse computation.

Document : 1990 IEEE INTERNATIONAL SYMPOSIUM ON CIRCUITS AND SYSTEMS vol. 4, 1 May 1990, NEW ORLEANS, USA pages 2982 - 2985 CILINGIROGLU 'Capacitive synapses for microelectronic neural networks' refers to the implementation of the synaptic function of non-adaptive neural networks with a single capacitor. The resulting capacitive synaptic matrix give an opportunity to exploit hybrid microelectronic implementation styles.

Document : 1989 INTERNATIONAL SYMPOSIUM ON CIRCUITS AND SYSTEMS vol. 3, 8 May 1989, PORTLAND, USA pages 2177 - 2180 HANSEN 'A time-multiplexed switched-capacitor circuit for neural network applications' discloses a time-multiplexed switched-capacitor neural computational block.

Digital signals for application to an artificial neural network can be processed on a bit-sliced basis, so there is no need for digital-to-analog converters to convert multiple-bit digital number code streams each to a respective analog signal. A system for performing N weighted summations of input signals, M in number, identified by respective ones of consecutive first through $M^{th}$ ordinal numbers, N being an integer greater than zero and M being an integer greater than one, that embodies the invention is characterized as set out in claim 1.

The final weighted summation of the partial weighted summation results, which are analog in nature, can be carried out in the analog regime (and thereafter digitized, if so desired). Alternatively, the partial weighted summation results may be digitized and then summed with appropriate shifts to obtain final weighted summation results in digital form.

The various figures of the drawing will be described briefly, before considering them in greater detail.

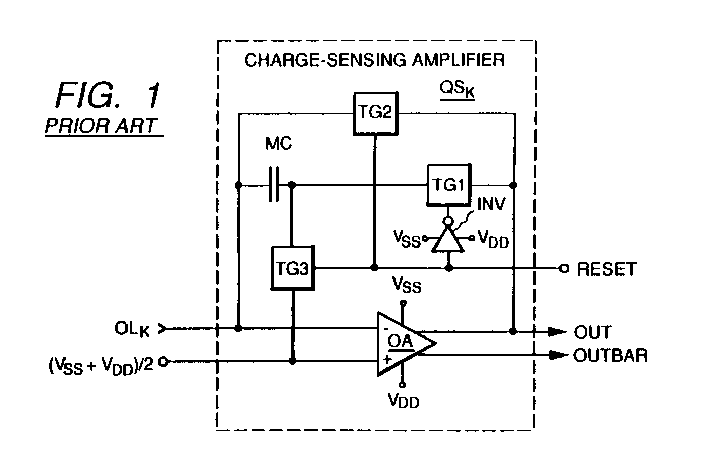

FIGURE 1 is a schematic diagram of a prior-art single-ended charge sensing amplifier comprising a Miller integrator with resetting circuitry that compensates for input offset error in the differential-input operational amplifier the Miller feedback capacitor provides degenerative feedback to; this type of single-ended charge sensing amplifier and a balanced version thereof are preferred over simpler Miller integrators for the charge sensing amplifiers used in the circuitry for performing weighted summations in the analog regime.

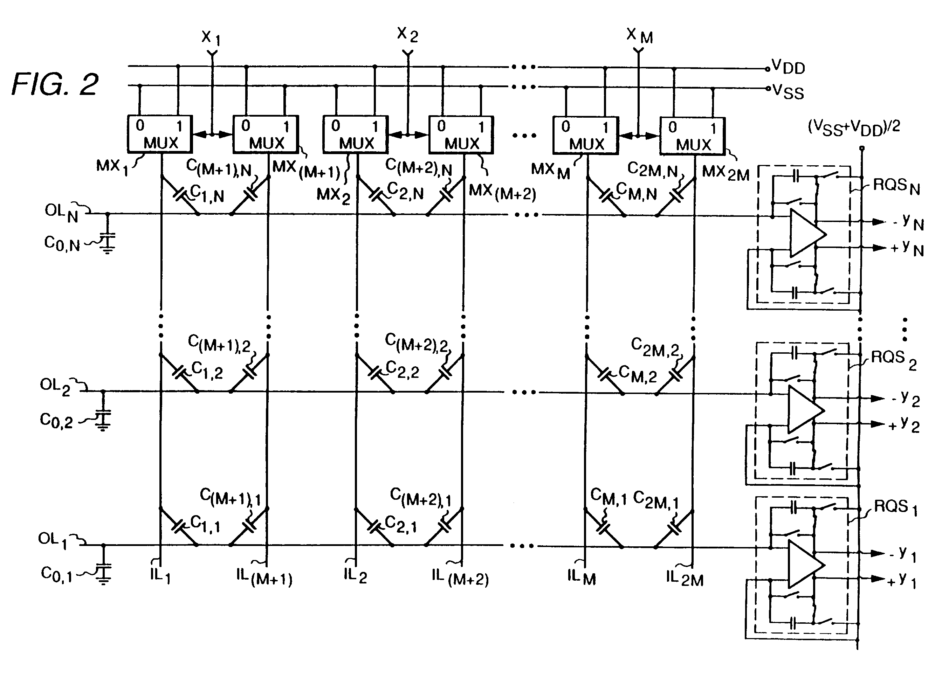

FIGURES 2, 3 and 4 are schematic diagrams of three different apparatuses, each for performing a plurality of weighted summation procedures in parallel on a bit slice of input signals.

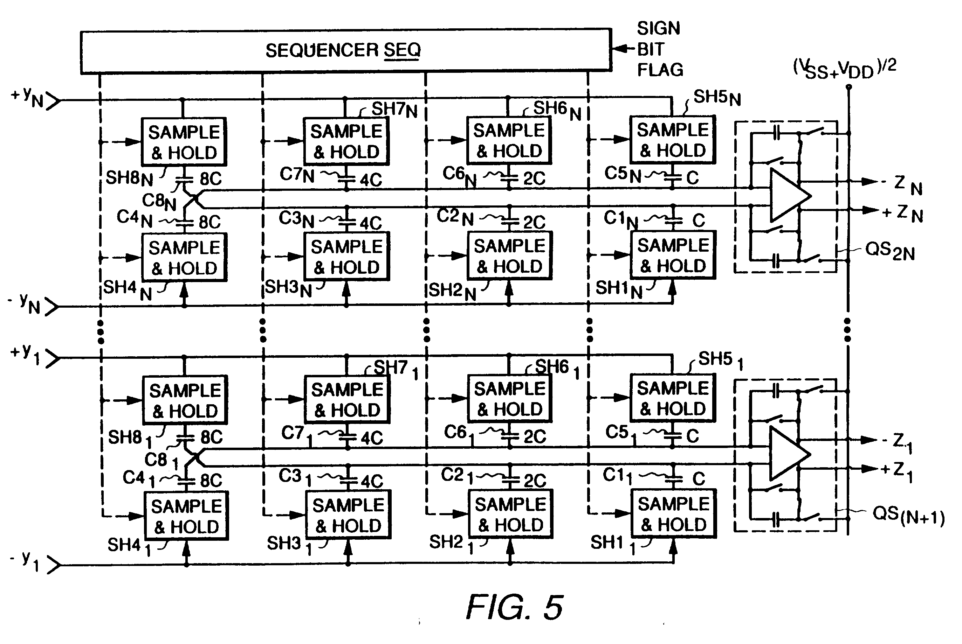

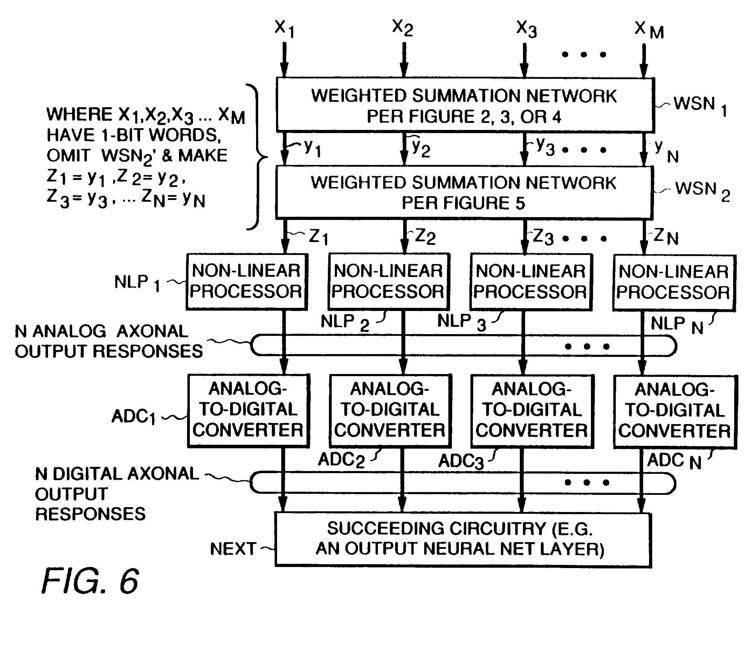

FIGURE 5 is a schematic diagram of apparatus for performing a plurality of weighted accumulation procedures, each of which weighted accumulation procedures weights and sums sequentially supplied data.

FIGURE 6 is a schematic diagram of a neural net layer including any of the FIGURE 2, FIGURE 3 and FIGURE 4 apparatuses for performing a plurality of weighted summation procedures; possibly a FIGURE 5 apparatus for performing a plurality of weighted accumulation procedures; an array of non-linear processors and an array of analog-to-digital converters.

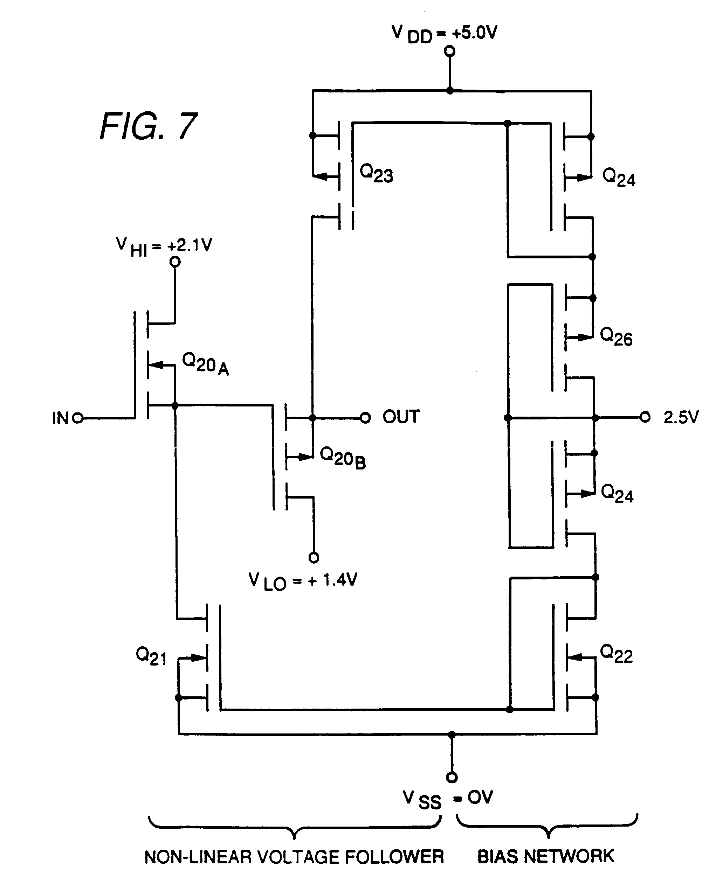

FIGURE 7 is a schematic diagram of a voltage amplifier that can be used as a non-linear processor in neural net layers per FIGURE 6.

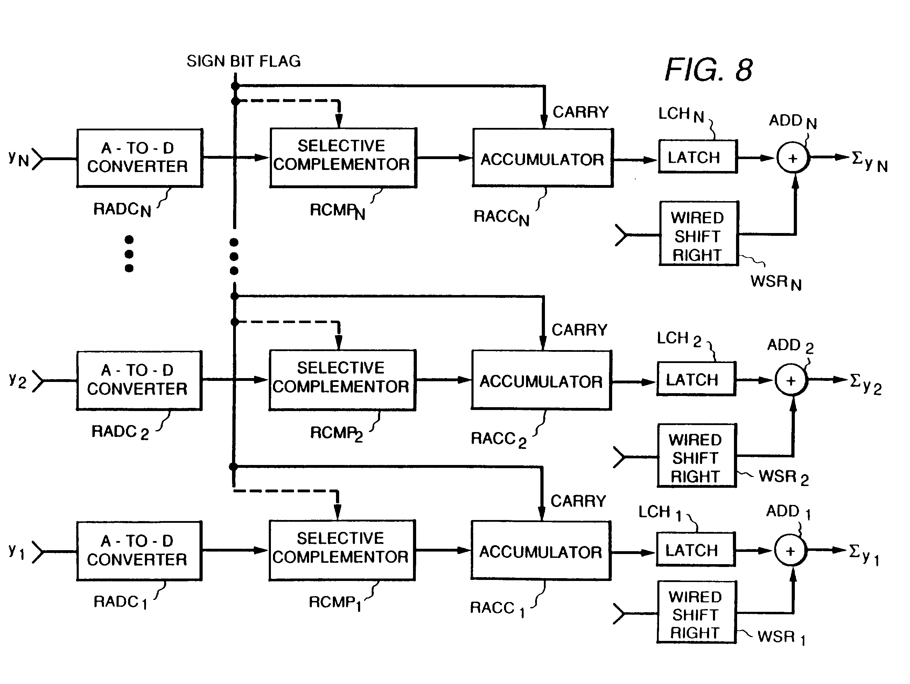

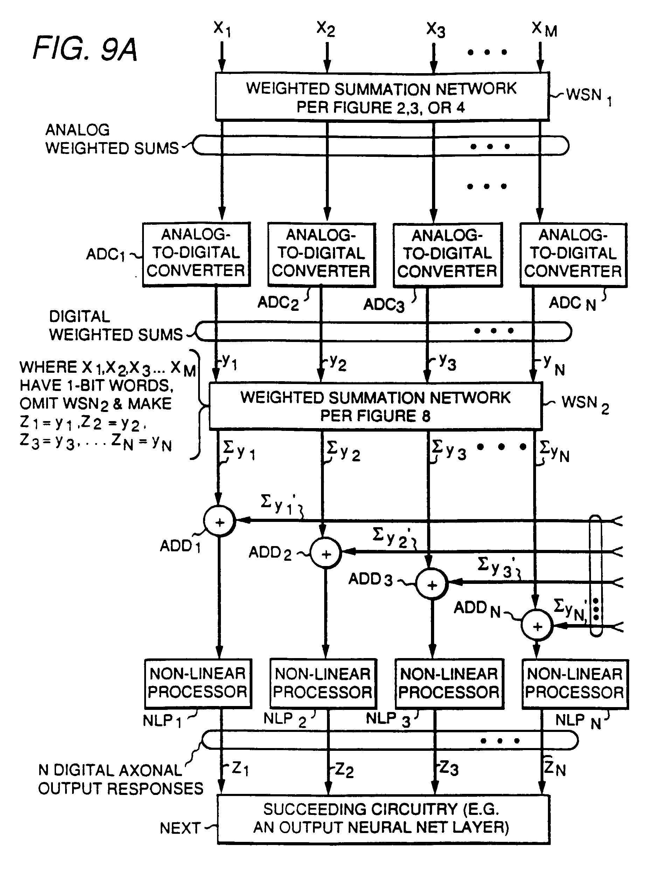

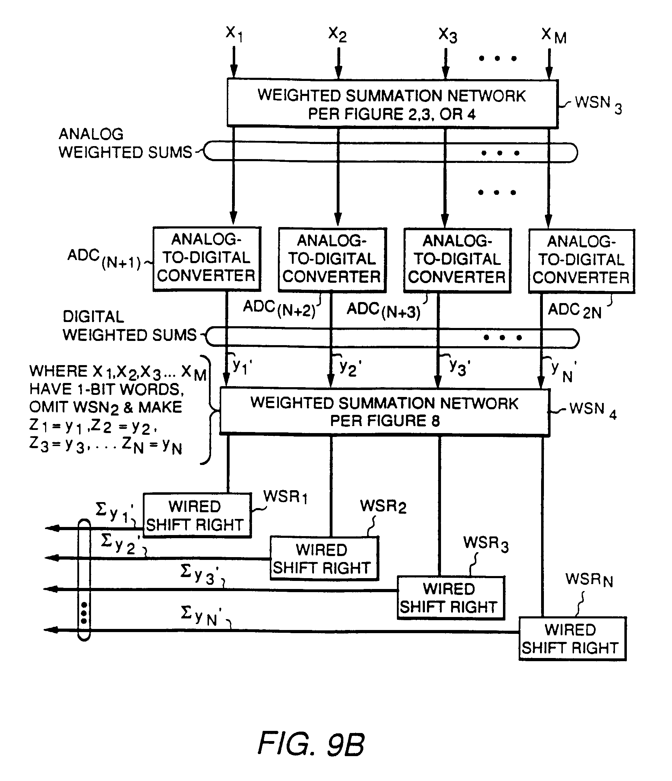

FIGURE 8 is a schematic diagram of apparatus for digitizing analog partial weighted summation results as sequentially supplied from one of the FIGURE 2, FIGURE 3 and FIGURE 4 apparatuses and then digitally performing a plurality of weighted accumulation procedures, each of which weighted accumulation procedures weights and sums a respective succession of digitized sequentially supplied data.

FIGURES 9A and 9B, arranged respectively on the left and on the right of the other, together form a schematic diagram (generally referred to as FIGURE 9) of a neural net layer including any of the FIGURE 2, FIGURE 3 and FIGURE 4 apparatuses for performing a plurality of partial weighted summation procedures; an array of analog-to-digital converters for digitizing the partial weighted summation results; possibly a FIGURE 8 apparatus for digitally performing a plurality of digital final weighted summation procedures; and an array of digital non-linear processors generating digital axonal responses to the digital final weighted summation results.

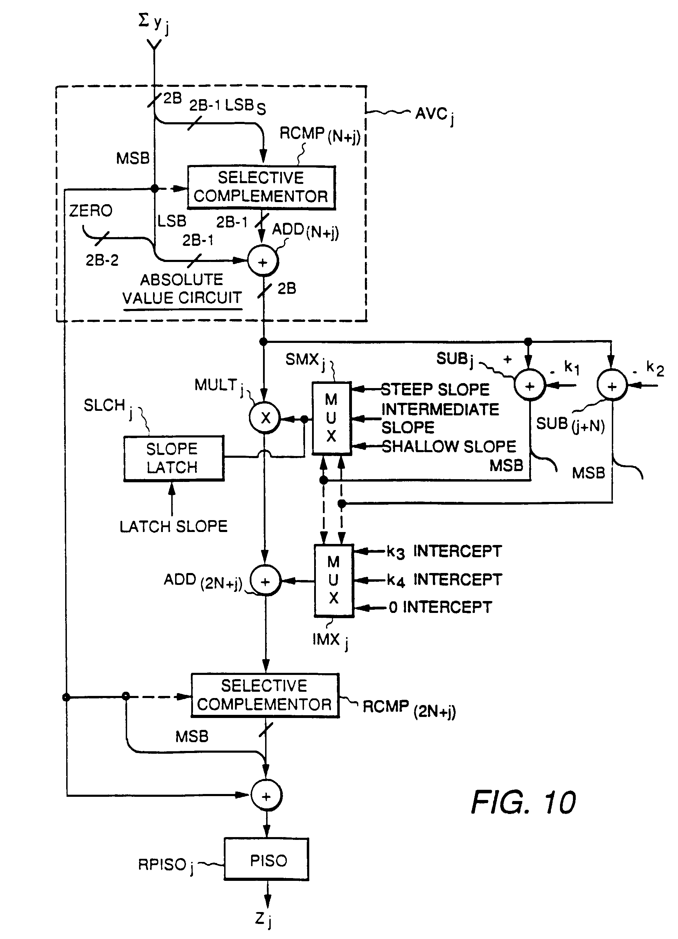

FIGURE 10 is a schematic diagram of a digital non-linear processor that can be used in neural net layers.

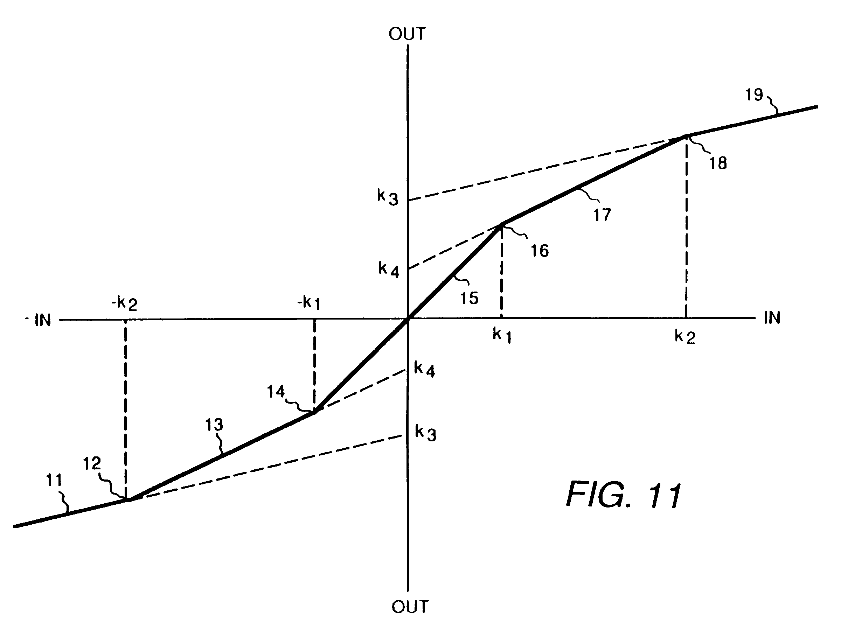

FIGURE 11 is a graph showing the non-linear transfer function of the FIGURE 10 digital non-linear processor.

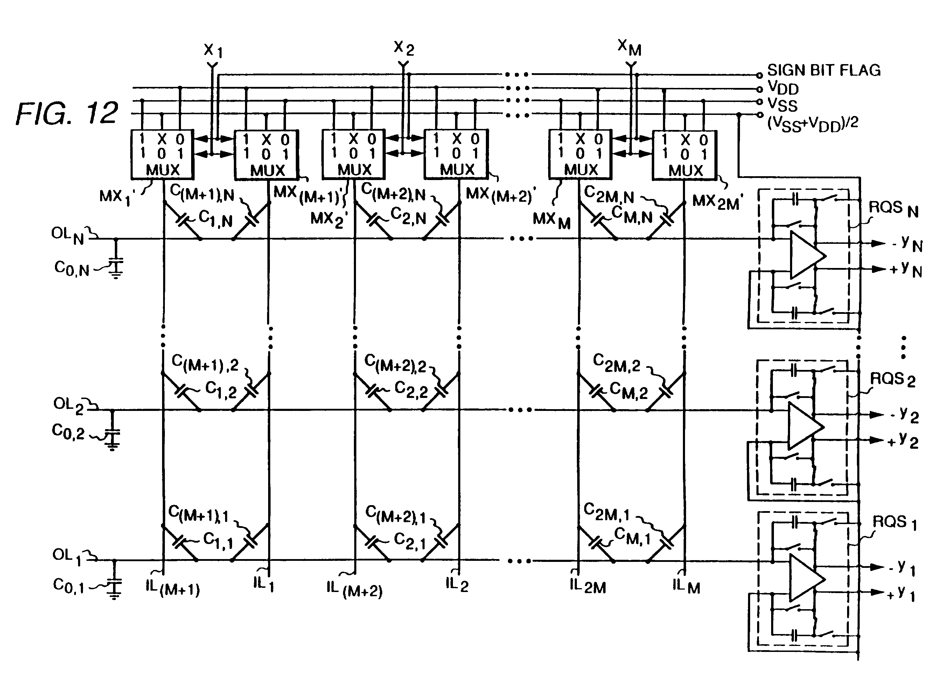

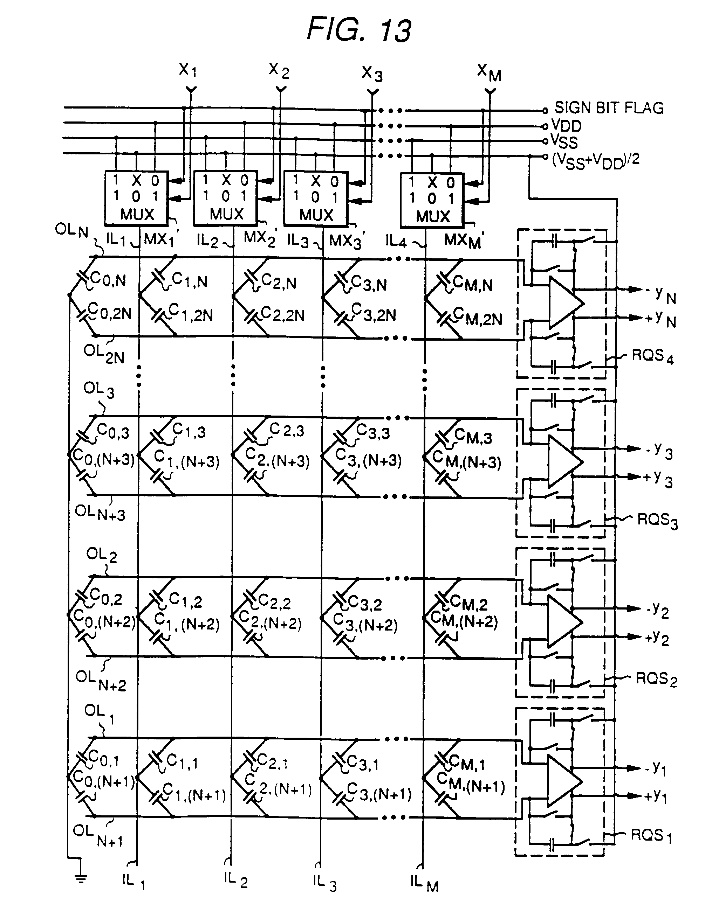

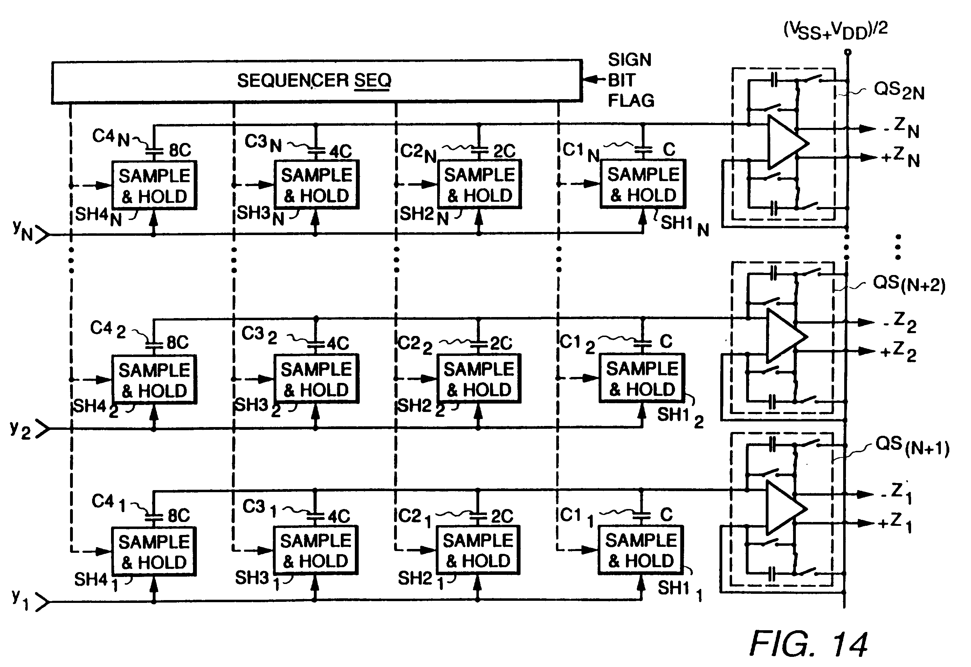

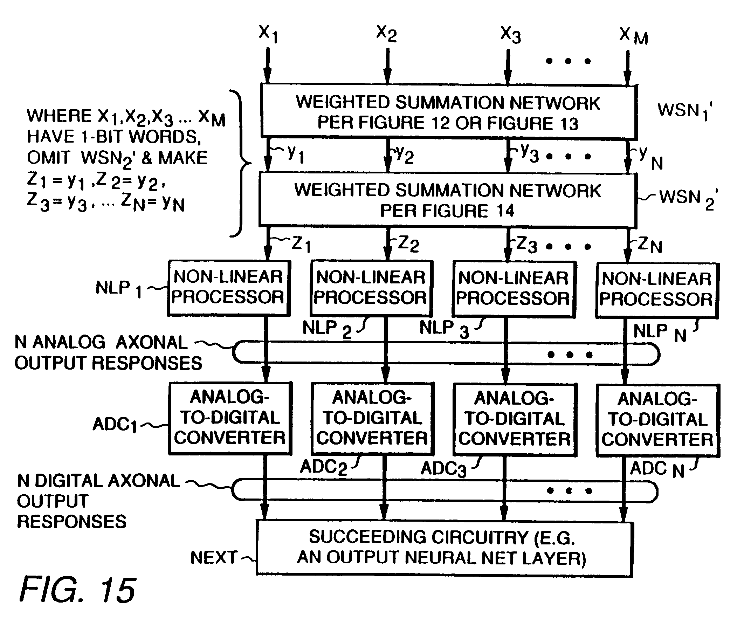

FIGURES 12 and 13 are schematic diagrams of two further apparatuses, each for performing a plurality of weighted summation procedures in parallel on a bit slice of input signals.

FIGURE 14 is a schematic diagram of analog apparatus for performing a plurality of weighted accumulation procedures, each of which weighted accumulation procedures weights and sums sequentially supplied data.

FIGURE 15 is a schematic diagram of a neural net layer including either of the FIGURE 12 and FIGURE 13 apparatuses for performing a plurality of weighted summation procedures; possibly a FIGURE 14 apparatus for performing a plurality of weighted accumulation procedures; an array of non-linear processors and an array of analog-to-digital converters.

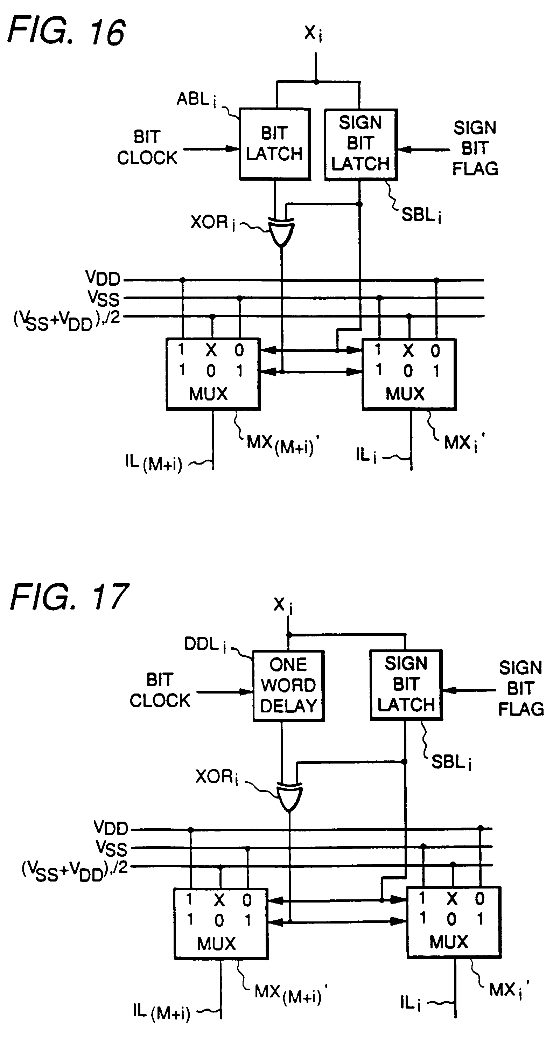

FIGURES 16 and 17 are schematic diagrams of respective modifications of the FIGURE 15 neural net layer to adapt it for operation with one's complement synapse input signals rather than with two's complement synapse input signals.

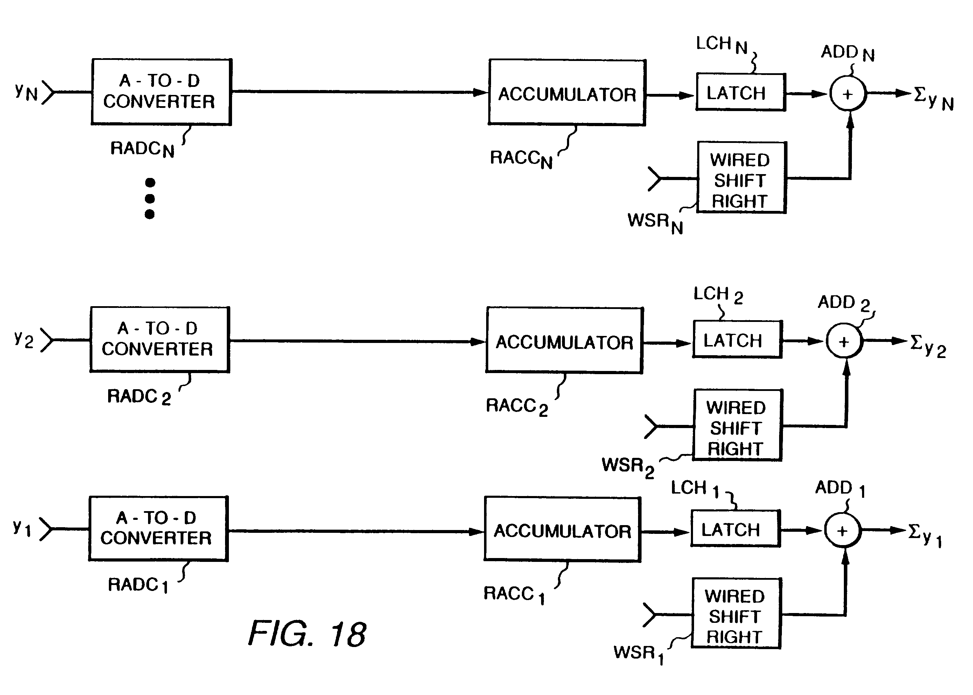

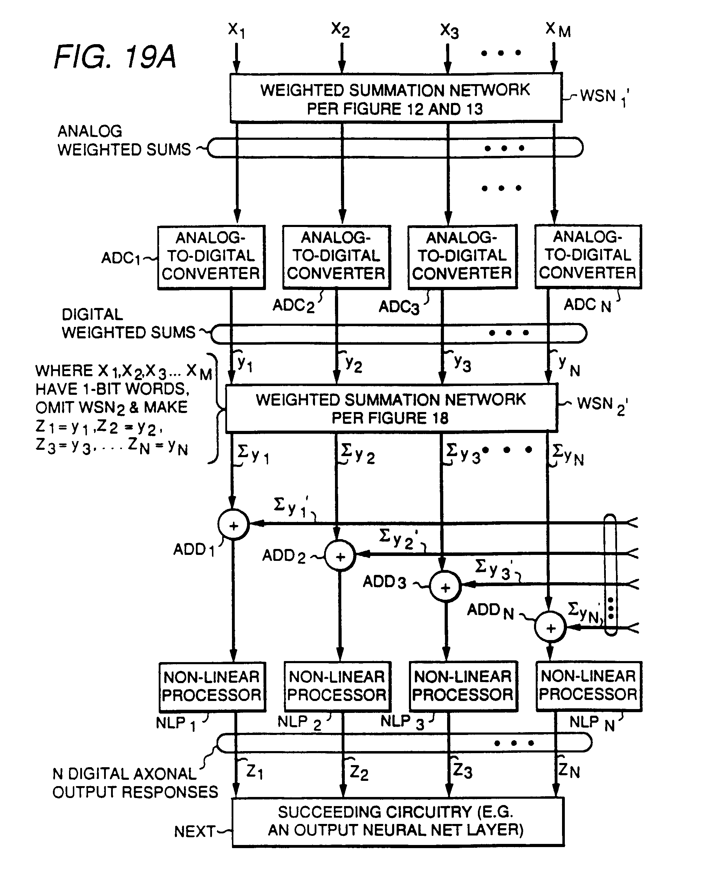

FIGURE 18 is a schematic diagram of apparatus for digitizing analog partial weighted summation results as sequentially supplied from one of the FIGURE 12 and FIGURE 13 apparatuses and then digitally performing a plurality of weighted accumulation procedures, each of which weighted summation procedures weights and sums a respective succession of digitized sequentially supplied data.

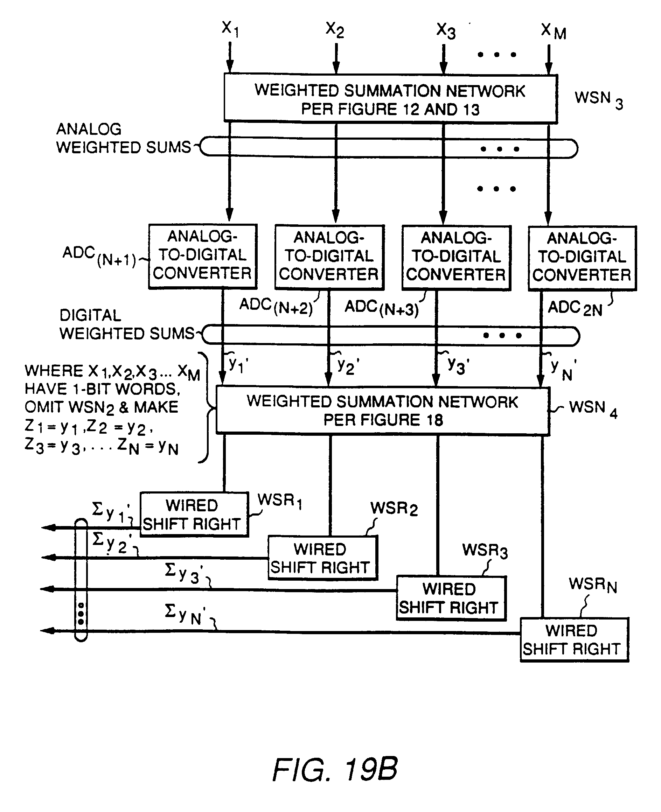

FIGURES 19A and 19B, arranged respectively on the left and on the right of the other, together form a schematic diagram (generally referred to as FIGURE 19) of a neural net layer including two ranks of either of the FIGURE 12 and FIGURE 13 apparatuses for performing a plurality of partial weighted summation procedures; two ranks of analog-to-digital converters for digitizing the partial weighted summation results; two ranks of the FIGURE 18 apparatus connected for digitally performing a plurality of digital final weighted summation procedures; and an array of digital non-linear processors generating digital axonal responses to the digital final weighted summation results.

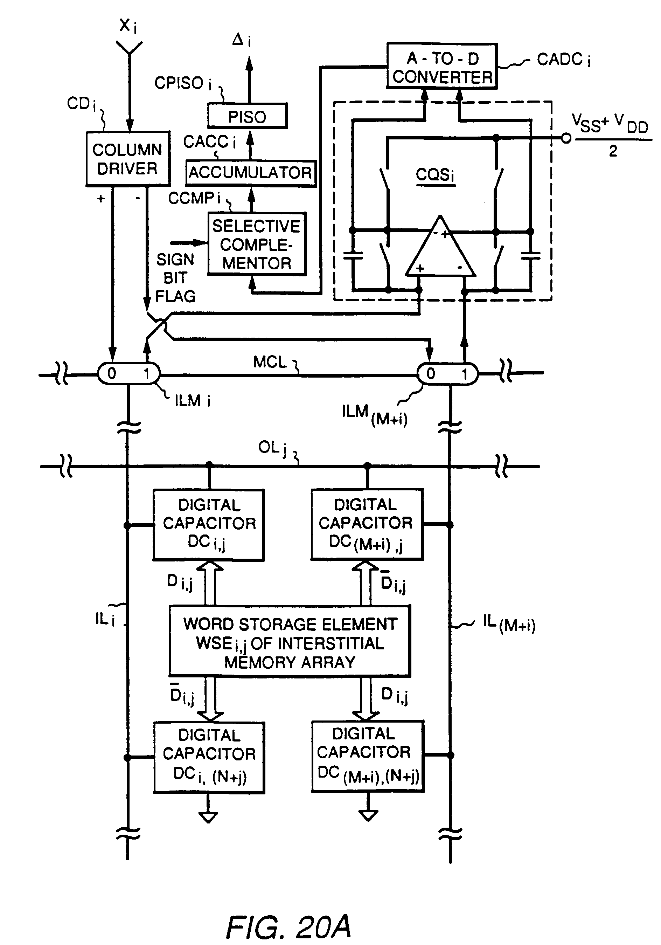

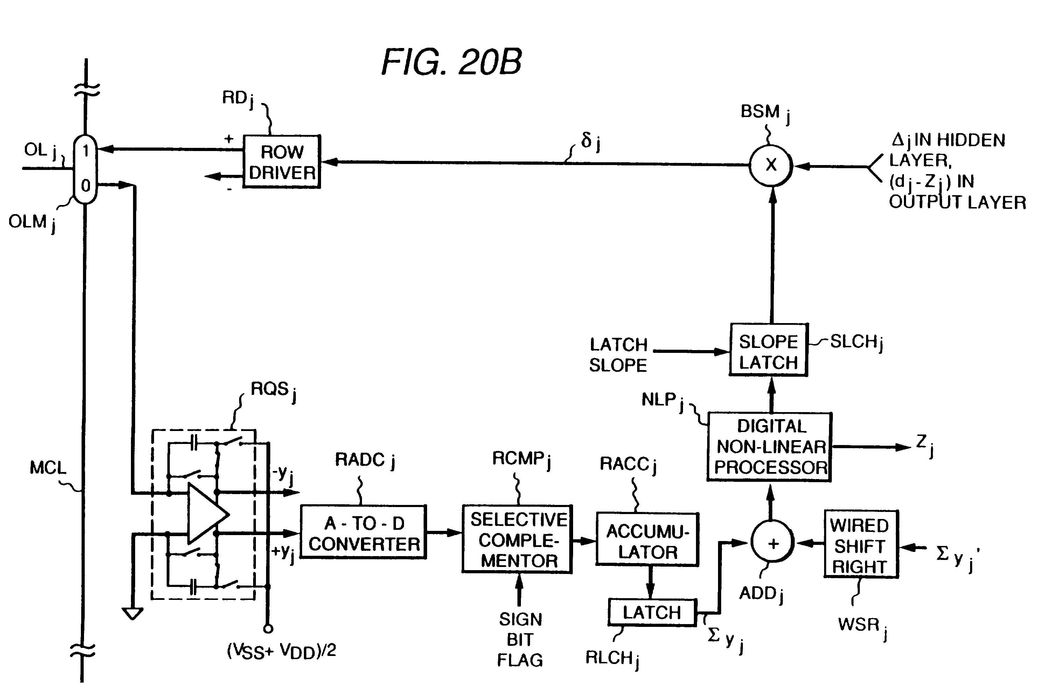

FIGURES 20A and 20B, arranged respectively on the left and on the right of the other, together form a FIGURE 20 which is a schematic diagram of a modification that can be made manifold times to the neural net shown in FIGURES 2, 8 and 9; FIGURES 3, 8 and 9; FIGURES 12, 18 and 19; or FIGURES 13, 18 and 19 for the programmable weighting of the capacitances used in performing weighted summations of synapse signals.

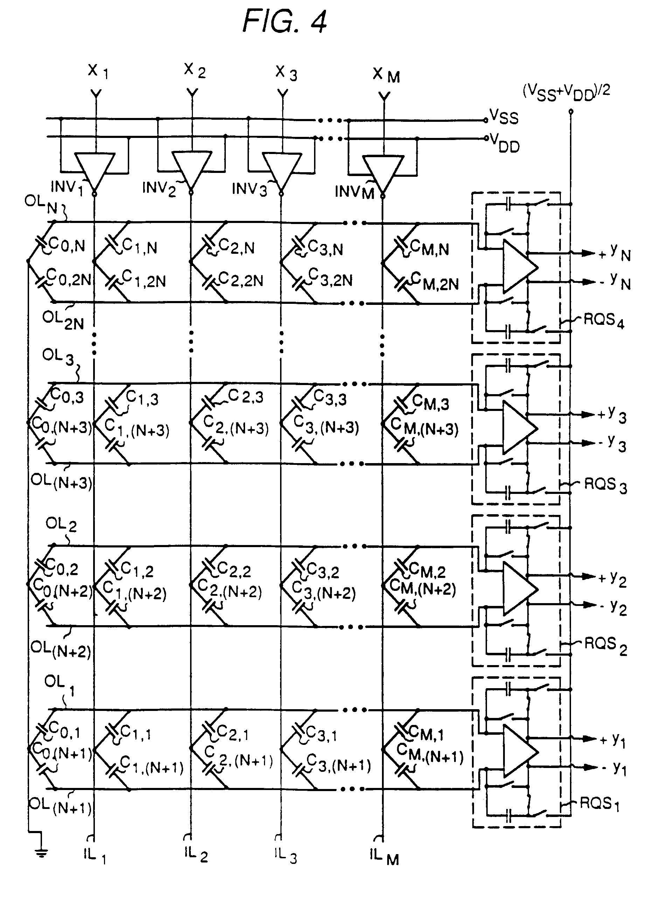

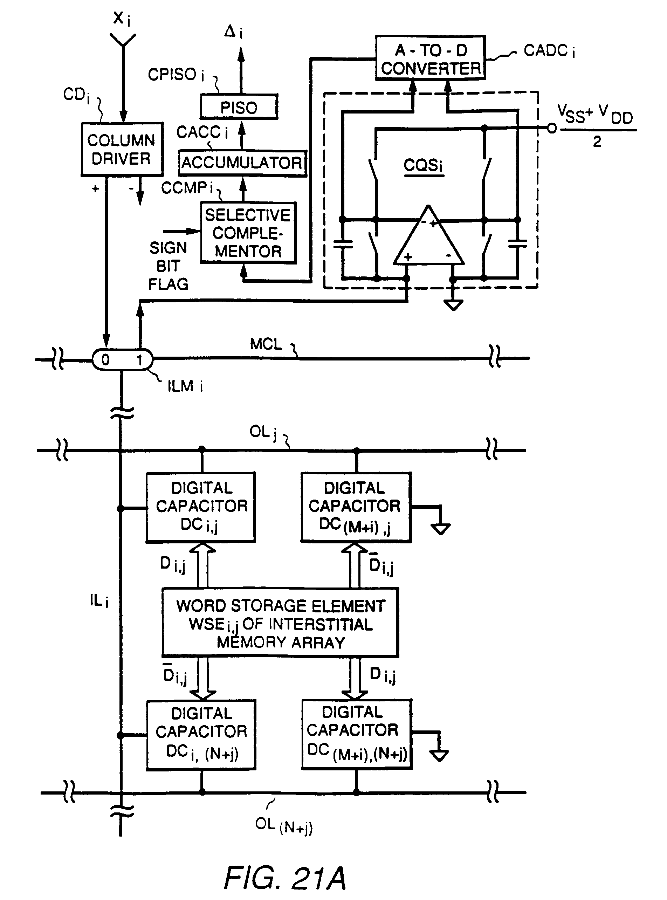

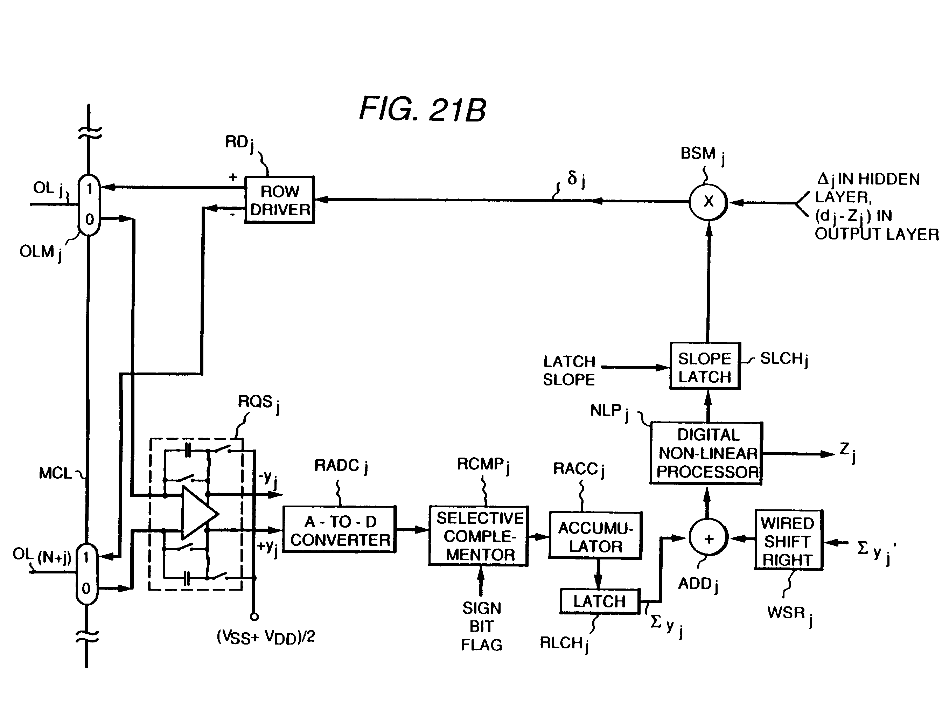

FIGURES 21A and 21B, arranged respectively on the left and on the right of the other, together form a FIGURE 21 which is a schematic diagram of a modification that can be made manifold times to the neural net shown in FIGURES 4, 8 and 9, for the programmable weighting of the capacitances used in performing weighted summations of synapse signals.

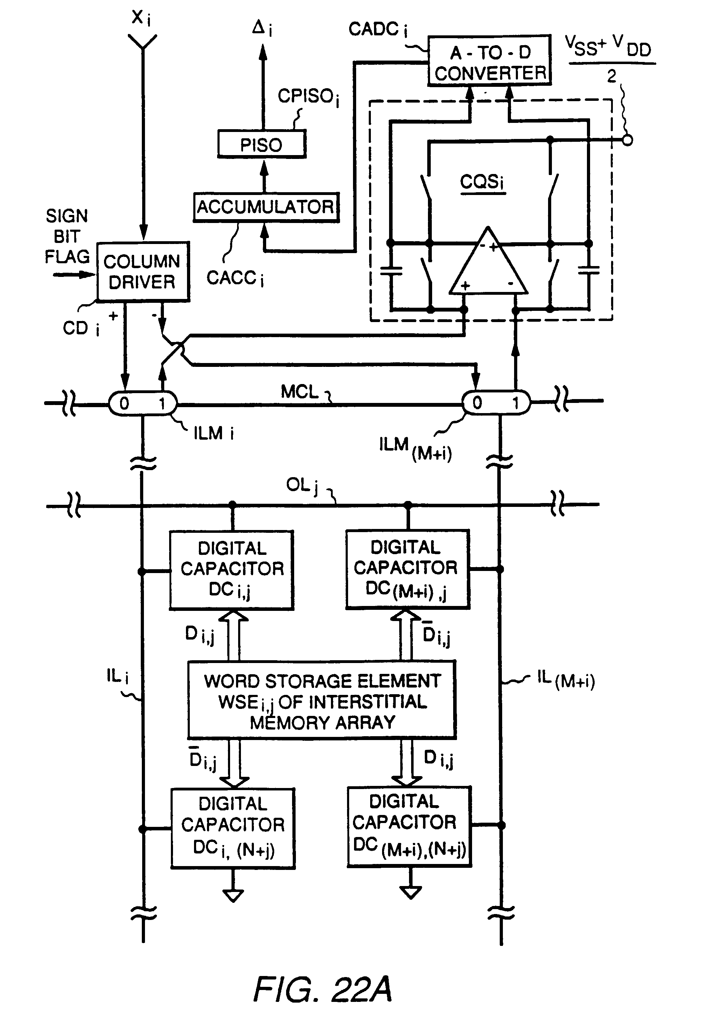

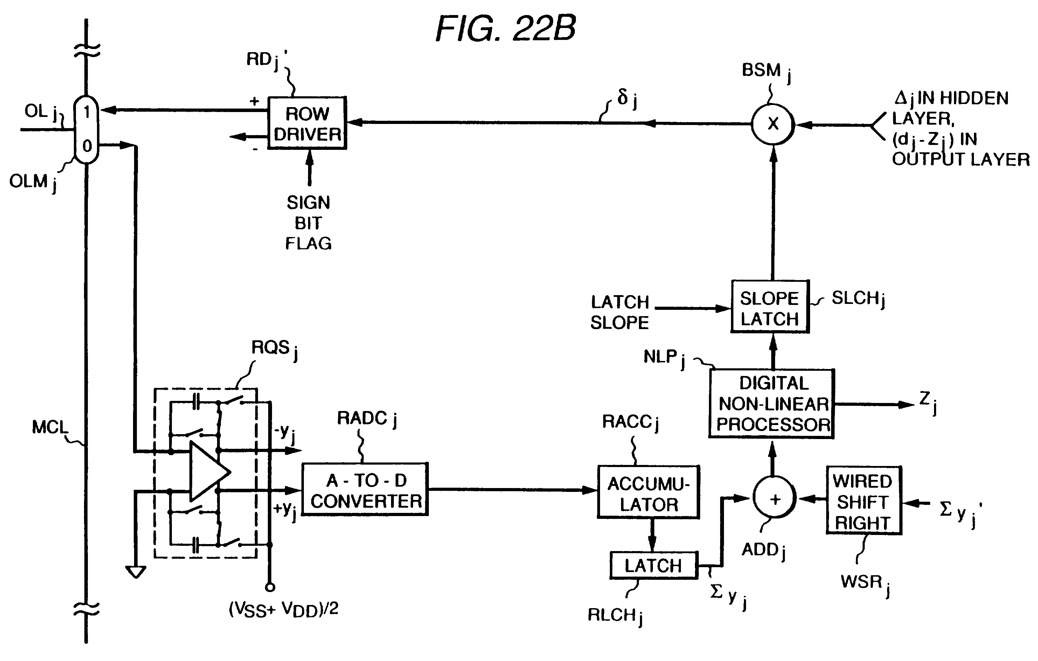

FIGURES 22A and 22B, arranged respectively on the left and on the right of the other, together form a FIGURE 22 which is a schematic diagram of a modification that can be made manifold times to the neural net shown in FIGURES 12, 18 and 19 or in FIGURES 13, 18 and 19, for the programmable weighting of the capacitances used in performing weighted summations of synapse signals.

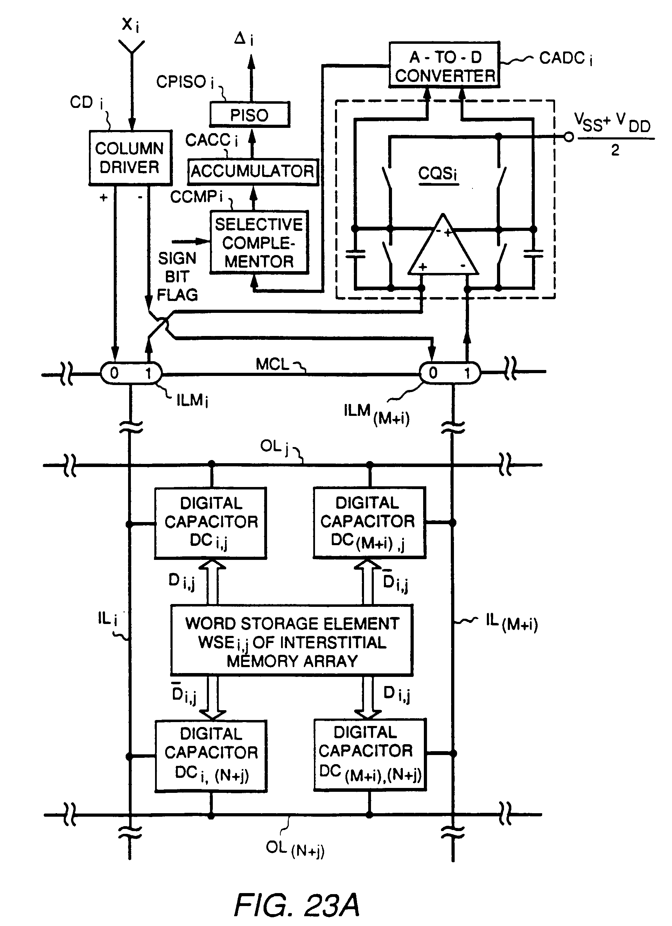

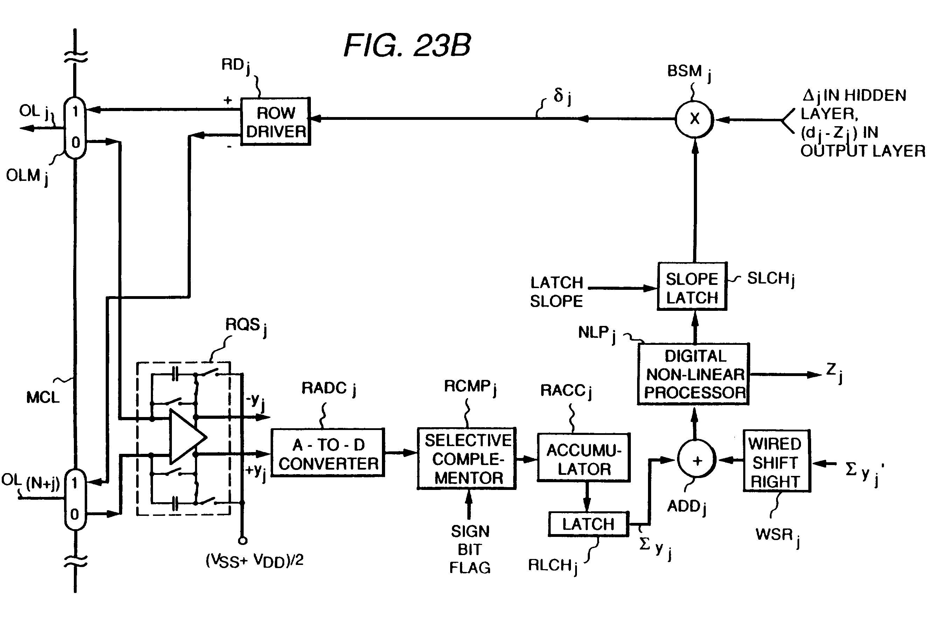

FIGURES 23A and 23B, arranged respectively on the left and on the right of the other, together form a FIGURE 23 that is a schematic diagram of a neural net layer in which both forward propagation and back propagation through a capacitive network are carried out with balanced signals, in which digital capacitors have their capacitance values programmed from respective word storage locations within a digital memory, and in which the signs of the digital signals being weighted and summed are taken into account in the final weighted summation procedure performed on a digital basis.

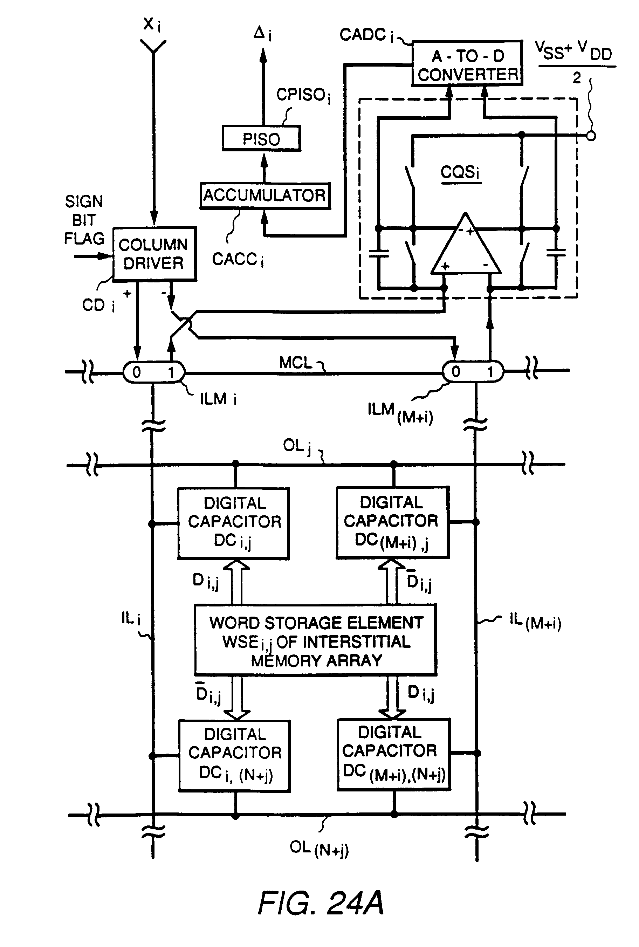

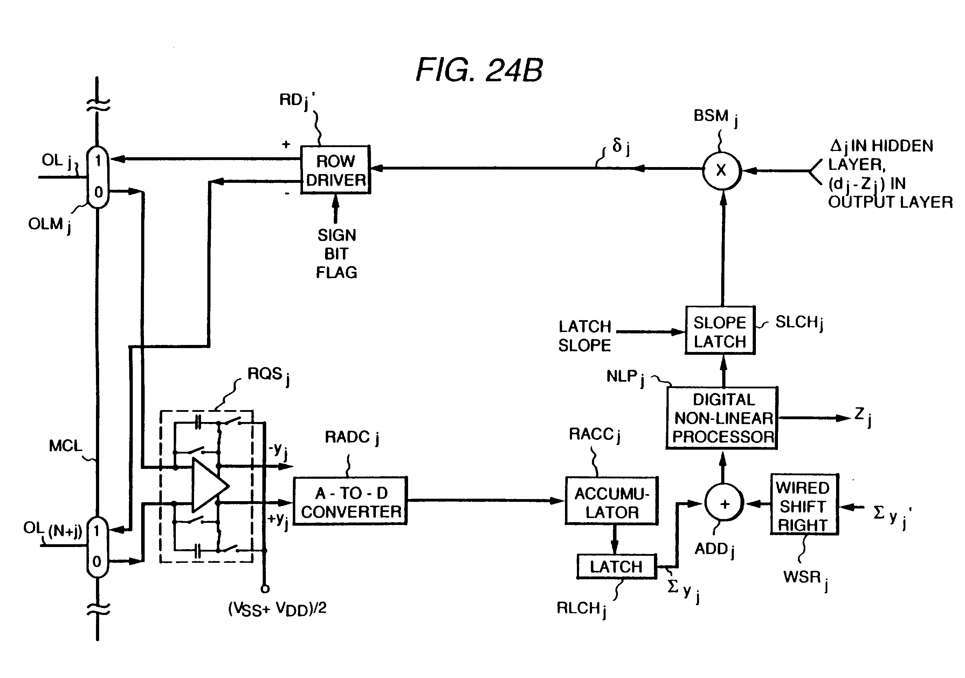

FIGURES 24A and 24B, arranged respectively on the left and on the right of the other, together form a FIGURE 24 that is a schematic diagram of an alternative neural net layer in which both forward propagation and back propagation through a capacitive network are carried out with balanced signals, and in which digital capacitors have their capacitance values programmed from respective word storage locations within a digital memory. In the FIGURE 24 neural net layer the signs of the digital signals being weighted and summed are taken into account in the partial weighted summation procedure performed on an analog basis.

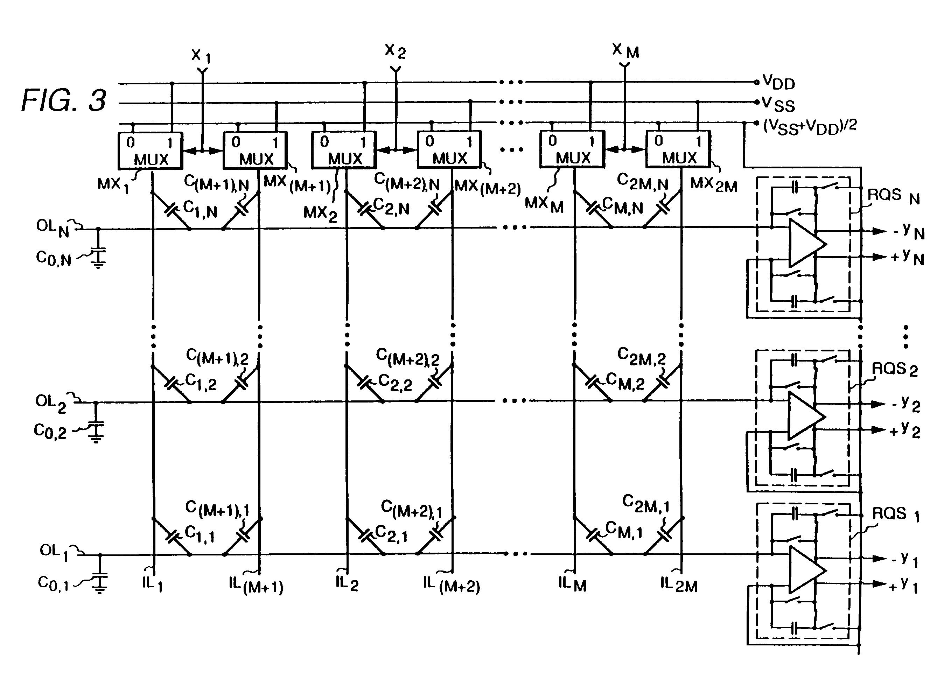

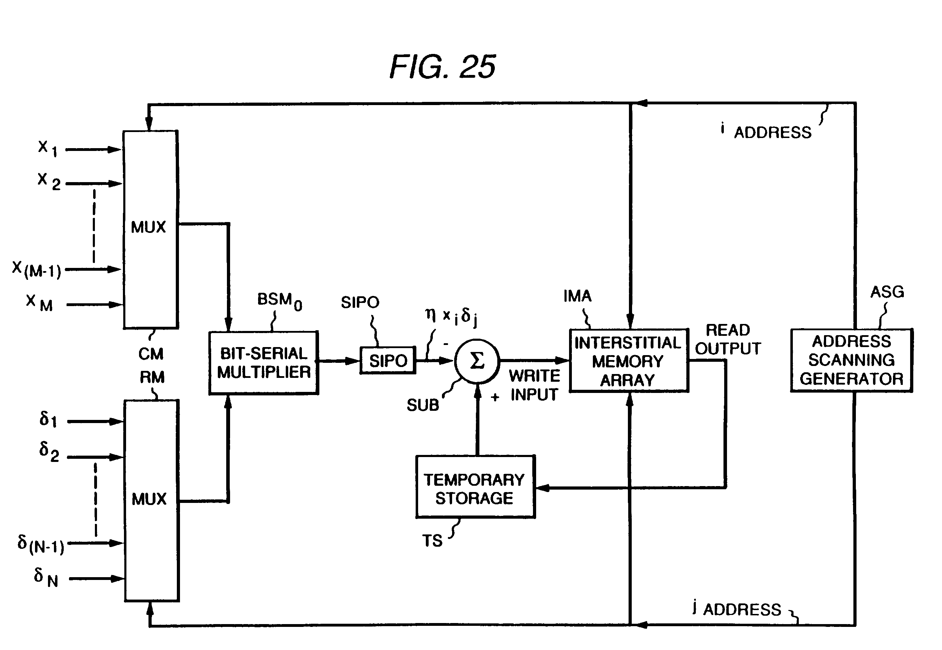

FIGURE 25 is a schematic diagram of a back-propagation processor used for training a neural net having layers as shown in FIGURES 2, 8 and 9 or in FIGURES 3, 8 and 9 modified manifoldly per FIGURE 20; or a neural net having layers as shown in FIGURES 4, 8 and 9 modified manifoldly per FIGURE 21; or a neural net having layers as shown in FIGURES 12, 14 and 15 or in FIGURES 13, 14 and 15 modified manifoldly per FIGURE 22; or a neural net having layers as shown in FIGURE 23; or or a neural net having layers as shown in FIGURE 24.

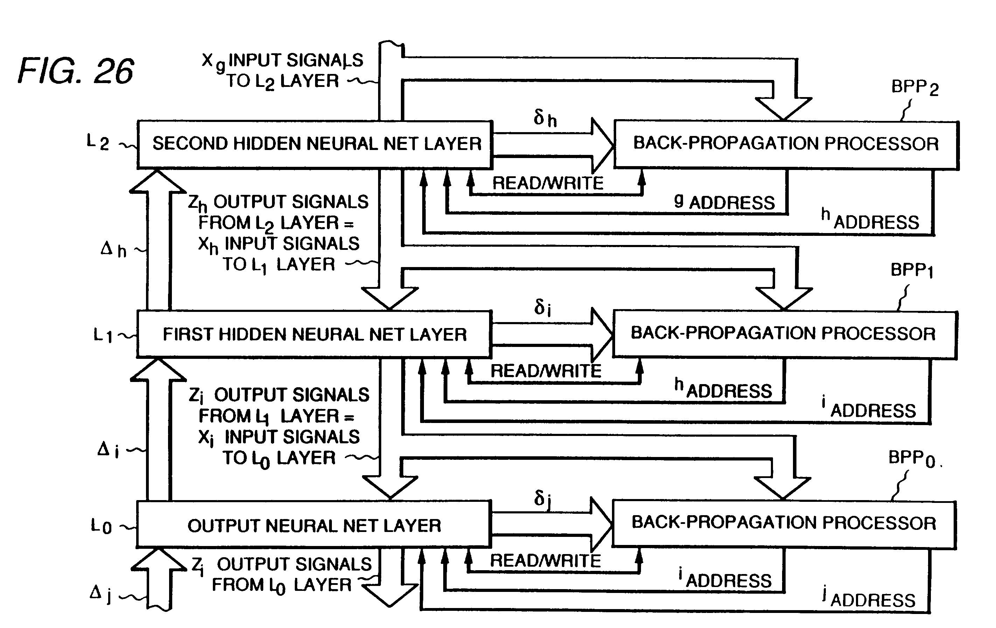

FIGURE 26 is a schematic diagram of a system having a plurality of neural net layers as shown in FIGURES 2, 8 and 9 or in FIGURES 3, 8 and 9 modified manifoldly per FIGURE 20; or in FIGURES 4, 5 and 6 modified manifoldly per FIGURE 21; or in FIGURES 12, 14 and 15 or in FIGURES 13, 14 and 15 modified manifoldly per FIGURE 22; or in FIGURE 23; or in FIGURE 24 each of which neural net layers has a respective back-propagation processor per FIGURE 23 associated therewith.

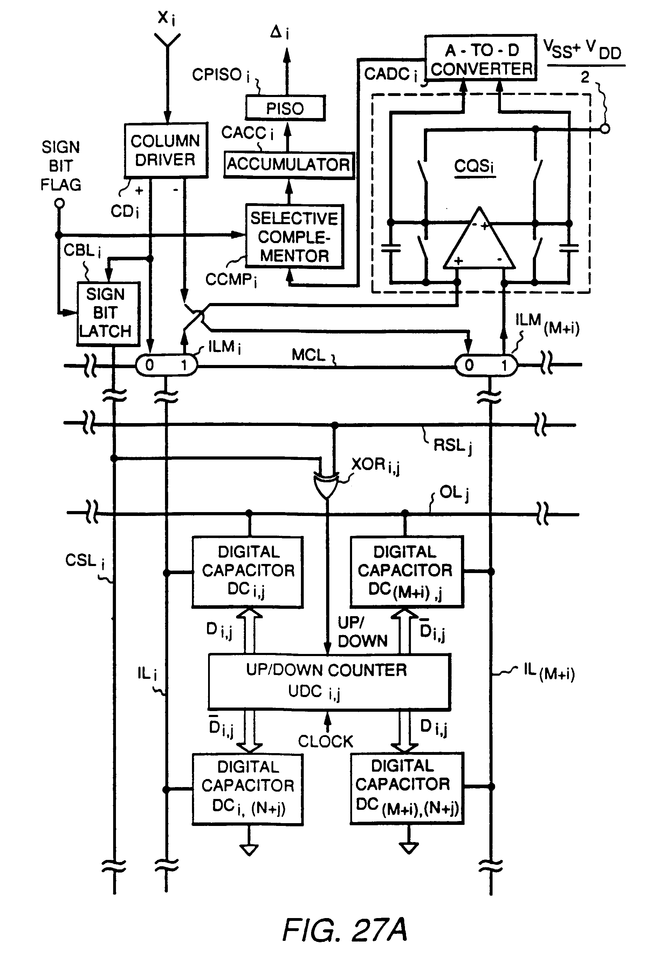

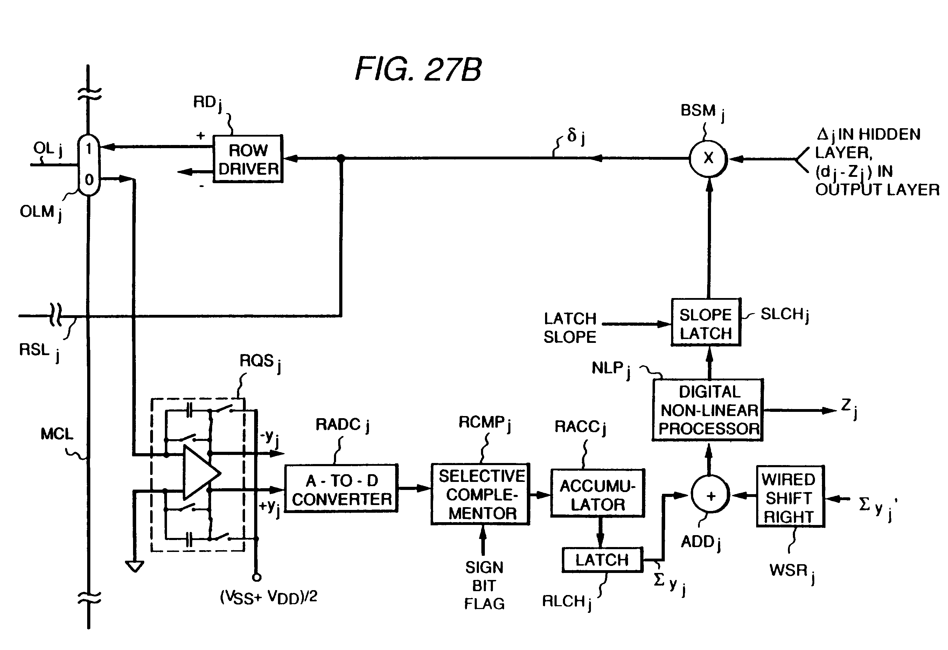

FIGURES 27A and 27B, arranged respectively on the left and on the right of the other, together form a FIGURE 27 that is a schematic diagram of an alternative modification of that can be made manifold times to the neural net shown in FIGURES 2, 8 and 9 or in FIGURES 3, 8 and 9, for the programmable weighting of the capacitances used in performing weighted summations of synapse signals.

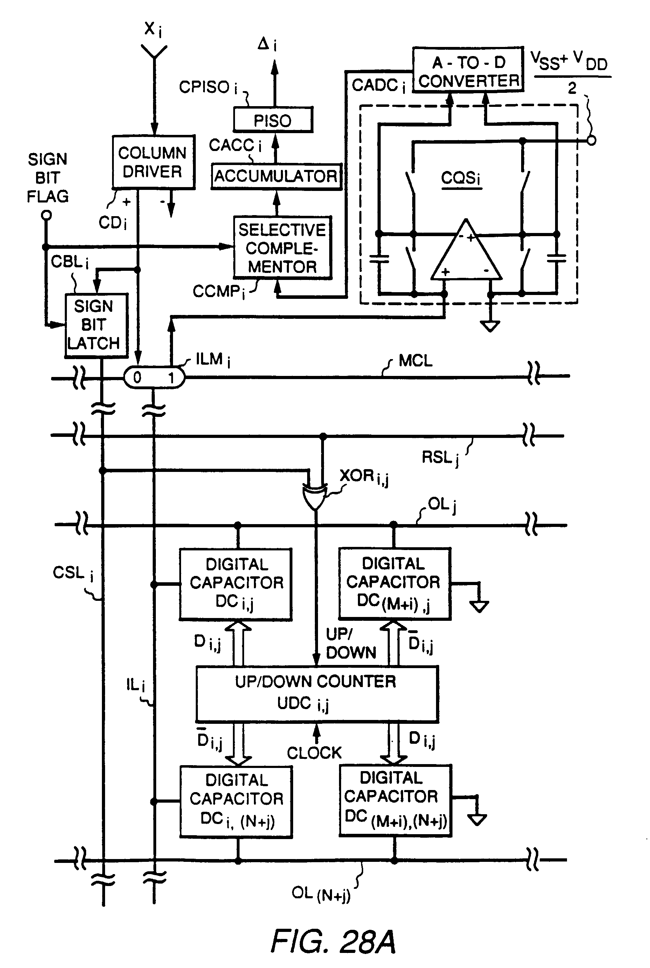

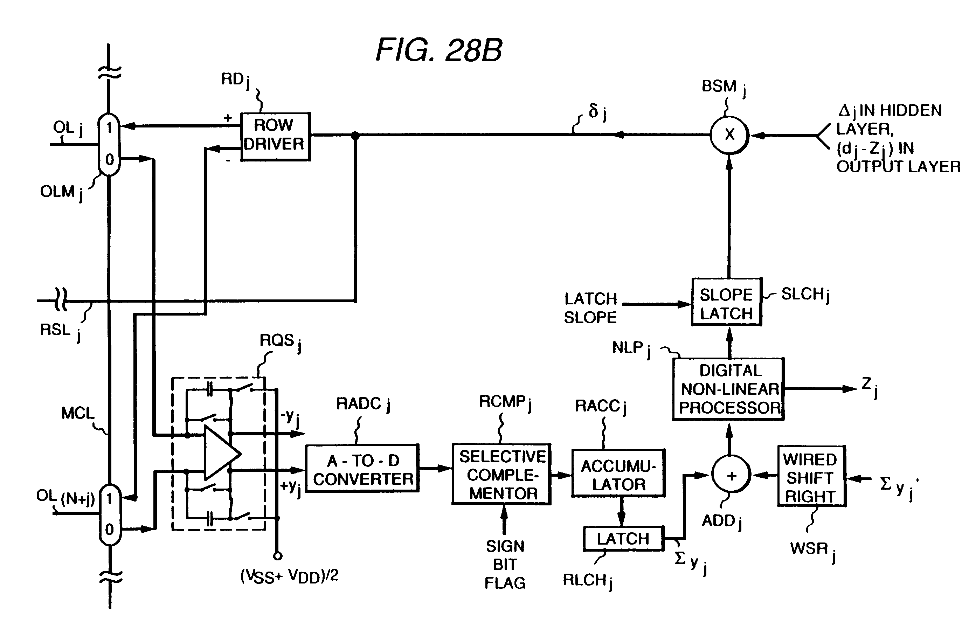

FIGURES 28A and 28B, arranged respectively on the left and on the right of the other, together form a FIGURE 28 that is a schematic diagram of an alternative modification of that can be made manifold times to the neural net shown in FIGURES 4, 8 and 9, for the programmable weighting of the capacitances used in performing weighted summations of synapse signals.

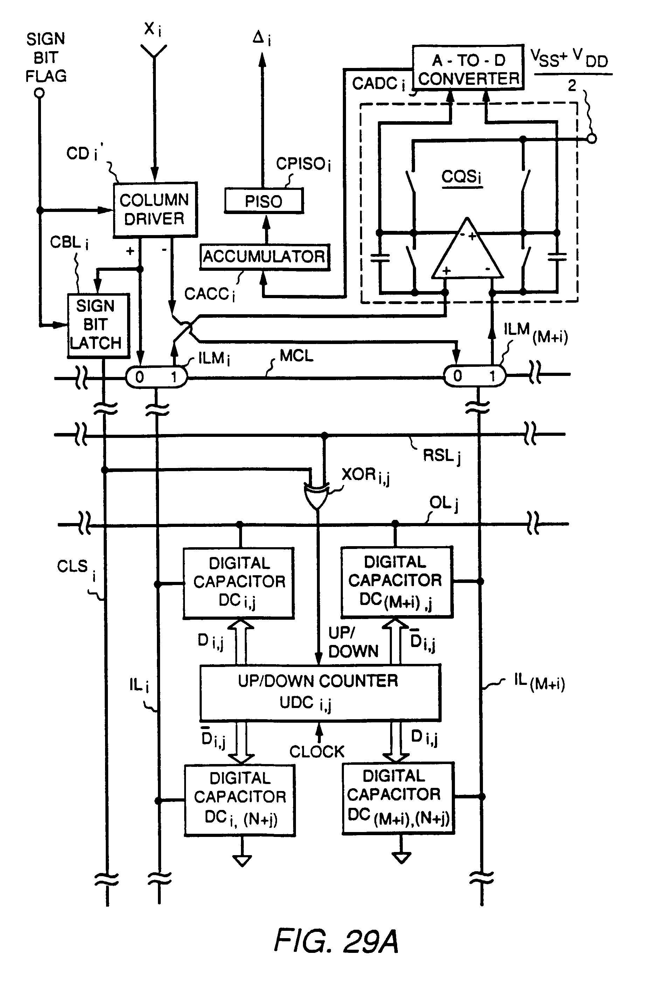

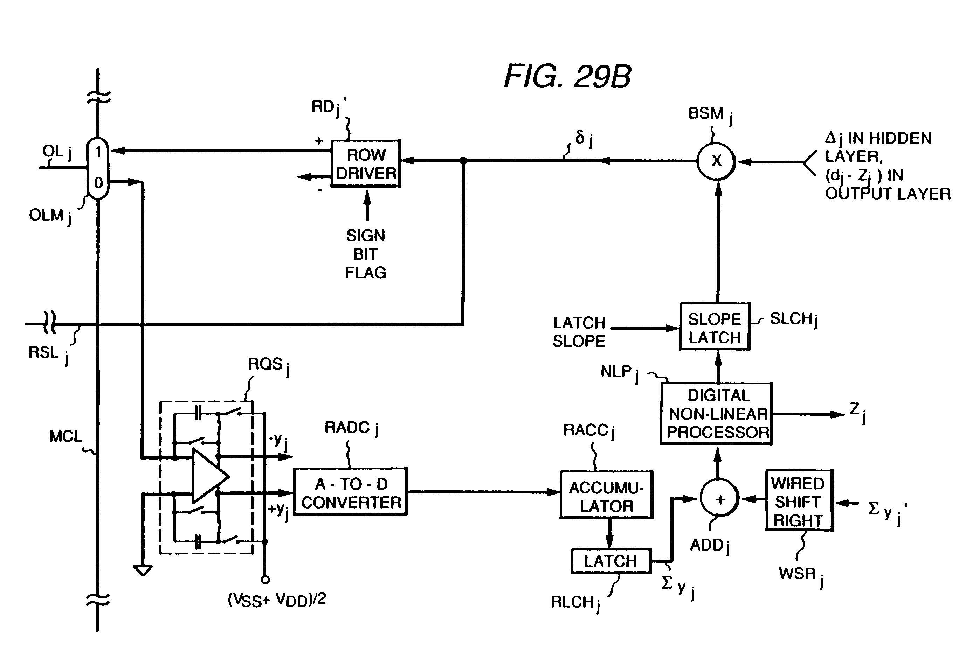

FIGURES 29A and 29B, arranged respectively on the left and on the right of the other, together form a FIGURE 29 that is a schematic diagram of an alternative modification of that can be made manifold times to the neural net shown in FIGURES 12, 14 and 15 or in FIGURES 13, 14 and 15, for the programmable weighting of the capacitances used in performing weighted summations of synapse signals.

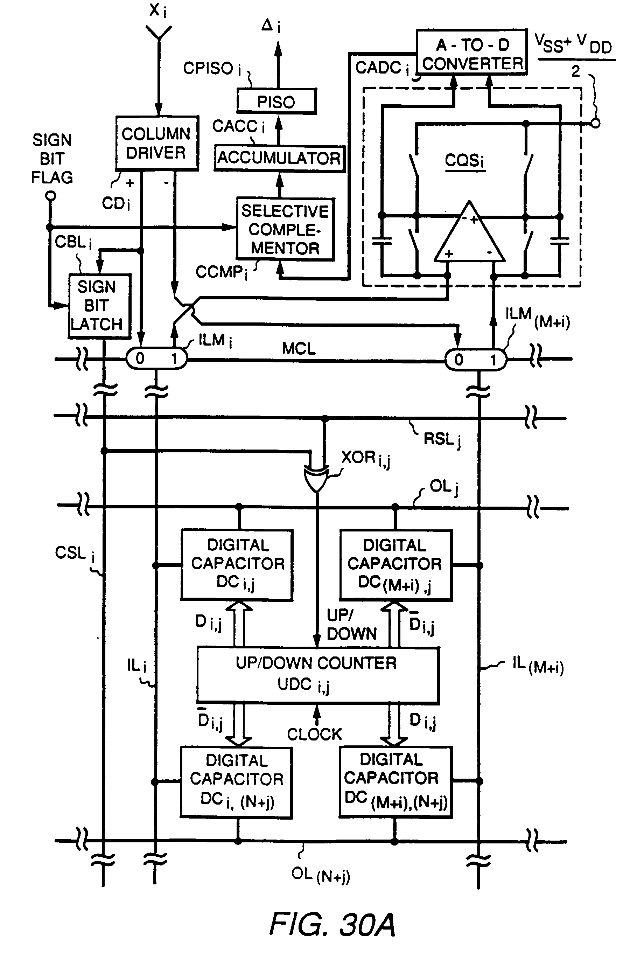

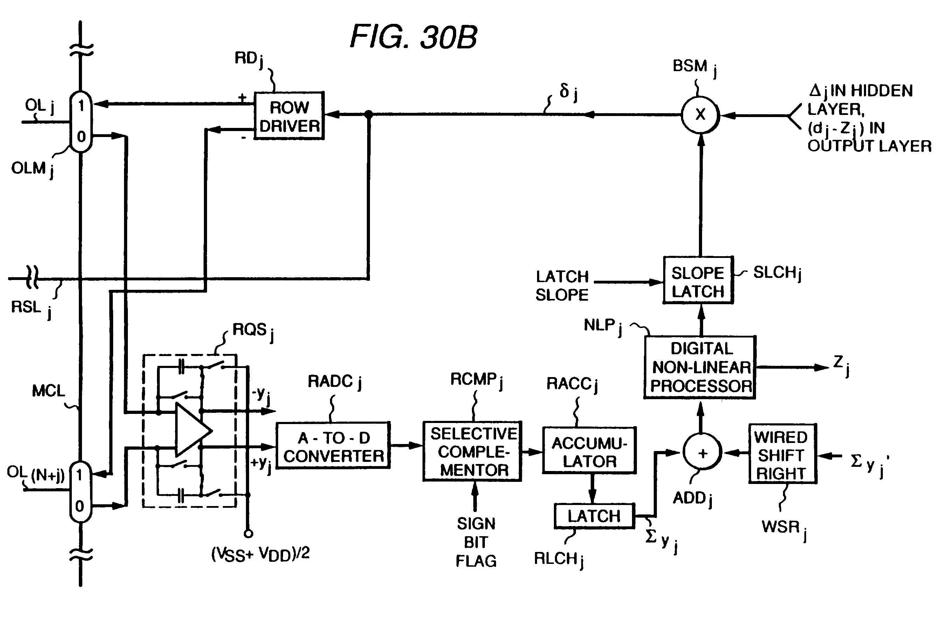

FIGURES 30A and 30B, arranged respectively on the left and on the right of the other, together form a FIGURE 30 that is a schematic diagram of a neural net layer in which both forward propagation and back propagation through a capacitive network are carried out with balanced signals, in which digital capacitors have their capacitance values programmed from counters, and in which the signs of the digital signals being weighted and summed are taken into account in the final weighted summation procedure performed on a digital basis.

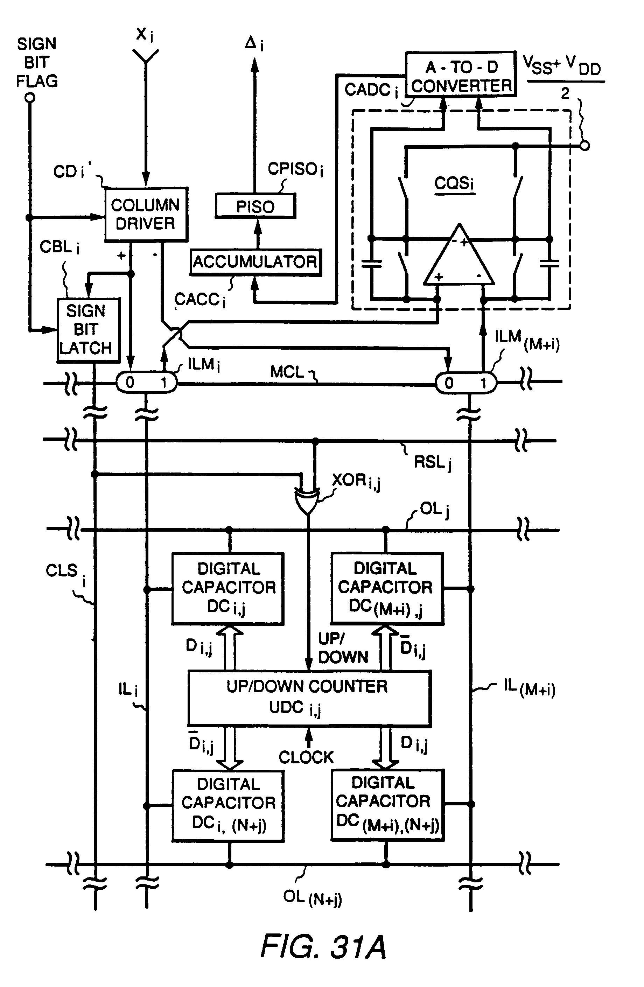

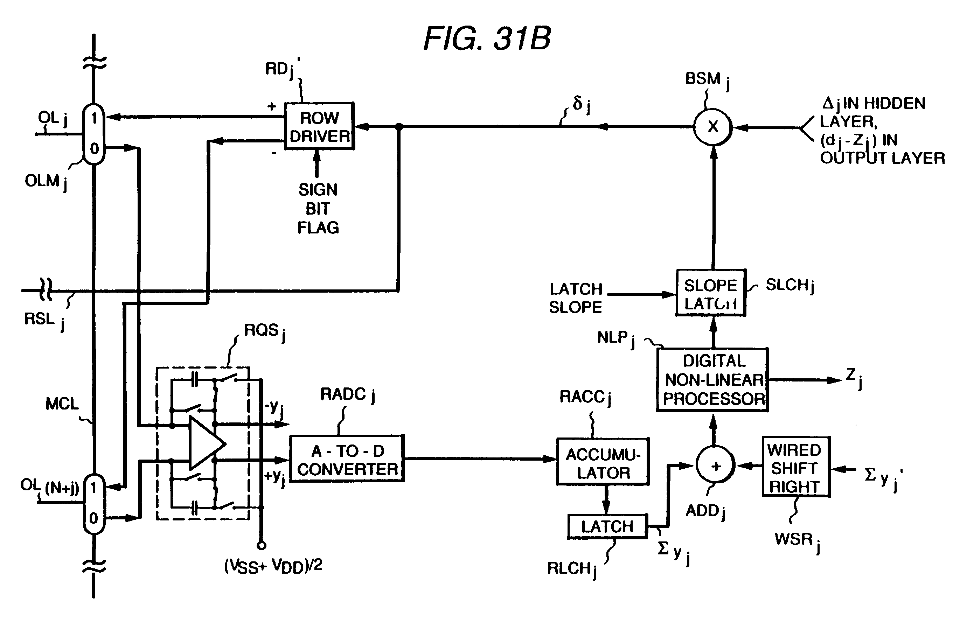

FIGURES 31A and 31B, arranged respectively on the left and on the right of the other, together form a FIGURE 31 that is a schematic diagram of an alternative neural net layer in which both forward propagation and back propagation through a capacitive network are carried out with balanced signals, and in which digital capacitors have their capacitance values programmed from counters. In the FIGURE 31 neural net layer the signs of the digital signals being weighted and summed are taken into account in the partial weighted summation procedure performed on an analog basis.

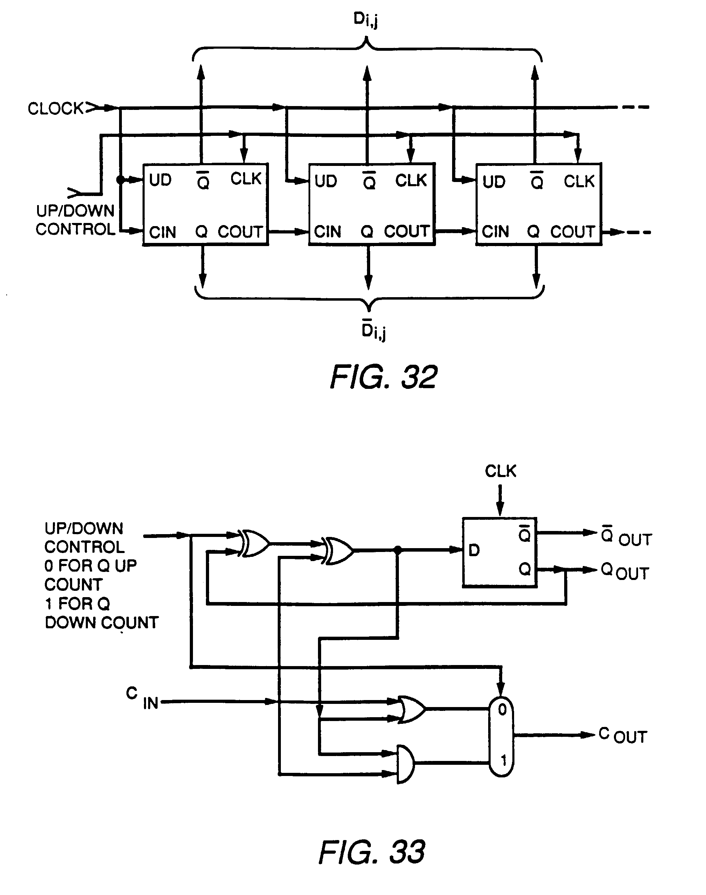

FIGURE 32 is a schematic diagram of the arrangement of stages in the counters shown in FIGURES 27-31.

FIGURE 33 is a schematic diagram of the logic elements included in each counter stage in the counters shown in FIGURES 27-32.

More particularly, FIGURE 1 shows a single-ended charge sensing amplifier $QS_k$ of a preferable type for implementing the single-ended charge sensing amplifiers used in modifications of the FIGURE 2, 3, 12, 14, 20B, 21A, 22B, 27 and 29 B circuitry. The charge sensing amplifier $QS_K$ is essentially a Miller integrator that includes a differential-input operational amplifier OA having a Miller feedback capacitor MC connecting from its output connection OUT back to its inverting (-) input connection during normal operation. The non-inverting (+) input connection of the operational amplifier OA is connected to a fixed potential in the single-ended charge sensing amplifier $QS_k$, which fixed potential is shown as having a value $(V_{SS} + V_{DD})/2$ midway between a relatively high potential $(V_{DD})$ and a relatively low potential $(V_{SS})$. During normal charge-sensing operation a relatively low potential $(V_{SS})$ is applied via RESET terminal to a logic inverter INV that responds to apply a relatively high potential $(V_{DD})$ to a transmission gate TG1. The transmission gate TG1 is rendered conductive to connect the output connection OUT of operational amplifier OA to capacitor MC to complete its connection as Miller feedback capacitor. The relatively low potential applied via RESET terminal conditions a transmission gate TG2 and a transmission gate TG3 both to be non-conductive. $QS_K$ is a preferred charge sensing amplifier because differential input offset error in the operational amplifier OA is compensated against, owing to the way the Miller integrator is reset.

During periodic reset intervals for the integrator a relatively high potential $(V_{DD})$ is applied via RESET terminal to condition transmission gates TG2 and TG3 each to be conductive and to condition the logic inverter INV output potential to go low, which renders transmission gate TG1 non-conductive. The conduction of transmission gate TG2 connects the output connection OUT of operational amplifier OA directly to its inverting (-) input connection, completing a feedback connection that forces the inverting (-) input connection to the differential input offset error voltage, which voltage by reason of transmission gate TG3 being conductive is stored on the Miller capacitor MC. When normal charge-sensing operation is restored by RESET terminal going low, the differential input offset error bias remains stored on the Miller capacitor MC, compensating against its effect upon charge sensing.

Supposing the operational amplifier OA to be a differential output type having balanced output connections OUT and OUTBAR, a balanced version of the charge sensing amplifier $QS_K$ can be formed by disconnecting the non-inverting (+) input connection of the operational amplifier OA from a point of fixed potential having a value $(V_{SS} + V_{DD})$ /2. Instead, the non-inverting (+) input connection of the operational amplifier OA is arranged to have a feedback connection from the OUTBAR output connection of the operational amplifier OA similar to the feedback connection from the OUT output connection of the operational amplifier OA to its inverting (-) input connection. This balanced version of the charge sensing amplifier $QS_K$ is shown throughout the remaining figures of the drawing.

M is a positive plural integer indicating the number of input signals to the FIGURE 2, 3, 4, 12 or 13 weighted summation apparatus, and N is a positive plural integer indicating the number of output signals the FIGURE 2, 3, 4, 12 or 13 apparatus can generate. To reduce the written material required to describe operation of the weighted summation apparatuses in FIGURES 2, 3, 4, 12 or 13 of the drawing, operations using replicated elements will be described in general terms; using a subscript i ranging over all values one through M for describing operations and circuit elements as they relate to the (column) input signals $x_1$, $x_2$,.. $x_M$; and using a subscript j ranging over all values one through N for describing operations and apparatus as they relate to the (row) output signals $y_1$, $y_2$,...$y_N$. That is, i and j are the column and row numbers used to describe particular portions of the FIGURES 2, 3, 4, 12 and 13 weighted summation apparatuses and modifications of those apparatuses.

The FIGURE 2 apparatus performs a plurality of weighted summation procedures in parallel on each successive bit slice of input signals, which input signals comprise a plurality M in number of parallel bit streams $x_1$, $x_2$,... $x_M$. This apparatus is assumed to receive a first operating voltage $V_{DD}$, a second operating voltage $V_{SS}$, and a third operating voltage $(V_{SS} + V_{DD})$/2 midway between $V_{SS}$ and $V_{DD}$. $V_{DD}$ and $V_{SS}$ are presumed to be relatively positive and relatively negative respective to each other.

Each input voltage signal $x_i$ is applied as control signal to a respective multiplexer $MX_i$ and to a respective multiplexer $MX_{(i+M)}$. Multiplexer $MX_i$ responds to $x_i$ being a ONE to apply the $V_{DD}$ first operating voltage to an input line $IL_i$ and responds to $x_i$ being a ZERO to apply the $V_{SS}$ second operating voltage to the input line $IL_i$. Multiplexer $MX_{(i+M)}$ responds to $x_i$ being a ONE to apply the $V_{SS}$ second operating voltage to an input line $IL_{(i+M)}$ and responds to $x_i$ being a ZERO to apply the $V_{DD}$ first operating voltage to the input line $IL_{(i+M)}$.

A capacitor $C_{i,j}$ has a first plate connected to the input line $IL_i$ and has a second plate connected to an output line $OL_j$. A capacitor $C_{(i+M),j}$ has a first plate connected to the input line $IL_{(i+M)}$ and has a second plate connected to the output line $OL_j$. Capacitor $C_{i,j}$ and capacitor $C_{(i+M),j}$ together are considered as a pair, for providing in effect a single weighting capacitor, the capacitance of which is the difference in the capacitances of capacitor $C_{i,j}$ and capacitor $C_{(i+M),j}$ between their respective first and second plates. The charge placed on the output line $OL_j$ by all the weighting capacitors connecting thereto is sensed on a single-ended basis by a respective charge-sensing amplifier $QS_j$. Each of the charge-sensing amplifiers $QS_j$ is shown as a respective Miller integrator comprising an operational amplifier and Miller feedback capacitors.

During reset or zeroing of all the charge-sensing amplifiers $QS_j$, each of the $x_i$ input voltages is a logic ZERO. This applies $V_{SS}$ to the plates of capacitors $C_{i,j}$ connected from the multiplexers $MX_i$ and applies $V_{DD}$ to the plates of capacitors $C_{(i+M),j}$ connected from the multiplexers $MX_{(i+M)}$. The total capacitance on each output line $OL_j$ is caused to be the same as on each of the other output lines by a respective shunt capacitor $C_{0,j}$ to signal ground, which capacitor either has capacitance that is so large as to overwhelm the other capacitances on the output line $OL_j$ or preferably that complements the other capacitances on the output line $OL_j$. Causing the total capacitance on each output line $OL_j$ to be the same as on each of the other output lines makes the sensitivities of the charge-sensing amplifiers $QS_j$ to their respective inputs uniform, presuming them to be Miller integrators of identical design. If the capacitances of capacitor $C_{i,j}$ and capacitor $C_{(i+M),j}$ between their respective first and second plates sum to a prescribed standard value, for the complete selection range of i and j, the sensitivities of the charge-sensing amplifiers $QS_j$ to their respective inputs are uniform withou need for a respective shunt capacitor $C_{0,j}$ to signal ground for each output line $OL_j$, presuming the charge-sensing amplifiers $QS_j$ to be Miller integrators of identical design.

After reset or zeroing, when $x_i$ bits for different i may each be ZERO or ONE, each $x_i$ bit that is a ZERO creates no change in charge condition on any of the output lines $OL_j$. A bit $x_i$ that is a ONE creates an incremental change in charge on an output line $OL_j$ that, in accordance with Coulomb's Law, is equal to $(V_{SS} - V_{DD})$/2 times the difference in the capacitances of capacitors $C_{i,j}$ and $C_{(i+M),j}$ between their respective first and second plates. The sum of these incremental charges accumulates on the output line $OL_j$ and is sensed by the charge-sensing amplifier $QS_j$.

FIGURE 3 shows a modification of the FIGURE 2 apparatus in which the multiplexer $MX_i$ and the multiplexer $MX_{(i+M)}$ respond to $x_i$ being a ZERO to apply the third operating voltage $(V_{SS} + V_{DD})/2$ to the input line $IL_i$ and to the input line $IL_{(i+M)}$, respectively. During reset, the weighting capacitors $C_{i,j}$ and $C_{(i+M)}$ will be charged to relatively small bias voltages between their plates, rather than to bias voltages of amplitudes close to $(V_{SS} + V_{DD})/2$. The FIGURE 2 apparatus is advantageous over the FIGURE 3 apparatus in that, in the FIGURE 2 apparatus, accuracy of the the the third operating voltage $(V_{SS} + V_{DD})/2$ being exactly midway between the first operating voltage $V_{DD}$ and the second operating voltage $V_{SS}$ is not necessary for accuracy of the partial weighted summation results.

The FIGURE 4 apparatus also performs a plurality of weighted summation procedures in parallel on each successive bit slice of input signals, which input signals comprise a plurality M in number of parallel bit streams $x_1$, $x_2$, $x_3$, ... $x_M$. Logic inverters $INV_1$, $INV_2$, $INV_3$, ...$INV_M$ respond to the current bits $x_1$, $x_2$, $x_3$, ... $x_M$ respectively with their respective logic complements. (The current bits $x_1$, $x_2$, $x_3$, ... $x_M$ are assumed to be supplied in accordance with the positive logic convention.) The FIGURE 4 apparatus also is assumed to receive a relatively positive first operating voltage $V_{DD}$, a relatively negative second operating voltage $V_{SS}$, and a third operating voltage $(V_{SS} + V_{DD})/2$ midway between $V_{SS}$ and $V_{DD}$.

The logic inverter $INV_i$ responds to $x_1$ being a ZERO to apply $V_{DD}$ to an input line $IL_i$ and responds to $x_1$ being a ONE to apply $V_{SS}$ to the input line $IL_i$. As in FIGURES 2 and 3, the charge-sensing amplifier $QS_j$ is one of a plurality, N in number, of identical charge-sensing amplifiers for sensing the difference in charges accumulated on a respective pair of output lines. In FIGURE 4 the charge-sensing amplifier $QS_j$ is arranged for differentially sensing charge and is connected to sense the difference in charges accumulated on output lines $OL_j$ and $OL_{(j+N)}$. The output lines $OL_j$ and $OL_{(j+N)}$ are charged from each input line input line $IL_i$ via a capacitor $C_{i,j}$ and via a capacitor $C_{i,(j+N)}$, respectively. Capacitor $C_{i,j}$ and capacitor $C_{i,(j+N)}$ together are considered as a pair, for providing in effect a single weighting capacitor, the capacitance of which is the difference in the capacitances of capacitor $C_{i,j}$ and capacitor $C_{i,(j+N)}$ between their respective first and second plates. The total capacitance on each output line $OL_j$ is maintained the same as on each of the other output lines by a respective shunt capacitor $C_{0,j}$ to signal ground; and the total capacitance on each output line $OL_{(j+N)}$ is maintained the same as on each of the other output lines by a respective shunt capacitor $C_{0,(j+N)}$ to signal ground.

Where the capacitances of capacitor $C_{i,j}$ and capacitor $C_{i,(j+N)}$ between their respective first and second plates are to be alterable responsive to digital programming signals, it is preferred that the capacitances of capacitor $C_{i,j}$ and capacitor $C_{i,(j+N)}$ between their respective first and second plates sum to a prescribed standard value for the complete selection range of i and j. It is further preferred that each pair of capacitors $C_{i,j}$ and $C_{i,(j+N)}$ have a corresponding further pair of capacitors $C_{i,(j+2N)}$ and $C_{i,(j+3N)}$ associated therewith, capacitor $C_{i,(j+2N)}$ having a capacitance equal to that of capacitor $C_{i,(j+N)}$ and connecting output line $OL_j$ to a point of connection $P_{i,j}$, and capacitor $C_{i,(j+3N)}$ having a capacitance equal to that of capacitor $C_{i,j}$ and connecting output line $OL_{(j+N)}$ to the same point of connection $P_{i,j}$. If all the points of connection $P_{i,j}$ connect to signal ground, the capacitors $C_{i,(j+2N)}$ for all values of i together provide for each value of j the respective shunt capacitor $C_{0,j}$ to signal ground, and the capacitors $C_{i,(j+3N)}$ for all values of i together provide for each value of j the respective shunt capacitor $C_{0,(j+N)}$ to signal ground. This is taught in greater detail in U. S. patent application serial No. 526,470.

The FIGURE 4 apparatus may be modified to replace logic inverters $INV_1$, $INV_2$, $INV_3$, ... $INV_M$ with non-inverting driver amplifiers. In such case the other output connections of the differential-output operational amplifiers in the charge sensing amplifiers $QS_1$, $QS_2$, $QS_3$, ... $QS_N$ are used to supply the $y_1$, $y_2$, $y_3$ ... $y_N$ partial weighted summations.

The FIGURE 4 apparatus may alternatively be modified to augment logic inverters $INV_1$, $INV_2$, $INV_3$, ... $INV_M$ with non-inverting driver amplifiers $DA_1$, $DA_2$, $DA_3$, ... $DA_M$ respectively and to use each non-inverting driver amplifier $DA_i$ to drive the points of connection $P_{i,j}$ for all values of j. This provides for full-capacitor bridge drives to each charge-sensing amplifier $QS_j$, rather than half-capacitor bridge drives. The advantage of doing this is that the common-mode voltage on the output lines $OL_j$ and $OL_{(j+N)}$ is zero, so one does not have to rely as much on the common-mode suppression of the charge-sensing amplifier $QS_j$ to keep the integration of charge within the operating supply range of that amplifier.

Where the input signals to the FIGURE 2, FIGURE 3 or FIGURE 4 weighted summation apparatus comprise single-bit words, the N signals $y_1$, $y_2$, $y_3$, ...$y_N$ can, per FIGURE 6, be applied to an array of respective non-linear processors $NLP_1$, $NLP_2$, $NLP_3$,... $NLP_N$ to generate a plurality, N in number, of analog axonal output responses. As shown in FIGURE 6, these analog axonal output responses can be digitized in respective analog-to-digital converters $ADC_1$, $ADC_2$, $ADC_3$,...$ADC_N$, for application to the succeeding circuitry NEXT. For example, this succeeding circuitry may be an output neural net layer where the neural net layer thusfar described is a hidden neural net layer. Oversampling analog-to-digital converters of the sigma-delta type are preferred for analog-to-digital converters $ADC_1$, $ADC_2$, $ADC_3$,... $ADC_N$ when passing digitized axonal output responses to another weighted summation apparatus of one of the types illustrated in FIGURES 2-4, since the sigma-delta type of converter is inherently adapted to supplying its digitized response in bit-serial form.

FIGURE 5 shows further weighted summation apparatus that can be used with the weighted summation apparatus of FIGURE 2 or 3 to provide for the weighted summation of digital signals having plural-bit words. The plurality B in number of bits per digital word is assumed in FIGURE 5 to be four bits per digital word. The digital signals are placed in bit-serial form and in word alignment for application to the weighted summation apparatus of FIGURE 2 or 3, which processes the bit-serial digital signals on a bit-slice basis to generate B partial weighted summation results, one per bit slice, during each successive word interval. A SIGN BIT FLAG signal is provided to signal the parallel occurrence of the sign bits in each successive group of M input signal words. The SIGN BIT FLAG signal is used to synchronize the operation of a sequencer SEQ in the further weighted summation apparatus of FIGURE 5. (Where the synapse input signals $x_1$, $x_2$, ... $x_M$ are unsigned, the SIGN BIT FLAG signal is replaced by a MOST SIGNIFICANT BIT FLAG signal, of course.) The FIGURE 5 weighted summation apparatus can be described as weighted accumulation apparatus since it accumulates the B partial weighted summation results supplied to it from the weighted summation apparatus of FIGURE 2 or 3, the accumulated partial weighted summation result term being weighted in accordance with the significance of the bit slice involved in its generation.

The FIGURE 5 apparatus includes a plurality, N in number, of weighted summers generating respective ones of N final weighted summation results $z_1$, $z_2$, ... $z_N$. Each of these weighted summers weights the four partial weighted summation results $y_j$ sequentially supplied during a word interval as part of one of the output signals of the weighted summation apparatus of FIGURE 2 or 3, the weighting being done in accordance with the significance of the bits used to generate each respective partial weighted summation result, and sums the weighted partial weighted summation results to generate a final weighted summation result $z_j$.

More particularly, when the sequencer SEQ determines that the least significant of the four partial weighted summation results $y_j$ associated with a digital word interval is being generated by the weighted summation apparatus of FIGURE 2 or 3, the sequencer SEQ directs sample-and-hold circuits $SH1_j$ and $SH5_j$ to sample and hold that $y_j$ value. When the sequencer SEQ determines that the next to least significant of the four partial weighted summation results $y_j$ associated with a digital word interval is being generated by the weighted summation apparatus of FIGURE 2 or 3, the sequencer SEQ directs sample-and-hold circuits $SH2_j$ and $SH6_j$ to sample and hold that $y_j$ value. When the sequencer SEQ determines that the next to most significant of the four partial weighted summation results $y_j$ associated with a digital word interval is being generated by the weighted summation apparatus of FIGURE 2 or 3, the sequencer SEQ directs sample-and-hold circuits $SH3_j$ and $SH7_j$ to sample and hold that $y_j$ value. When the sequencer SEQ determines that the most significant of the four partial weighted summation results $y_j$ associated with a digital word interval is being generated by the weighted summation apparatus of FIGURE 2 or 3, the sequencer SEQ directs a sample-and-hold circuit $SH4_j$ and $SH8_j$ to sample and hold that $y_j$ value. The sequencer SEQ may be designed to accommodate the particular bit-serial format being used. The common bit-serial formats arrange the bits in order of their significance, one such format beginning each digital word with its least significant bit and ending each digital word with its most significant (sign) bit, and another such format beginning each digital word with its most significant (sign) bit and ending each digital word with its least significant bit.

At the end of the word interval, the four partial weighted summation results $y_j$ are held in parallel at the output ports of the sample-and-hold circuits $SH1_j$, $SH2_j$, $SH3_j$ and $SH4_j$ and the four complementary partial weighted summation results $-y_j$ are held in parallel at the output ports of the sample-and-hold circuits $SH5_j$, $SH6_j$, $SH7_j$ and $SH8_j$. Weighting capacitors $C1_j$, $C2_j$, $C3_j$ and $C4_j$ are used to weight the four partial weighted summation results held by the sample-and-hold circuits $SH1_j$, $SH2_j$, $SH3_j$ and $SH4_j$, respectively. The four partial weighted summation results held by the the sample-and-hold circuits $SH1_j$, $SH2_j$, $SH3_j$ and $SH4_j$ are weighted in 1:2:4:8 ratio by weighting capacitors $C1_j$, $C2_j$, $C3_j$ and $C4_j$, in accordance with the amplitudes of the weights +1, +2, +4 and -8 of the respective groups of bits generating them. (The most significant group of bits are assumed to be sign bits of two's complement numbers, which is the reason for the negative sign of the weighting by eight.) Similarly, the four partial weighted summation results held by the the sample-and-hold circuits $SH5_j$, $SH6_j$, $SH7_j$ and $SH8_j$ are weighted in 1:2:4:8 ratio by weighting capacitors $C5_j$, $C6_j$, $C7_j$ and $C8_j$, in accordance with the amplitudes of the weights +1, +2, +4 and -8 of the respective groups of bits generating them. Accordingly, weighting capacitors $C1_j$, $C2_j$, $C3_j$, $C4_j$, $C5_j$, $C6_j$, $C7_j$, and $C8_j$ have respective capacitances in 1:2:4:8:1:2:4:8 ratio. The four partial weighted summation results held by the the sample-and-hold circuits $SH1_j$, $SH2_j$, $SH3_j$ and $SH4_j$ charge the weighting capacitors $C1_j$, $C2_j$, $C3_j$ and $C4_j$ in respective amounts depending on their voltages and the capacitances of the capacitors to which they are applied, in accordance with Coulomb's Law. The four partial weighted summation results held by the the sample-and-hold circuits $SH5_j$, $SH6_j$, $SH7_j$ and $SH8_j$ charge the weighting capacitors $C5_j$, $C6_j$, $C7_j$ and $C8_j$ in respective amounts depending on their voltages and the capacitances of the capacitors to which they are applied, in accordance with Coulomb's Law.

A charge sensing amplifier $QS_{(N+j)}$ then differentially senses the charge on the plates of the weighting capacitors $C5_j$, $C6_j$, $C7_j$ and $C4_j$ connecting to its inverting (-) input connection and the combined charge on the plates of the weighting capacitors $C1_j$, $C2_j$, $C3_j$ and $C8_j$ connecting to its non-inverting (+) input connection, to generate a final weighted summation result as a sample of its output signal $z_j$. Connecting plates of the weighting capacitors $C4_j$ and $C8_j$ to the inverting (-) input connection of the charge sensing amplifier $QS_{(N+j)}$ and to its non-inverting (+) input connection, respectively, provides for the negativeness associated with the minus eight weight of the sign bit in the two's complement numbering system.

Reset or zeroing of the charge sensing amplifiers $QS_{(N+j)}$ in FIGURE 5 takes place at the same time as the reset or zeroing of the charge sensing amplifiers $QS_j$ in the preceding FIGURE 2, 3 or 4 weighted summation circuitry. During reset the $(V_{SS} + V_{DD})/2$ third operating voltage at the $y_j$ and $-y_j$ output connections of the charge sensing amplifiers $QS_j$ are applied to the plates of the weighting capacitors $C1_j$, $C2_j$, $C3_j$, $C4_j$, $C5_j$, $C6_j$, $C7_j$, and $C8_j$ by the sample-and-hold circuits $SH1_j$, $SH2_j$, $SH3_j$, $SH4_j$, $SH5_j$, $SH6_j$, $SH7_j$ and $SH8_j$.

Where the input signals to the FIGURE 2, FIGURE 3 or FIGURE 4 weighted summation apparatus comprise plural-bit words, the N signals $z_1$, $z_2$,...$z_N$ from a succeeding FIGURE 5 weighted summation apparatus can then, per FIGURE 6, be applied to an array of respective non-linear processors $NLP_1$, $NLP_2$,... $NLP_N$ to generate a plurality, N in number, of analog axonal output responses. As shown in FIGURE 6, these analog axonal output responses can be digitized in respective analog-to-digital converters $ADC_1$, $ADC_2$, $ADC_3$,...$ADC_N$, for application to the succeeding circuitry NEXT. For example, this succeeding circuitry may be an output neural net layer where the neural net layer thusfar described is a hidden neural net layer.

FIGURE 7 shows non-linear voltage amplifier circuitry that can be used to implement each non-linear processor $NLP_j$ in FIGURE 6. The FIGURE 7 non-linear voltage amplifier is a cascade connection of two source-follower transistors, one ($Q_{20A}$) being an n-channel MOSFET and the other ($Q_{20B}$) being a p-channel MOSFET. $Q_{20A}$ is provided a constant-current generator source load by an n-channel MOSFET $Q_{21}$, which is the slave or output transistor of a current mirror amplifier including as its master or input transistor an n-channel MOSFET $Q_{22}$ self-biased by drain-to-gate feedback. $Q_{20B}$ is provided a constant-current generator source load by a p-channel MOSFET $Q_{23}$, which is the slave or output transistor of a current mirror amplifier including as its master or input transistor a p-channel MOSFET $Q_{24}$ self-biased by drain-to-gate feedback. $Q_{22}$ and $Q_{24}$ are connected as diodes by their respective drain-to-gate feedback connections, and these diodes are connected in series with another diode-connected n-channel MOSFET $Q_{25}$ and with another diode-connected p-channel MOSFET $Q_{26}$ between $V_{SS}$ and $V_{DD}$ potentials to implement a bias network. In this bias network a quiescent input current flows from the input port of the current mirror amplifier comprising $Q_{23}$, $Q_{24}$ into the input port of the current mirror amplifier comprising $Q_{21}$, $Q_{22}$. $Q_{21}$ and $Q_{23}$ drain current flows are similar-valued by current mirror amplifier action.

All the n-channel MOSFETs $Q_{20A}$, $Q_{21}$, $Q_{22}$ and $Q_{25}$ have similar channel widths and lengths and exhibit similar operating characteristics. All the p-channel MOSFETs $Q_{20B}$, $Q_{23}$, $Q_{24}$ and $Q_{26}$ have similar channel widths and lengths and exhibit similar operating characteristics, which are complementary to those of the n-channel MOSFETs. The bias network MOSFETs $Q_{22}$, $Q_{24}$, $Q_{25}$ and $Q_{26}$ may be shared by a plurality of the FIGURE 7 non-linear voltage amplifier circuits to conserve hardware and operating power.

Non-linearity of response in the FIGURE 7 voltage amplifier comes about because (1) source-follower action of $Q_{20A}$ for positive-going excursions of its gate electrode potential becomes limited as its source potential approaches its drain potential $V_{HI}$ and (2) source-follower action of $Q_{20B}$ for negative-going excursions of its gate electrode potential becomes limited as its source potential approaches its drain potential $V_{LO}$. At the source electrode of source-follower $Q_{20B}$ there is a sigmoidal response to a linear ramp potential applied to the gate electrode of source-follower $Q_{20A}$. The voltages $V_{LO}$ and $V_{HI}$ can be programmed to control the limiting properties of the FIGURE 7 non-linear amplifier, and the voltages $V_{LO}$ and $V_{HI}$ may be selected to provide for symmetry of response or for asymmetry of response. FIGURE 7 shows representative values for $V_{HI}$ and $V_{LO}$ that provide a substantially symmetrical response about +2.5 volts.

Performing the final weighted summation processes in the analog regime, as thusfar described, facilitates also performing in the analog regime the sigmoidal non-linear processing subsequently required in a neural network. Usually, a further array of capacitive structures is required for storing the partial weighted summation results, then performing the final weighted summation in the analog regime. Performing the final weighted summation processes in the digital regime avoids the need for such a further array of capacitive structures. A digital accumulator circuit is used instead, which tends to be more economical of area on a monolithic integrated-circuit die. In a neural network, performing the sigmoidal non-linear processing in the digital regime tends to be less straightforward. However, the determination of the slope of the non-linear transfer function, which determination is necessary when training a neural net layer using a back-propagation training algorithm, is simply accomplished in certain digital non-linear circuitry as will be described further on in this specification. This contrasts with the greater difficulty of determining the slope of the non-linear transfer function in analog non-linear circuitry.

FIGURES 9A and 9B when arranged as shown in FIGURE 9 provide a schematic diagram of a neural net layer wherein the the final weighted summation processes are performed in the digital regime. The weighting capacitors of the FIGURE 9 neural net layer are preferably constructed on a binary-digit-sliced basis as described in allowed U. S. patent application serial No. 525,931, filed 21 May 1990 by W. E. Engeler, entitled "WEIGHTED SUMMATION CIRCUITS HAVING DIFFERENT-WEIGHT RANKS OF CAPACITIVE STRUCTURES" and assigned to General Electric Company. In FIGURE 9A the bit-sliced (column) input signals $x_1$, $x_2$,... $x_M$ are applied to a weighted summation network $WSN_1$ that comprises a rank of capacitive weighting structures of relatively high significance; and in FIGURE 9B the bit-sliced (column) input signals $x_1$, $x_2$,... $x_M$ are applied to a weighted summation network $WSN_3$ that comprises a rank of capacitive weighting structures of relatively low significance. In FIGURE 9A the analog weighted sums of the bit-sliced input signals $x_1$, $x_2$,... $x_M$ supplied from the weighted summation network $WSN_1$, which are of relatively higher significances, are digitized in respective analog-to-digital (or A-to-D) converters $RADC_1$, $RADC_2$, $RADC_3$, ... $RADC_N$ to generate bit-sliced digital signals $y_1$, $y_2$, $y_3$, ... $y_N$, respectively. Analogously, in FIGURE 9B the analog weighted sums of the bit-sliced input signals $x_1$, $x_2$,... $x_M$ supplied from the weighted summation network $WSN_3$, which are of relatively lower significances, are digitized in respective analog-to-digital (or A-to-D) converters $RADC_{(N+1)}$, $RADC_{(N+2)}$, $RADC_{(N+3)}$,... $RADC_{2N}$ to generate bit-sliced digital signals $y_{(N+1)}$, $y_{(N+2)}$, $y_{(N+3)}$, ... $y_{2N}$, respectively.

In FIGURE 9A the bit-sliced digital signals $y_1$, $y_2$, $y_3$, ... $y_N$, which are partial weighted summations, are applied to a weighted summation network $WSN_2$ (as will be described in greater detail further on with reference to FIGURE 8). The weighted summation network $WSN_2$ combines each set of partial weighted summations $y_j$ to generate a respective relatively more significant component $Sy_j$ of the final weighted summation supplied as the sum signal output of a digital adder $ADD_j$, which respective relatively more significant component $Sy_j$ is applied as augend input signal to the adder $ADD_j$. Analogously, in FIGURE 9B the bit-sliced digital signals $y_{(N+1)}$, $y_{(N+2)}$, $y_{(N+3)}$, ... $y_{2N}$, which are partial weighted summations, are applied to a weighted summation network $WSN_4$ (as will be described in greater detail further on with reference to FIGURE 8). The weighted summation network $WSN_4$ combines each set of partial weighted summations $y_{(N+j)}$ to generate a respective relatively less significant component $\Sigma y_{(N+j)}$ of the final weighted summation supplied as the sum signal output of a digital adder $ADD_j$, which respective relatively less significant component $\Sigma y_{(N+j)}$ is applied after appropriate wired shift right $WSR_j$ as addend input signal to the adder $ADD_j$. (Right shift of a digital signal by P binary places is reckoned as being a division of the digital signal by $2^P$.)

The sum signals from the adders $ADD_1$, $ADD_2$, $ADD_3$, ... $ADD_N$ are supplied as input signals to respective digital non-linear processors $NLP_1$, $NLP_2$, $NLP_3$,... $NLP_N$ which respond to their respective input signals to generate a plurality, N in number, of digital axonal output responses. As shown in FIGURE 9A, these digital axonal output responses can be applied to succeeding circuitry NEXT. For example, this succeeding circuitry NEXT may be an output neural net layer where the neural net layer thusfar described is a hidden neural net layer.

Where the input signals to the FIGURE 2, FIGURE 3 or FIGURE 4 weighted summation apparatus comprise single-bit words, the N signals $y_1$, $y_2$, $y_3$, ... $y_N$ can, per FIGURE 9A, be digitized in respective analog-to-digital (or A-to-D) converters $RADC_1$, $RADC_2$, $RADC_3$, ... $RADC_N$, for application to adders $ADD_1$, $ADD_2$, $ADD_3$ ... $ADD_N$, which supply their sum signals to respective digital non-linear processors $NLP_1$, $NLP_2$, $NLP_3$,... $NLP_N$ to generate a plurality, N in number, of digital axonal output responses. There is no need for the further, digital weighted summation apparatus $WSN_2$. Analogously, the N signals $y_{(N+1)}$, $y_{(N+2)}$, $y_{(N+3)}$, ... $y_{2N}$ can per FIGURE 9B, be digitized in respective analog-to-digital (or A-to-D) converters $RADC_{(N+1)}$, $RADC_{(N+2)}$, $RADC_{(N+3)}$, ... $RADC_{2N}$, for application with appropriate wired shifts right $WSR_1$, $WSR_2$, $WSR_3$, ... $WSR_N$ to adders $ADD_1$, $ADD_2$, $ADD_3$ ... $ADD_N$. There is no need for the further, digital weighted summation apparatus $WSN_4$.

Where only a single rank of capacitive weighting structures -- that rank in the weighted summation network $WSN_1$ -- is used, all the elements shown in FIGURE 9B are dispensed with. The adders $ADD_1$, $ADD_2$, $ADD_3$ ... $ADD_N$ are supplied zero-valued addend signals rather than being supplied $\Sigma y_{(N+1)}$, $\Sigma y_{(N+2)}$, $\Sigma y_{(N+3)}$, ... $\Sigma y_{2N}$ as respective addend signals. Alternatively, the adders $ADD_1$, $ADD_2$, $ADD_3$, ... $ADD_N$ may be omitted, with the digital non-linear processors $NLP_1$, $NLP_2$, $NLP_3$,... $NLP_N$ receiving their respective input signals directly from the weighted summation network $WSN_2$. Or directly from the A-to-D converters $RADC_{(N+1)}$, $RADC_{(N+2)}$, $RADC_{(N+3)}$,... $RADC_{2N}$ where the input signals $x_1$, $x_2$,... $x_M$ to the weighted summation network $WSN_1$ comprise single-bit words so the weighted summation network $WSN_1$ is not used.

FIGURE 8 shows further, digital weighted summation apparatus that can be used with the analog weighted summation apparatus of FIGURE 2, 3 or 4 to provide for the weighted summation of digital input signals $x_1$, $x_2$,... $x_M$ having plural-bit words. The digital signals are placed in bit-serial form and in word alignment for application to the weighted summation apparatus of FIGURE 2, 3 or 4, which processes the bit-serial digital signals on a bit-slice basis to generate B partial weighted summation results, B being the number of bits per bit-serial arithmetic word. The successive bit slices of the plural-bit words of the digital input signals $x_1$, $x_2$,... $x_M$ are processed in order of increasing significance, with the sign bit slice being processed last in each word. A SIGN BIT FLAG that is normally ZERO is provided, which SIGN BIT FLAG goes to ONE to signal the parallel occurrence of the sign bits in each successive group of M input signal words at the time the partial weighted summation of greatest significance is being generated, supposing the digital signals to be flows of two's complement arithmetic words.

FIGURE 8 shows the plurality N in number of A-to-D converters $RADC_1$, $RADC_2$ ... $RADC_N$ used to convert the analog $y_1$, $y_2$, ... $y_N$ partial weighted summations from the charge sensing amplifiers $RQS_1$, $RQS_2$, $RQS_3$, ... $RQS_N$ to digital format and a weighted summation network for combining the sequences of digitized $y_1$, $y_2$, ... $y_N$ partial weighted summations to generate final weighted summations $\Sigma y_1$, $\Sigma y_2$ ... $\Sigma y_N$. More particularly, the digitized $y_1$, $y_2$, ... $y_N$ partial weighted summations from the FIGURE 8 A-to-D converters $RADC_1$, $RADC_2$ ... $RADC_N$ are assumed to be respective two's complement numbers. The bit resolution afforded by the A-to-D converters $RADC_1$, $RADC_2$ ... $RADC_N$ preferably

increases by one bit place each successive bit slice of the digital word; in any case, each successive partial weighted summation within the same digital word is weighted by an additional factor of two respective to the previous partial weighted summation. A plurality, N in number, of accumulators $RACC_1$, $RACC_2$, ... $RACC_N$ are used for generating respective ones of N respective final weighted summation results $\Sigma y_j$. Each of the successive partial weighted summation results $y_j$ sequentially supplied by the A-to-D converter $RADC_i$ is routed through a respective selective complementor $RCMP_i$. The selective complementor $RCMP_i$ complements each bit of the partial weighted summation result the A-to-D converter $RADC_i$ generates when the SIGN BIT FLAG is ONE, then augments the result of this one's complementing procedure by adding to it a number that has a ONE as its least significant bit and has more significant bits all of which are ZEROs. This augmentation is simply carried out by applying the SIGN BIT FLAG as a carry to the adder in the accumulator $RACC_i$. When the SIGN BIT FLAG is ZERO, the selective complementor $RCMP_i$ transmits to the accumulator $RACC_i$, without complementation, each bit of the partial weighted summation result the A-to-D converter $RADC_i$ generates. Each of these accumulators $RACC_1$, $RACC_2$, ... $RACC_N$ accumulates for each word the successive partial weighted summation results $y_j$ sequentially supplied as one of the output signals of the weighted summation apparatus of FIGURE 2, 3 or 4, to generate a final weighted summation result $\Sigma y_j$. (In alternative embodiments of the invention where the bit-serial digital input signals supplying the parallel bit streams $x_1$, $x_2$, $x_3$, ... $x_M$ are invariably of one polarity and are processed as unsigned numbers, of course, the selective complementors $RCMP_1$, $RCMP_2$, ... $RCMP_N$ need not be included in the respective connections of the A-to-D converters $RADC_1$, $RADC_2$ ... $RADC_N$ to the accumulators $RACC_1$, $RACC_2$, ... $RACC_N$.)

The respective $\Sigma y_j$ final weighted summation result generated by each accumulator $RACC_i$ is latched by a respective clocked latch $RLCH_i$ to be temporarily stored until such time as the next final weighted summation result $\Sigma y_j$ is generated by the accumulator $RACC_i$. The respective $\Sigma y_j$ final weighted summation result from latch $RLCH_i$ is supplied as augend input signal to a respective digital adder $ADD_j$, which may receive as an addend a final weighted summation result $\Sigma y_j'$ of lesser significance from a further, less significant rank of capacitors for weighting the plurality M in number of parallel bit streams $x_1$, $x_2$,... $x_M$, which final weighted summation result $\Sigma y_j'$ of lesser significance is appropriately attenuated respective to $\Sigma y_j$ by a wired shift right $WSR_i$. The sum output signal $z_i$ from the adder $ADD_i$ is supplied to the ensuing digital non-linear processor $NLP_i$; and , as shown in FIGURE 6A, the non-linear response from the digital non-linear processor $NLP_i$ is applied to the succeeding circuitry NEXT.

Where the input signals to the FIGURE 2, FIGURE 3 or FIGURE 4 weighted summation apparatus comprise plural-bit words, the N signals $z_1$, $z_2$,...$z_N$ from a succeeding FIGURE 8 weighted summation apparatus can then, per FIGURE 9, be applied to an array of respective digital non-linear processors $NLP_1$, $NLP_2$,... $NLP_N$ to generate a plurality, N in number, of digital axonal output responses for application to the succeeding circuitry NEXT. For example, this succeeding circuitry may be an output neural net layer where the neural net layer thusfar described is a hidden neural net layer.

FIGURE 10 shows circuitry that can be used to implement a digital non-linear processor $NLP_j$ as may be used for each of the digital non-linear processors $NLP_1$, $NLP_2$ , $NLP_3$, ... $NLP_N$ of FIGURE 9. The FIGURE 10 digital non-linear processor is used to obtain a transfer function as diagrammed in FIGURE 11. The FIGURE 11 transfer function approximates a sigmoidal symmetrically non-linear response by five straight line segments 11, 13, 15, 17 and 19. One skilled in the art of digital circuit design will after being acquainted with the following description of the FIGURE 10 digital non-linear processor be able to design more complex digital non-linear processors approximating a sigmoidal transfer characteristic using an odd number greater than five of straight line segments.

In the FIGURE 11 graph of the transfer function of the FIGURE 10 digital non-linear processor, the straight line segment 15 passes through zero input signal, extending between inflection points 14 and 16 which occur at input signals of values $-k_1$ and $k_1$, respectively. The input signal has relatively small absolute magnitudes in the range defined by the straight line segment 15, which segment of the transfer characteristic has the steepest slope and passes through the origin of the transfer characteristic graph.

The straight line segment 11 extending left and down from inflection point 12 and the straight line segment 19 extending right and up from inflection point 18 have the shallowest slope. The input signal has relatively large absolute magnitudes in the ranges defined by the straight line segments 11 and 19. If the straight line segment 11 were extended without change in its direction right and up from inflection point 12 it would cross the input axis at an intercept value of $-k_3$; and if the straight line segment 19 were extended without change in its direction left and down from inflection point 18 it would cross the input axis at an intercept value of $+k_3$.

The input signal has intermediate absolute magnitudes in the ranges defined by the straight line segments 13 and 17. The straight line segment 13 extends between the inflection points 12 and 14 and, if it were extended without change in its direction beyond inflection point 14, would cross the output signal axis at an intercept value of $-k_4$. The straight line segment 17 extends between the inflection points 16 and 18 and, if it were extended without change in its direction beyond inflection point 16, would cross the output signal axis at an intercept value of $+k_4$.

In the FIGURE 7 digital non-linear processor the digital final weighted summation result $\Sigma y_j$ is supplied to a respective absolute value circuit $AVC_j$ where the most significant, sign bit conditions a selective complementor $RCMP_{(N+j)}$

to complement the less significant bits of $\Sigma y_j$ when $z_j$ is negative. The output signal from the selective complementor $RCMP_{(N+j)}$ is supplied as augend signal to a digital adder $ADD_{(N+j)}$, which is supplied the most significant bit of $\Sigma y_j$ as an addend signal. The sum output of the adder $ADD_{(N+j)}$ is the $|\Sigma y_j|$ output signal of the absolute value $AVC_j$.

A digital subtractor $SUB_j$ is used for subtracting a positive constant value $k_1$ from $|\Sigma y_j|$ to determine whether $|\Sigma y_j|$ being $< k_1$ should be on a portion of the non-linear transfer characteristic having steepest slope or whether $|\Sigma y_j|$ being $\geq k_1$ should be on a portion of the non-linear transfer characteristic having a shallower slope. If the most significant, sign bit of the difference output signal of the subtractor $SUB_j$ is a ONE, indicating $|\Sigma y_j| < k_1$, a slope multiplexer $SMX_j$ selects the steepest transfer characteristic slope as the multiplier signal for a digital multiplier $MULT_j$ that is supplied $|\Sigma y_j|$ as multiplicand signal. The digital product is then added in a digital adder $ADD_{(2N+j)}$ to a zero-value intercept, as selected by an intercept multiplexer $IMX_j$ responsive to the sign bit of the difference output signal of subtractor $SUB_j$ being a ONE, to generate the non-linear response $|z_j|$ to $|\Sigma y_j|$.

A digital subtractor $SUB_{(N+j)}$ is used for subtracting a positive constant value $k_2$ from $|\Sigma y_j|$ to determine whether $|\Sigma y_j|$ being $\geq k_2$ should be on a portion of the non-linear transfer characteristic having shallowest slope or whether $|\Sigma y_j|$ being $< k_2$ should be on a portion of the non-linear characteristic having a steeper slope. It is most significant, sign bit of the difference output signal of the subtractor $SUB_{(N+j)}$ is a ZERO, indicating $|\Sigma y_j| \geq k_2$, the slope multiplexer $SMX_j$ selects the shallowest transfer characteristic slope as the multiplier signal for the digital multiplier $MULT_j$; and the intercept multiplexer $IMX_j$ selects an intercept of value $k_3$ somewhat smaller than $k_2$ to be added to the product from multiplier $MULT_j$ in adder $ADD_{(N+j)}$ to generate $|z_j|$.

Responsive to the most significant bits of the difference signals from the subtractors $SUB_j$ and $SUB_{(N+j)}$ being ZERO and ONE respectively, indicative that $|\Sigma y_j|$ should be on a portion of the non-linear transfer characteristic have a slope intermediate between the steepest and shallowest slopes, the slope multiplexer $SMX_j$ selects that intermediate slope as multiplier signal to the multiplier $MULT_j$, and the intercept multiplexer $IMX_j$ selects an intercept of value $k_4$ somewhat smaller than $k_1$ as the addend signal supplied to the adder $ADD_{(2N+j)}$.

The non-linear response $|z_j|$ to $|\Sigma y_j|$ is converted to $z_j$ response to $\Sigma y_j$ by processing $|z_j|$ through a selective complementor $CMP_{(2N+j)}$ that complements each bit of $|z_j|$ when the most significant, sign bit of $\Sigma y_j$ is a ONE indicating its negativity; inserting the most significant bit of $\Sigma y_j$ as sign bit before the selective complementor $CMP_{(2N+j)}$ output signal; and adding the resultant in a digital adder $ADD_{(3N+j)}$ to the most significant bit of $\Sigma y_j$. The sum signal from the digital $ADD_{(3N+j)}$ is then used to load a parallel-in/serial-out register $RPISO_j$ for the $j^{th}$ row, which supplies $z_j$ in bit-serial format to the succeeding circuitry NEXT (per FIGURE 6).

During back-propagation training, the value of the slope selected by the slope multiplexer $SMX_j$ responsive to the $|\Sigma y_j|$ generated by a set of prescribed synapse input signals can be temporally stored in a latch $SLCH_j$ responsive to a LATCH SLOPE command. This operation will be considered as part of an overall description of back-propagation training further on in this specification. In FIGURES 20-23 and 27-31, the slope latch $SLCH_j$ is shown external to the digital non-linear processor $NLP_j$ with which it is associated.

Thusfar, the reversal of sign in the weighting of the parallel sign bits of the bit-serial synapse input signals has been described as being done in the final weighted summation of the partial weighted summation results. Alternatively, in other embodiments of the invention, such as those now to be described, the reversal of sign in the weighting of the parallel sign bits of the bit-serial synapse input signals is done while performing the partial weighted summations.

FIGURE 12 shows a modification of the FIGURE 2 or FIGURE 3 apparatus in which the multiplexers $MX_1$ ... $MX_M$, $MX_{(M+1)}$ ... $MX_{2M}$ that each select from between two operating voltages the voltage applied to a corresponding one of the input lines $IL_1$ ... $IL_M$, $IL_{(M+1)}$ ... $IL_{2M}$ are replaced by multiplexers $MX_1'$ ... $MX_M'$, $MX_{(M+1)}'$ ... $MX_{2M}'$ that each select from among the $V_{DD}$, $V_{SS}$ and $(V_{SS} + V_{DD})/2$ operating voltages the voltage applied to a corresponding one of the input lines $IL_1$ ... $IL_M$, $IL_{(M+1)}$ ... $IL_{2M}$. The current condition of the SIGN BIT FLAG is applied to each of the multiplexers $MX_i'$ and $MX_{(i+M)}'$ as its first control bit, and the current bit of a respective input voltage signal $x_i$ is applied to each of the multiplexers $MX_i'$ and $MX_{(i+M)}'$ as its second control signal.

For all bits of $x_i$ except its sign bits, the SIGN BIT FLAG is a ZERO. The SIGN BIT FLAG being a ZERO conditions multiplexer $MX_i'$ to respond to $x_i$ being a ONE to apply the $V_{DD}$ first operating voltage to an input line $IL_i$ and to respond to $x_i$ being a ZERO to apply the third operating voltage $(V_{SS} + V_{DD})/2$ to the input line $IL_i$. The SIGN BIT FLAG being a ZERO conditions multiplexer $MX_{(i+M)}'$ to respond to $x_i$ being a ONE to apply the $V_{SS}$ second operating voltage to an input line $IL_{(i+M)}$ and to respond to $x_i$ being a ZERO to apply the third operating voltage $(V_{SS} + V_{DD})/2$ to the input line $IL_{(i+M)}$.

When the sign bits of $x_i$ occur, the SIGN BIT FLAG is a ONE. The SIGN BIT FLAG being a ONE conditions multiplexer $MX_i'$ to respond to $x_i$ being a ONE to apply the $V_{SS}$ second operating voltage to an input line $IL_i$ and to respond to $x_i$ being a ZERO to apply the third operating voltage $(V_{SS} + V_{DD})/2$ to the input line $IL_i$. The SIGN BIT FLAG being a ONE conditions multiplexer $MX_{(i+M)}'$ to respond to $x_i$ being a ONE to apply the $V_{DD}$ first operating voltage to an input line $IL_{(i+M)}$ and to respond to $x_i$ being a ZERO to apply the third operating voltage $(V_{SS} + V_{DD})/2$ to the input line $IL_{(i+M)}$. Accordingly, the reversal of sign in the weighting of the parallel sign bits of the bit-serial synapse input signals is done while performing the partial weighted summations.

FIGURE 13 shows a modification of the FIGURE 4 apparatus in which the multiplexers $MX_1$, $MX_2$, $MX_3$, ... $MX_M$, that each select from between two operating voltages the voltage applied to a corresponding one of the input lines $IL_1$, $IL_2$, $IL_3$, ... $IL_M$ are replaced by multiplexers $MX_1'$, $MX_2'$, ... $MX_M'$ that each select from among the $V_{DD}$, $V_{SS}$ and ($V_{SS}$ + $V_{DD}$)/2 operating voltages the voltage applied to a corresponding one of the input lines $IL_1$, $IL_2$, $IL_3$, ... $IL_M$. The multiplexers $MX_1'$, $MX_2$ ... $MX_M'$ are controlled in the FIGURE 13 apparatus similarly to the way they are in FIGURE 12 apparatus, again to provide the reversal of sign in the weighting of the parallel sign bits of the bit-serial synapse input signals while performing the partial weighted summations.

FIGURE 14 shows analog apparatus for performing the final weighted summation of partial weighted summation results from the FIGURE 12 or 13 apparatus. The FIGURE 14 weighted summation apparatus can be described as weighted accumulation apparatus since it accumulates the B partial weighted summation results supplied to it from the weighted summation apparatus of FIGURE 12 or 13, the accumulated partial weighted summation result term being weighted in accordance with the significance of the bit slice involved in its generation. The FIGURE 14 apparatus differs from the FIGURE 5 apparatus in that, for each value of j, one through N, the weighting capacitors $C1_j$, $C2_j$, $C3_j$ and $C4_j$ all connect to a single respective output line $OL_j$, so the sum of their respective charge conditions can be sensed on a single-ended basis. Single-ended charge sensing allows dispensing with the weighting capacitors $C5_j$, $C6_j$, $C7_j$ and $C8_j$. Single-ended charge sensing will also allow each of the charge sensing amplifiers $QS_{(N+j)}$ to be replaced by a simpler single-ended charge sensing amplifier such as that shown in FIGURE 1. Where the FIGURE 14 apparatus performs the final weighted summation of partial weighted summation results from the FIGURE 12 apparatus, each of the charge sensing amplifiers $QS_j$ can also be replaced by a simpler single-ended charge sensing amplifier such as that shown in FIGURE 1.

FIGURE 15 is a schematic diagram of a neural net layer similar to the neural net layer of FIGURE 6, but includes either of the FIGURE 12 and FIGURE 13 apparatuses as a weighted summation network $WSN_1'$ for performing a plurality of weighted summation procedures, so the reversal of sign in the weighting of the parallel sign bits of the bit-serial synapse input signals takes place in the weighted summation network $WSN_1'$. Where the weighted summation procedures performed in the weighted summation network $WSN_1'$ generate partial weighted summation results, a weighted summation network $WSN_2'$ comprising the FIGURE 14 apparatus is used to generate final weighted summation results for application to an array of non-linear processors $NLP_1$, $NLP_2$, ... $NLP_N$. The non-linear processors $NLP_1$, $NLP_2$, ... $NLP_N$ have their analog axonal output signals digitized in respective analog-to-digital converters $ADC_1$, $ADC_2$,...$ADC_N$, for application to the succeeding circuitry NEXT.

FIGURE 16 shows a modification made to the FIGURE 12 apparatus in the FIGURE 15 neural net layer in respect to each synapse input signal port. These modifications are made to adapt the FIGURE 15 neural net layer for operation with one's complement, rather than with two's complement, bit-serial synapse input signals. The one's complement bit-serial synapse input signals are presumed to be ones in which the sign bit is the initial bit in a bit-serial word. Responsive to the SIGN BIT FLAG being a ONE, a respective bit latch $SBL_i$ latches the sign bit of $x_i$ to be held for the remainder of the bit-serial word when the SIGN BIT FLAG is a ZERO. Another bit latch $ABL_i$ clocked at bit rate latches each successive bit of $x_i$. The outputs of the bit latches $SBL_i$ and $ABL_i$ are applied as the two inputs of a two-input exclusive-OR gate $XOR_i$. If the sign bit stored in sign bit latch $SBL_i$ is a ZERO indicating $x_i$ to be positive, the exclusive-OR gate $XOR_i$ applies bits corresponding to the successive bits of $x_i$ as second control bits to the multiplexers $MX_i'$ and $MX_{(i+M)}'$. Alternatively, if the sign bit stored in sign bit latch $SBL_i$ is a ONE indicating $x_i$ to be negative, the exclusive-OR gate $XOR_i$ applies bits corresponding to the bit complements of the successive bits of $x_i$ as second control bits to the multiplexers $MX_i'$ and $MX_{(i+M)}'$.

When the SIGN BIT FLAG is a ONE during the initial bit of each bit-serial word, the bit latches $SBL_i$ and $ABL_i$ latch the same sign bit to each of the two inputs of exclusive-OR gate $XOR_i$, which responds with a ZERO output. This ZERO output is applied as the second control bit of each of the multiplexers $MX_i'$ and $MX_{(i+M)}'$, conditioning them to select ($V_{SS}$ + $V_{DD}$)/2 to each of the input lines $IL_i$ and $IL_{(i+M)}$. This facilitates the resetting of the charge sensing amplifiers $QS_{(N+1)}$, $QS_{(N+2)}$, ... $QS_{2N}$ during the sign bit interval.

When adapting the FIGURE 15 neural net layer for operation with one's complement bit-serial synapse input signals, the FIGURE 14 sequencer SEQ is modified to omit weighting capacitors $SH4_j$ for the sign bit slice and the associated sample-and-hold circuits $SH4_j$. The FIGURE 14 sequencer SEQ in the FIGURE 15 neural net layer is also arranged to sequence sampling in the sample-and-hold circuits in accordance with the significances of the successive bits of the bit-serial $x_i$ words which follow.

FIGURE 17 shows a modification made to the FIGURE 12 apparatus in the FIGURE 15 neural net layer in respect to each synapse input signal port to facilitate operation with one's complement bit-serial synapse input signals in which the final bit in each bit-serial word is the sign bit. It differs from the FIGURE 16 modification in that $x_i$ is delayed for the duration of one bit-serial word in a digital delay line $DDL_i$ before its application to the exclusive-OR gate $XOR_i$ bit latch $ABL_i$, so the sign bit latch $SBL_i$ can be written for temporarily storing the final sign bit of each bit-serial word to be applied to one input of the exclusive-OR gate $XOR_i$ throughout the interval that the other bits of that bit-serial word are successively applied to the other input of the exclusive-OR gate $XOR_i$. The clocking of the digital delay line $DDL_i$ and

of the sign bit latch $SBL_i$ in FIGURE 17 is arranged so that the exclusive-OR gate $XOR_i$ invariably provides a ZERO for application as second control bits to the multiplexers $MX_i'$ and $MX_{(i+M)}'$ during the time the SIGN BIT FLAG is a ONE, facilitating the resetting of the charge sensing amplifiers $QS_{(N+1)}$, $QS_{(N+2)}$, ... $QS_{2N}$. Again, the FIGURE 14 sequencer SEQ in the FIGURE 15 neural net layer is modified to omit weighting capacitors $SH4_j$ for the sign bit slice and the associated sample-and-hold circuits $SH4_j$. The FIGURE 14 sequencer SEQ in the FIGURE 15 neural net layer is also arranged to sequence sampling in the sample-and-hold circuits in accordance with the significances of the successive bits of the bit-serial $x_i$ words which follow.

FIGURE 18 shows apparatus for performing the final weighted summation of partial weighted summation results from the FIGURE 12 or 13 apparatus digitally after digitizinging the analog partial weighted summation results. The FIGURE 18 apparatus differs from the FIGURE 8 apparatus in that: there are no selective complementors $RCMP_1$, $RCMP_2$, ... $RCMP_N$ included in the respective connections of the A-to-D converters $RADC_1$, $RADC_2$ ... $RADC_N$ to the accumulators $RACC_1$, $RACC_2$, ... $RACC_N$; and the accumulators invariably have ZERO carry inputs.

FIGURE 19 is a schematic diagram of a neural net layer similar to the neural net layer of FIGURE 9, but includes either of the FIGURE 12 and FIGURE 13 apparatuses as a weighted summation network $WSN_1'$ for performing a plurality of weighted summation procedures, so the reversal of sign in the weighting of the parallel sign bits of the bit-serial synapse input signals takes place in the weighted summation network $WSN_1'$. Where the weighted summation procedures performed in the weighted summation network $WSN_1'$ generate partial weighted summation results, a weighted summation network $WSN_2'$ comprising the FIGURE 18 apparatus is used to generate final weighted summation results for application to an array of non-linear processors $NLP_1$, $NLP_2$, ... $NLP_N$. The non-linear processors $NLP_1$, $NLP_2$, ... $NLP_N$ have their analog axonal output signals digitized in respective A-to-D converters $RADC_1$, $RADC_2$ ... $RADC_N$, for application to the succeeding circuitry NEXT.

The nature of the analog-to-digital converters $RADC_i$ has thusfar not been considered in detail. Indeed, a wide variety of A-to-D converters can be used in implementing the invention. Some A-to-D converter structures are capable of accepting input signals in charge form, and in such a structure the charge sensing means and the analog-to-digital converting means specified in certain of the claims appended to this application will both be provided. The bit-slicing of input signals already slows data word throughput rate, so oversampling A-to-D converters, as of the sigma-delta type will not be favored over successive-approximation A-to-D converters unless quite slow data processing rates are acceptable. Where fairly fast data processing rates are required, flash A-to-D converters will be preferred oversuccessive-approximation A-to-D converters. The resistive ladder used to scale reference voltage in a flash A-to-D converter can be shared with other flash A-to-D converters within the same monolithic integrated circuit, economizing the amount of hardware associated with this approach to analog-to-digital conversion.

FIGURE 20, comprising component FIGURES 20A and 20B, shows a representative modification that can be manifoldly made to a neural net as shown in FIGURES 2, 8 and 9 or in FIGURES 3, 8 and 9. Each neural net layer comprises a capacitive network viewed as having a plurality M in number of columns of capacitive weights and a plurality N in number of rows of capacitive weights. The description that follows focuses on the intersection of an $i^{th}$ of these columns with a $j^{th}$ of these rows, where i is a column index from 1 to M and j is a row index from 1 to N.

A respective modification is made near each set of intersections of an output line $OL_j$ with input lines $IL_i$ and $IL_{(M+i)}$ driven by opposite senses of a synapse input signal $x_i$. Such modifications together make the neural net capable of being trained. Each capacitor pair $C_{i,j}$ and $C_{(M+i),j}$ of the FIGURE 2 or 3 portion of the neural net is to be provided by a pair of digital capacitors $DC_{i,j}$ and $DC_{(M+i),j}$. Capacitors $DC_{i,j}$ and $DC_{(M+i),j}$ are preferably of the type described by W. E. Engeler in his allowed U. S. patent application serial No. 526,470 filed 21 May 1990, entitled "CAPACITIVE STRUCTURES FOR WEIGHTED SUMMATION, AS USED IN NEURAL NETS". The capacitances of $DC_{i,j}$ and $DC_{(M+i),j}$ are controlled in complementary ways by a digital word and its one's complement, as drawn from a respective word-storage element $WSE_{i,j}$ in an array of such elements located interstitially among the rows of digital capacitors and connected to form a memory. This memory may, for example, be a random access memory (RAM) with each word-storage element $WSE_{i,j}$ being selectively addressable by row and column address lines controlled by address decoders. Or, by way of further example, this memory can be a plurality of static shift registers, one for each column j. Each static shift register will then have a respective stage $WSE_{i,j}$ for storing the word that controls the capacitances of each pair of digital capacitors $DC_{i,j}$ and $DC_{(M+i),j}$.

The word stored in word storage element $WSE_{i,j}$ may also control the capacitances of a further pair of digital capacitors $DC_{i,(N+j)}$ and $DC_{(M+i),(N+j)}$, respectively. Capacitors $DC_{i,(N+j)}$ and $DC_{(M+i),(N+j)}$ are also preferably of the type described by in U. S. patent application serial No. 526,470. The capacitors $DC_{i,(N+j)}$ and $DC_{(M+i),(N+j)}$ connect between "ac ground" and input lines $IL_i$ and $IL_{(M+i)}$, respectively, and form parts of the loading capacitors $CL_i$ and $CL_{(M+i)}$, respectively. The capacitances of $DC_{(M+i),(N+j)}$ and $DC_{i,j}$ are similar to each other and changes in their respective values track each other. The capacitances of $DC_{i,(N+j)}$ and $DC_{(M+i),j}$ are similar to each other and changes in their respective values track each other. The four digital capacitors $DC_{i,j}$, $DC_{(M+i)}$, $DC_{i,(N+j)}$ and $DC_{(M+i),(N+j)}$ are connected in a bridge configuration having input terminals to which the input lines $IL_i$ and $IL_{(M+i)}$ respectively connect and having output terminals connecting to output line $OL_j$ and to ac ground respectively. This bridge configuration facilitates making computations associated with back-propagation programming by helping make the capacitance network bilateral insofar as voltage gain is concerned. Alternatively, where the computations for back-propagation programming are done by computers that do not involve the neural net in the computation procedures, the neural net need not include the digital capacitors $DC_{i,(N+j)}$ and $DC_{(M+i),(N+j)}$. These digital capacitors $DC_{i,(N+j)}$ and $DC_{(M+i),(N+j)}$ are not needed either if very large loading capacitors are placed on the output lines $OL_j$, but this alternative undesirably reduces sensitivity of the row charge-sensing amplifier $RQS_j$.

A respective column driver $CD_i$ applies complementary bit-sliced digital signals to each pair of input lines $IL_i$ and $IL_{(M+i)}$. The column driver $CD_i$ comprises the multiplexers $MX_i$ and $MX_{(M+i)}$ connected per FIGURE 2 or per FIGURE 3. When the neural net modified per FIGURE 20 is being operated normally, following programming, the $\phi_P$ signal applied to a mode control line MCL is a logic ZERO. This ZERO conditions a respective input line multiplexer $ILM_i$ to connect the non-inverting output port of each column driver $CD_i$ to input line $IL_i$. The $\phi_P$ signal on mode control line MCL being a ZERO also conditions a respective input line multiplexer $ILM_{(M+i)}$ to connect the inverting output port of each column driver $CD_i$ to input line $IL_{(M+i)}$.

A ZERO on mode control line MCL also conditions each output line multiplexer $OLM_j$ of an N-numbered plurality thereof to select the output line $OL_j$ to the input port of a respective row charge-sensing amplifier $RQS_j$ that performs a charge-sensing operation for output line $OL_j$. When $\phi_P$ signal on mode control line MCL is a ZERO, the input signal $x_i$ induces a total change in charge on the capacitors $DC_{i,j}$ and $DC_{(M+i),j}$ proportional to the difference in their respective capacitances. The resulting displacement current flow from the input port of the row charge-sensing amplifier $RQS_j$ requires that there be a corresponding displacement current flow from the Miller integrating capacitor $CI_j$ in the row charge-sensing amplifier $RQS_j$ charging that capacitor to place thereon a voltage $v_j$ defined as follows.

$$v_j = (CI_j)^{-1} \sum_{i=1}^{M} (C_{i,j} - C_{(M+i),j}) \, x_i \qquad (5)$$

The voltage $V_j$ is supplied to an analog-to-digital converter $RADC_j$ for the $j^{th}$ row of the capacitive network, which digitizes voltage $V_j$ to generate a digital signal $y_j$ for the $j^{th}$ row that is assumed to be a two's complement digital signal. The digitized $V_j$ signal is supplied to a selective complementor $RCMP_j$ for the $j^{th}$ row, which passes the digitized $V_j$ signal without change for each of the bit slices of the input signals $x_1$, $x_2$, ... $x_M$ except the sign bit slices. For the sign bit slices the selective complementor $RCMP_j$ one's complements the bits of the digitized $V_j$ signal and adds unity thereto. The selective complementor $RCMP_j$ supplies its output signal to an accumulator $RACC_j$ for the $j^{th}$ row of the capacitive network. The accumulator $RACC_j$ accumulates the bit slices of each set of samples of the input signals $x_1$, $x_2$, ... $x_M$ as weighted for the output line $OL_j$, sensed and digitized; the accumulator result $Sy_j$ is latched by a respective row latch $RLCH_j$ for the $j^{th}$ row; and the accumulator $RACC_j$ is then reset to zero. At the same time the accumulator $RACC_j$ is reset to zero, to implement dc-restoration a reset pulse $\phi_R$ is supplied to the charge sensing amplifier $RQS_j$ for the $j^{th}$ row and to the charge sensing amplifiers for the other rows. During the dc-restoration all $x_i$ are "zero-valued".

During training, the $\phi_P$ signal applied to mode control line MCL is a logic ONE, which causes the output line multiplexer $OLM_j$ to disconnect the output line $OL_j$ from the charge sensing amplifier $RQS_j$ and to connect the output line $OL_j$ to receive a bit-sliced $\delta_j$ error term. This $\delta_j$ error term is generated by a row driver $RD_j$ responsive to the bit-serial digital product output signal of a digital multiplier $BSM_j$, responsive to a signal $\Delta_j$ and to the slope stored in the slope latch $SLCH_j$. The term $\Delta_j$ for the output neural net layer is the difference between $z_j$ actual value and its desired value $d_j$. The term $\Delta_j$ for a hidden neural net layer is the $\Delta_j$ output of the succeeding neural net layer during the back-propagation procedure.

The row driver $RD_j$ is shown as a type having differential outputs which can be provided by a pair of multiplexers similar to input multiplexers $MX_i$ and $MX_{(M+i)}$ connected as in FIGURE 2 or as in FIGURE 3. Since output of only one sense is required to drive the single-ended output line $OL_j$, as used in the neural net layers shown in FIGURES 20 and 27, however, it is preferable from the standpoint of simplifying hardware to use row drivers $RD_j$ that consist of but a single multiplexer. Indeed, the row driver function may be subsumed in the bit-serial multiplier $BSM_j$. In the neural net layers shown in FIGURES 21, 23, 28 and 30 the row driver $RD_j$ must be of a type having differential outputs, as can be provided by a pair of multiplexers similar to input multiplexers $MX_i$ and $MX_{(M+i)}$ connected as in FIGURE 2 or as in FIGURE 3.

During training, the $\phi_P$ signal applied to the mode control line MCL being a ONE also causes the input line multiplexers $ILM_i$ and $ILM_{(M+i)}$ to disconnect the input lines $IL_i$ and $IL_{(M+i)}$ from the column driver $CD_i$ output ports and connect them instead to the non-inverting and inverting input terminals of a column charge-sensing amplifier $CQS_j$. Each successive partial summation of the weighted $\delta_1$, $\delta_2$ ... $\delta_N$, signals induces a differential change in charge between input lines $IL_j$ and $IL_{(M+i)}$ proportional to $(C_{i,j} - C_{(M+i),j})$, which differential change in charge is sensed using the column charge

sensing amplifier $CQS_j$, then digitized in a respective column analog-to-digital converter $CADC_i$ for the $i^{th}$ column. The digital output signal from the column A-to-D converter $CQS_i$ is supplied to a selective complementor $CCMP_i$ for the $i^{th}$ column, which responds to a SIGN BIT FLAG to selectively one's complement the bits of that digital signal as applied to an accumulator $CACC_i$ for the $i^{th}$ column. The selective complementor $CCMP_i$ otherwise supplies the accumulator $CACC_i$ an input signal the bits of which correspond to the bits of the digital output signal from the column A-to-D converter $CQS_i$. The accumulator $CACC_i$ accumulates the successive partial summations of the weighted $\delta_1, \delta_2, ... \delta_N$ signals to generate the final weighted summation result $\Delta_i$ supplied to a parallel-in/serial-out register $CPISO_i$ for the $i^{th}$ column. The register $CPISO_i$ supplies the final weighted summation result $\Delta_i$ in bit-serial format for the bit-serial digital multiplier of the preceding neural net layer if such there be.

Resetting of the column charge sensing amplifier $CQS_i$ is normally done shortly after a ZERO to ONE transition appears in the $\phi_P$ signal applied to mode control line MCL and may also be done at other times. This procedure corrects for capacitive unbalances on the input lines $IL_i$ and $IL_{(M+i)}$ during back-propagation computations that follow the resetting procedure.

FIGURE 21, comprising component FIGURES 21A and 21B, shows a representative modification that can be manifoldly made to a neural net as shown in FIGURES 4, 8 and 9. The four digital capacitors $DC_{i,j}$, $DC_{(M+i),j}$, $DC_{i,(N+j)}$ and $DC_{(M+i),(N+j)}$ are connected in a bridge configuration having input terminals connecting from the input line $IL_i$ and from a-c ground respectively and having output terminals connecting to output lines $OL_j$ and $OL_{(N+j)}$ respectively.

When the neural net layer per FIGURES 4, 8 and 9 is being operated normally, following programming, the $\phi_P$ signal applied to a mode control line MCL is a logic ZERO. This ZERO on mode control line MCL conditions each output line multiplexer $OLM_j$ of an N-numbered plurality thereof to select the output line $OL_j$ to the inverting input terminal of a fully differential amplifier in an associated differential charge sensing amplifier $RQS_j$ for the $j^{th}$ row. This ZERO on mode control line MCL also conditions each output line multiplexer $OLM_{(N+j)}$ to the non-inverting input terminal of the fully differential amplifier in the associated differential charge sensing amplifier $RQS_j$. When $\phi_P$ signal on mode control line MCL is a ZERO, the input signal $x_i$ induces a total differential change in charge on the capacitors $DC_{i,j}$ and $DC_{i,(N+j)}$ proportional to the difference in their respective capacitances. The resulting displacement current flows needed to keep the input terminals of differential amplifier $DA_j$ substantially equal in potential requires that there be corresponding displacement current flow from the integrating capacitor $CI_j$ and $CI_{(N+j)}$ differentially charging those charging capacitors to place thereacross a differential voltage $v_j$ defined as follows.

$$v_j = (CI_j + CI_{(N+j)})^{-1} \sum_{i=1}^{M} (C_{i,j} - C_{(M+i),j}) x_i \qquad (6)$$

The A-to-D converter $RADC_j$ for the $j^{th}$ row is of a type capable of digitizing the balanced output signal from the differential charge sensing amplifier $RQS_j$. The selective complementor $RCMP_j$, the accumulator $RACC_j$, the row latch $RLCH_j$ for each $j^{th}$ row, the digital adder $ADD_j$, the digital non-linear processor $NLP_j$, the slope latch $SLCH_j$, and the digital multiplier $BSM_j$ correspond with those elements as described in connection with FIGURE 20. The bit-serial product signal from the digital multiplier $BSM_j$ is supplied to the row driver $RD_j$, which can take either of the forms the column driver $CD_i$ can take in FIGURE 20. During training, the $\phi_P$ signal applied to the mode control line MCL being a ONE causes the output line multiplexers $OLM_j$ and $OLM_{(N+j)}$ to connect the output lines $OL_j$ and $OL_{(N+j)}$ for receiving from the row driver $RD_j$ complementary digital responses to the bit-serial product from the digital multiplier $BSM_j$. The ONE on the mode control line MCL also causes each input line multiplexer $ILM_i$ to disconnect each input line $IL_i$ from the output port of the logic inverter $INV_i$ and connect it instead to supply charge on a single-ended basis to the input port of a column charge-sensing amplifier $CQS_i$.

FIGURE 22, comprising FIGURES 22A and 22B, shows a representative modification that can be made manifold times to the neural net shown in FIGURES 12, 18 and 19 or in FIGURES 13, 18 and 19, for the programmable weighting of the capacitances used in performing weighted summations of synapse signals. In this type of neural net the signs of the digital signals being weighted and summed are taken into account in the partial weighted summation procedure performed on an analog basis, rather than being taken into account in the final weighted summation procedure performed on an digital basis as is the case in the type of neural net shown in FIGURE 20. Accordingly, respective straight-through digital bussing replaces the selective complementor $RCMP_j$ for each $j^{th}$ row and the selective complementor $CCMP_i$ for each $i^{th}$ column. Accordingly, also, each column driver $CD_i$ comprises the multiplexers $MX_i$ and $MX_{(M+i)}$ connected per FIGURE 12 or per FIGURE 13, rather than the multiplexers $MX_i$ and $MX_{(M+i)}$ connected per FIGURE 2 or per FIGURE 3.

The row driver $RD_j'$ is shown as a type having differential outputs which can be provided by a pair of multiplexers similar to input multiplexers $MX_i'$ and $MX_{(M+i)}'$ connected as in FIGURE 12 or as in FIGURE 13. Since output of only one sense is required to drive the single-ended output line $OL_j$, as used in the neural net layers shown in FIGURES 22 and 29, however, it is preferable from the standpoint of simplifying hardware to use row drivers $RD_j'$ that consist of but a single multiplexer. In the neural net layers shown in FIGURES 24 and 31 the row driver $RD_j'$ must be of a type having differential outputs, as can be provided by a pair of multiplexers similar to input multiplexers $MX_i'$ and $MX_{(M+i)}'$ connected as in FIGURE 12 or as in FIGURE 13. The row driver $RD_j'$ provides in the neural net layers shown in FIGURES 22, 24, 29 and 31 for taking care of the sign bit in the digital product $\delta_i$ in the partial weighted summation procedure, so it need not be taken care of in the final weighted summation procedure. Accordingly, the selective complementors $CCMP_i$ for each $i^{th}$ column are replaced by respective straight-through bussing.

In a variant of the FIGURE 21 neural net layer not shown in the drawing, each row driver $RD_j$ is also replaced by a row driver $RD_j'$ that takes either of the forms the column driver $CD_i$ can take in FIGURE 22. In this variant, too, the row driver $RD_j'$ provides for taking care of the sign bit in the digital product $\delta_i$ in the partial weighted summation procedure, so it need not be taken care of in the final weighted summation procedure. Accordingly, the selective complementors $CCMP_i$ for each $i^{th}$ column are replaced by respective straight-through bussing.

FIGURE 23, comprising FIGURES 23A and 23B, shows a neural net layer in which both forward propagation and back propagation through a capacitive network are carried out with balanced signals, in which digital capacitors have their capacitance values programmed from respective word storage locations within a digital memory, and in which the signs of the digital signals being weighted and summed are taken into account in the final weighted summation procedure performed on a digital basis. The FIGURE 23 neural net layer shares features with both the FIGURE 20 and the FIGURE 21 neural net layers. A respective set of four digital capacitors $DC_{i,j}$, $DC_{(M+i),j}$, $DC_{i,(N+j)}$ and $DC_{(M+i),(N+j)}$ is used at each intersection of an $i^{th}$ column with a $j^{th}$ row of the array of sets of digital capacitors, for weighting of forward propagated input signals during periods of normal operation, and for weighting of back propagated error signals during training periods. Each set of four digital capacitors $DC_{i,j}$, $DC_{(M+i),j}$, $DC_{i,(N+j)}$ and $DC_{(M+i),(N+j)}$ have their capacitance values programmed by a word stored in a word storage element $WSE_{i,j}$ of an interstitial memory array IMA. Each set of four digital capacitors $DC_{i,j}$, $DC_{(M+i),j}$, $DC_{i,(N+j)}$ and $DC_{(M+i),(N+j)}$ are connected in a bridge configuration having input terminals respectively connecting from paired input lines $IL_i$ and $IL_{(M+i)}$ as in FIGURE 20A and having output terminals respectively connecting to output lines $OL_j$ and $OL_{(N+j)}$ as in FIGURE 21A. During periods of normal operation, a respective column driver $CD_i$ that comprises the multiplexers $MX_i$ and $MX_{(M+i)}$ connected per FIGURE 2 or per FIGURE 3 applies complementary bit-sliced digital input signals to each pair of input lines $IL_i$ and $IL_{(M+i)}$, as in FIGURE 20A; and a charge sensing amplifier $RQS_j$ for each $j^{th}$ row of the array of sets of digital capacitors, is connected to differentially sense the charges on paired output lines $OL_j$ and $OL_{(N+j)}$ as in FIGURE 21B. During training periods a respective row driver $RD_j$ constructed similarly to each column driver $CD_i$ applies to each pair of output lines $OL_j$ and $OL_{(N+j)}$ complementary bit-serial responses to digital product signal from a bit-serial digital multiplier $BSM_j$, as in FIGURE 21B; and a charge sensing amplifier $CQS_j$ for each $i^{th}$ column of the array of sets of digital capacitors is connected to differentially sense the charges on paired input lines $IL_i$ and $IL_{(M+i)}$, as in FIGURE 20A.

FIGURE 24, comprising FIGURES 24A and 24B, shows another neural net layer in which both forward propagation and back propagation through a capacitive network are carried out with balanced signals, and in which digital capacitors have their capacitance values programmed from respective word storage locations within a digital memory. In the FIGURE 24 neural net layer the signs of the digital signals being weighted and summed are taken into account in the partial weighted summation procedure performed on an analog basis, rather than being taken into account in the final weighted summation procedure performed on a digital basis. The FIGURE 24 neural net layer shares features with both the FIGURE 21 and the FIGURE 22 neural net layers. A respective set of four digital capacitors $DC_{i,j}$, $DC_{(M+i),j}$, $DC_{i,(N+j)}$ and $DC_{(M+i),(N+j)}$ is used at each intersection of an $i^{th}$ column with a $j^{th}$ row of the array of sets of digital capacitors, for weighting of forward propagated input signals during periods of normal operation, and for weighting of back propagated error signals during training periods. Each set of four digital capacitors $DC_{i,j}$, $DC_{(M+i),j}$, $DC_{i,(N+j)}$ and $DC_{(M+i),(N+j)}$ have their capacitance values programmed by a word stored in a word storage element $WSE_{i,j}$ of an interstital memory array IMA. Each set of four digital capacitors $DC_{i,j}$, $DC_{(M+i),j}$, $DC_{i,(N+j)}$ and $DC_{(M+i),(N+j)}$ are connected in a bridge configuration having input terminals respectively connecting from paired input lines $IL_i$ and $IL_{(M+i)}$ as in FIGURE 22A and having output terminals respectively connecting to output lines $OL_j$ and $OL_{(N+j)}$ as in FIGURE 21A. During periods of normal operation, a respective column driver $CD_i$ that comprises the multiplexers $MX_i$ and $MX_{(M+i)}$ connected per FIGURE 12 or per FIGURE 13 applies complementary bit-sliced digital input signals to each pair of input lines $IL_i$ and $IL_{(M+i)}$, as in FIGURE 22A; and a charge sensing amplifier $RQS_j$ for each $j^{th}$ row of the array of sets of digital capacitors, is connected to differentially sense the charges on paired output lines $OL_j$ and $OL_{(N+j)}$ as in FIGURE 21B. During training periods a respective row driver $RD_j$ constructed similarly to each column driver $CD_i$ applies to each pair of output lines $OL_j$ and $OL_{(N+j)}$ complementary bit-serial responses to digital product signal from a bit-serial digital multiplier $BSM_j$, as in FIGURE 21B; and a charge sensing amplifier $CQS_j$ for each $i^{th}$ column of the array of sets of digital capacitors is connected to differentially sense the charges on paired input lines $IL_i$ and $IL_{(M+i)}$, as in FIGURE 22A.

FIGURE 25 shows apparatuses for completing the back-propagation computations, as may be used with a neural net having layers as shown in FIGURES 2, 8 and 9 or in FIGURES 3, 8 and 9 modified manifoldly per FIGURE 20; or having layers as shown in FIGURES 4, 8 and 9 modified manifoldly per FIGURE 21; or having layers as shown in FIGURES 12, 18 and 19 or in FIGURES 13, 18 and 19 modified manifoldly per FIGURE 22; or having layers as shown in FIGURE 23; or having layers as shown in FIGURE 24. The weights at each word storage element $WSE_{i,j}$ in the interstitial memory array IMA are to be adjusted as the i column addresses and j row addresses are scanned row by row, one column at a time. An address scanning generator ASG generates this scan of i and j addresses shown applied to interstitial memory array IMA, assuming it to be a random access memory. The row address j is applied to a row multiplexer RM that selects bit-serial $\delta_j$ to one input of a bit-serial multiplier $BSM_0$, and the column address i is applied to a column multiplexer CM that selects bit-serial $x_i$ to another input of the multiplier $BSM_0$.

Multiplier $BSM_0$ generates in bit-serial form the product $x_i \delta_j$ as reduced by a scaling factor $\eta$, which is the increment or decrement to the weight stored in the currently addressed word storage element $WSE_{ij}$ in the memory array IMA. A serial-in/parallel-out register SIPO is used to convert the $\eta x_i \delta_j$ signal from bit-serial to the parallel-bit form of the signals stored in the memory array IMA. The former value of weight stored in word storage element $WSE_{ij}$ is read from memory array IMA to a temporary storage element, or latch, TS. This former weight value is supplied as minuend to a digital subtractor SUB, which receives as subtrahend $\eta x_i \delta_j$ from the serial-in/parallel-out register SIPO. The resulting difference is the updated weight value which is written into word storage element $WSE_{i,j}$ in memory array IMA to replace the former weight value.

FIGURE 26 shows how trained neural net layers $L_0$, $L_1$ and $L_2$ are connected together in a system that can be trained. Each of the neural net layers is similar to neural net layers as shown in FIGURES 2, 8 and 9 or in FIGURES 3, 8 and 9 modified manifoldly per FIGURE 20; or in FIGURES 4, 8 and 9 modified manifoldly per FIGURE 21; or in FIGURES 12, 18 and 19 or in FIGURES 13, 18 and 19 modified manifoldly per FIGURE 22; or in FIGURE 23; or in FIGURE 24. Each of the neural net layers has a respective back-propagation processor per FIGURE 25 associated therewith.

$L_0$ is the output neural net layer that generates $z_j$ output signals and is provided with a back-propagation processor $BPP_0$ with elements similar to those shown in FIGURE 25 for updating the weights stored in the interstitial memory array of $L_0$. $L_1$ is the first hidden neural net layer which generates $z_h$ output signals supplied to the output neural net layer as its $x_i$ input signals. These $z_i$ output signals are generated by layer $L_1$ as its non-linear response to the weighted sum of its $x_h$ input signals. This first hidden neural net layer $L_1$ is provided with a back-propagation processor $BPP_1$ similar to $BPP_0$. $L_2$ is the second hidden neural net layer, which generates $z_h$ output signals supplied to the first hidden neural net layer as its $x_h$ input signals. These $z_h$ output signals are generated by layer $L_2$ as its non-linear response to a weighted summation of its $x_g$ input signals. This second hidden layer is provided with a back-propagation processor similar to $BPP_0$ and to $BPP_1$.

FIGURE 26 presumes that the respective interstitial memory array IMA of each neural net layer $L_0$, $L_1$, $L_2$ has a combined read/write bus instead of separate read input and write output busses as shown in FIGURE 25. FIGURE 26 shows the $\Delta_j$, $\Delta_i$ and $\Delta_h$ signals being fed back over paths separate from the feed forward paths for $z_j$, $z_i$ and $z_h$ signals, which separate paths are shown to simplify conceptualization of the neural net by the reader. In actuality, as previously described, a single path is preferably used to transmit $z_j$ in the forward direction and $\Delta_j$ in the reverse direction, etc. Back-propagation processor $BPP_0$ modifies the weights read from word storage elements in neural net layer $L_0$ interstitial memory array by $\eta x_i \delta_j$ amounts and writes them back to the word storage elements in a sequence of read-modify-write cycles during the training procedure. Back-propagation processor $BPP_1$ modifies the weights read from word storage elements in neural net layer $L_1$ interstitial memory array by $\eta x_h \delta_i$ amounts and writes them back to the word storage elements in a sequence of read-modify-write cycles, during the training procedure. Back-propagation processor $BPP_2$ modifies the weights read and storage elements in neural net layer $L_2$ interstitial memory array by $\eta x_g \delta_h$ amounts and writes them back to the word storage element in a sequence of read-modify-write cycles during the training procedure.

FIGURE 27, comprising component FIGURES 27A and 27B shows an alternative modification that can be manifoldly made to a neural net as shown in FIGURES 2, 8 and 9 or in FIGURES 3, 8 and 9 to give it training capability. This alternative modification seeks to avoid the need for a high-resolution bit-serial multiplier $BSM_0$ and complex addressing during back-propagation calculations in order that training can be implemented. A respective up/down counter $UDC_{i,j}$ is used instead of each word storage element $WSE_{i,j}$. Correction of the word stored in counter $UDC_{i,j}$ is done a count at a time; and the counter preferably has at least one higher resolution stage in addition to those used to control the capacitances of digital capacitors $DC_{i,j}$, $DC_{(M+i),j}$, $DC_{i,(N+j)}$ and $DC_{(M+i),(N+j)}$. Each up/down counter $UDC_{i,j}$ has a respective counter control circuit $CON_{i,j}$ associated therewith. Each counter control circuit $CON_{i,j}$ may, as shown in FIGURE 27A and described in detail further on in this specification, simply consist of an exclusive-OR gate $XOR_{i,j}$.

Responsive to a SIGN BIT FLAG, a row sign bit latch $RBL_j$ latches the sign bit of $\delta_j$, indicative of whether a row of weights should in general be decremented or incremented, to be applied via a respective row sign line $RSL_j$ to all counter control circuits ($CON_{i,j}$ for i=1, ...,M) in the $j^{th}$ row associated with that row sign bit latch $RBL_j$. Before making a back-propagation calculation, a respective column sign bit latch $CBL_i$ latches the sign bit of $x_i$ for each $i^{th}$ columnar position along the row which is to be updated, to provide an indication of whether it is likely the associated weight should be decremented or incremented. Each column sign bit latch $CBL_i$ is connected to broadcast its estimate via a respective column sign line $CSL_i$ to all counter control circuits ($CON_{i,j}$ for j=1, ...N) in the $i^{th}$ column associated with that column sign bit latch $CBL_i$. Responsive to these indications from sign bit latches $CBL_i$ and $RBL_j$, each respective counter control circuit $CON_{i,j}$ decides in which direction up/down counter $UDC_{i,j}$ will count to adjust the weight control signals $D_{i,j}$ and $\overline{D}_{i,j}$ stored therein.

The counter control circuitry $CON_{i,j}$ should respond to the sign of $+\delta_j$ being positive, indicating the response $v_j$ to be too positive, to decrease the capacitance to output line $OL_j$ that is associated with the signal $x_i$ or $- x_i$ that is positive and to increase the capacitance to output line $OL_j$ that is associated with the signal $- x_i$ or $x_i$ that is negative, for each value of i. The counter control circuitry $CON_{i,j}$ should respond to the sign of $+\delta_j$ being negative, indicating the response v to be too negative, to increase the capacitance to output line $OL_j$ that is associated with the signal $- x_i$ or $x_i$ that is negative and to decrease the capacitance to output line $OL_j$ that is associated with the signal $x_i$ or $- x_i$ that is positive. Accordingly, counter control circuitry $CON_{i,j}$ may simply consist of a respective exclusive-OR gate $XOR_{i,j}$ as shown in FIGURE 27A, if the following presumptions are valid.

Each of the digital capacitors $DC_{i,j}$ and $DC_{(M+i),(N+j)}$ is presumed to increase or decrease its capacitance as $D_{i,j}$ is increased or decreased respectively. Each of the digital capacitors $DC_{(M+i),j}$ and $DC_{i,(N+j)}$ is presumed to increase or decrease its capacitance as $\overline{D}_{i,j}$ is increased or decreased respectively. A ZERO applied as up/down signal to up/down counter $UDC_{i,j}$ is presumed to cause counting down for $D_{i,j}$ and counting up for $\overline{D}_{i,j}$. A ONE applied as up/down signal to up/down counter $UDC_{i,j}$ is presumed to cause counting up for $D_{i,j}$ and counting down for $\overline{D}_{i,j}$. Column sign detector $CSD_i$ output indication is presumed to be a ZERO when $x_i$ is not negative and to be a ONE when $x_i$ is negative. Row sign detector $RSD_j$ output indication is presumed to be a ZERO when $\delta_j$ is not negative and to be a ONE when $\delta_j$ is negative. Since the condition where $x_i$ or $\delta_j$ is zero-valued is treated as if the zero-valued number were positive, forcing a false correction which is in fact not necessary, and thus usually creating the need for a counter correction in the next cycle of back-propagation training, there is dither in the correction loops. However, the extra stage or stages of resolution in each up/down counter $UDC_{i,j}$ prevent high-resolution dither in the feedback correction loop affecting the capacitances of $DC_{i,j}$, $DC_{(M+i),j}$, $DC_{i,(N+j)}$ and $DC_{(M+i),(N+j)}$.

FIGURE 28, comprising component FIGURES 28A and 28B shows an alternative modification that can be manifoldly made to a neural net as shown in FIGURES 4, 8 and 9 to give it training capability. A respective up/down counter $UDC_{i,j}$ is used instead of each word storage element $WSE_{i,j}$ in this FIGURE 28 alternative modification; and FIGURE 28 differs from FIGURE 21 in substantially the same respects that FIGURE 27 differs from FIGURE 20.

FIGURE 29, comprising component FIGURES 29A and 29B shows an alternative modification that can be manifoldly made to a neural net as shown in FIGURES 12, 18 and 19 or in FIGURES 13, 18 and 19 to give it training capability. A respective up/down counter $UDC_{i,j}$ is used instead of each word storage element $WSE_{i,j}$ in this FIGURE 29 alternative modification; and FIGURE 29 differs from FIGURE 22 in substantially the same respects that FIGURE 27 differs from FIGURE 20. In FIGURE 29 as in FIGURE 22 the signs of the digital signals being weighted and summed are taken into account in the partial weighted summation procedure performed on an analog basis, rather than being taken into account in the final weighted summation procedure performed on an digital basis as is the case in the types of neural nets shown in FIGURES 20 and 27. Accordingly, a neural net manifoldly using the FIGURE 29 modification differs from a neural net manifoldly using the FIGURE 27 modification in that respective straight-through digital bussing replaces the selective complementor $RCMP_j$ for each $j^{th}$ row and the selective complementor $CCMP_i$ for each $i^{th}$ column. Accordingly, also, in a neural net manifoldly using the FIGURE 29 modification differs from a neural net manifoldly using the FIGURE 27 modification in that each column driver $CD_i$ comprises the multiplexers $MX_i$ and $MX_{(M+i)}$ connected per FIGURE 12 or per FIGURE 13, rather than the multiplexers $MX_i$ and $MX_{(M+i)}$ connected per FIGURE 2 or per FIGURE 3. Except for these differences, a neural net manifoldly using the FIGURE 29 modification resembles, in both structure and operation, a neural net manifoldly using the FIGURE 27 modification.

In a variant of the FIGURE 28 neural net layer not shown in the drawing, the row driver $RD_j$ takes either of the forms the column driver $CD_i$ can take in FIGURE 29. This provides for taking care of the sign bit in the digital product $\delta_i$ in the partial weighted summation procedure, so it need not be taken care of in the final weighted summation procedure. Accordingly, the selective complementors $CCMP_i$ for each $i^{th}$ column are replaced by respective straight-through bussing. The extraction of the sign bit of the digital product $\delta_i$ for application to the row sign line $RSL_j$ is done before the row driver $RD_j$, of course.

FIGURE 30, comprising component FIGURES 30A and 30B shows an alternative modification that can be manifoldly made to a neural net using layers as shown in FIGURE 23 to give it training capability. A respective up/down counter $UDC_{i,j}$ is used instead of each word storage element $WSE_{i,j}$ in this FIGURE 30 alternative modification; and FIGURE 30 differs from FIGURE 23 in similar respects as FIGURE 27 differs from FIGURE 20 and as FIGURE 28 differs from FIGURE 21.

FIGURE 31, comprising component FIGURES 31A and 31B shows an alternative modification that can be manifoldly made to a neural net using layers as shown in FIGURE 24 to give it training capability. A respective up/down counter $UDC_{i,j}$ is used instead of each word storage element $WSE_{i,j}$ in this FIGURE 31 alternative modification; and FIGURE 31 differs from FIGURE 24 in similar respects as FIGURE 28 differs from FIGURE 21 and as FIGURE 29 differs from FIGURE 22. Hybrids of the FIGURE 30 and 31 neural net layers are possible, handling the sign bits of the digital input signals as in either one of the FIGURE 30 and 31 neural net layers and handling the sign bits of the digital error signals as in the other of the FIGURE 30 and 31 neural net layers.

FIGURE 32 shows the construction of counter $UDC_{i,j}$ being one that has a plurality of binary counter stages $BCS_1$, $BCS_2$, $BCS_3$ that provide increasingly more significant bits of the weight control signal $D_{i,j}$ and of its one's complement $\bar{D}_{i,j}$. FIGURE 33 shows the logic within each binary counter stage which is implemented with MOS circuitry that is conventional in the art. FIGURES 32 and 33 make it clear that the opposite directions of counting for $D_{i,j}$ and $\bar{D}_{i,j}$ can be controlled responsive to a ZERO or ONE up/down control signal in either of two ways, depending on whether $D_{i,j}$ is taken from $\bar{Q}$ outputs of the flip-flops and $\bar{D}_{i,j}$ is taken from their Q outputs, as shown, or whether $D_{i,j}$ is taken from the Q outputs of the flip-flops and $\bar{D}_{i,j}$ is taken from their $\bar{Q}$ outputs. if the latter choice had been made instead, each counter control circuit $CON_{i,j}$ would have to consist of a respective exclusive-NOR circuit, or alternatively the $CSD_i$ and $RSD_j$ sign detectors would have to be of opposite logic types, rather than of the same logic type.

While bit-slicing the plural-bit digital synapse samples and processing the bit slices through the same capacitive weighting network is advantageous in that it provides good guarantee that the partial weighted summation results track are scaled in exact powers of two respective to each other, speedier processing can be required which necessitates bit-slicing be done on a spatial-division-multiplexing, rather than time-division multiplexing, basis. Each bit slice is then processed to generate a respective partial weighted summation result in a respective capacitive weighting network similar to the capacitive weighting networks respectively used to generate respective partial weighted summation results for the other bit slices, and a network of digital adders is used instead of an accumulator for generating each final weighted summation result by combining appropriately shifted partial weighted summation results.

## Claims

1. A system for performing a plurality of weighted summations, N in number, of a plurality of input signals ($x_i$), M in number, N being an integer greater than zero, and M being an integer greater than 1; each of said input signals being a digital signal; said system being CHARACTERIZED IN THAT:

   said system includes apparatus for supplying a multi-bit word of each of said M input signals one bit at a time on a bit-slice basis; and
   said system includes apparatus ($WSN_1$, $WSN_2$) for performing said N weighted summations on a bit-slice basis, said apparatus including a plurality N in number of analog weighted summers ($C_{i,j}$) identified by respective ones of first through $N^{th}$, consecutive ordinal numbers, each said analog weighted summer being connected for receiving in parallel M analog input signals obtained from said M input digital signals ($x_i$) as identified by respective ones of first through $M^{th}$, consecutive ordinal numbers and each said analog weighted summer generating a respective analog output signal ($y_i$, $z_i$) as first through $N^{th}$ partial weighted summation results, identified by the same one of the first through $N^{th}$ consecutive ordinal numbers as said analog weighted summer generating it, weighted summations of the partial weighted summation results of similar ordinal number being then performed, in accordance with the significance of said bit-slices with which they are respectively associated, to generate first through $N^{th}$ final weighted summation results.

2. A system as set forth in Claim 1 for performing N weighted summations of single-bit digital input signals, said system CHARACTERIZED BY said plurality N of analog weighted summers identified by respective ones of consecutive first through $N^{th}$ ordinal numbers together comprising:

   M pairs of input lines, said input lines being identified by respective ones of consecutive first through $2M^{th}$, ordinal numbers, each pair including input lines being identified by one of the M ordinal numbers and each pair being identified by the same ordinal number as the lower of the ordinal numbers identifying the input lines in said pair;
   respective circuitry respectively responding to said first through $M^{th}$ single-bit digital input signals being ONE, for placing a first prescribed voltage level on the input line identified by the corresponding ordinal number and placing a second prescribed voltage level on the input line identified by the ordinal number that is M higher;
   respective circuitry respectively responding to said first through $M^{th}$ single-bit digital input signals being ZERO, for placing said second prescribed voltage level on the input line identified by the corresponding ordinal number and placing said first prescribed voltage level on the input line identified by the ordinal number that is M higher;
   N output lines identified by respective ones of consecutive first through $N^{th}$ ordinal numbers;

a plurality of weighting capacitors having respective first plates and second plates, each of said weighting capacitors having its first plate connected to one of said first through $2M^{th}$ input lines and having its second plate connected to one of said first through $N^{th}$ output lines; and

N charge sensin circuits identified by respective ones of consecutive first through $N^{th}$ ordinal numbers, each connected for sensing the charge on said output line identified by the corresponding ordinal number and responding to generate the respective analog output signal identified by the corresponding ordinal numbers.

3. A system as set forth in Claim 1 for performing N weighted summations of single-bit digital input signals, said system CHARACTERIZED BY said plurality N in number of analog weighted summers identified by respective ones of consecutive first through $N^{th}$ ordinal numbers together comprising:

M pairs of input lines, said input lines identified by respective ones of consecutive first through $2M^{th}$ ordinal numbers, each pair including input lines identified by one of ordinal numbers the M and each pair being identified by the same ordinal number as the lower of the ordinal numbers identifying the input lines in said pair; respective circuitry respectively responding to said first through $M^{th}$ single-bit digital input signals being ONE, for placing a first prescribed voltage level on the input line identified by the corresponding ordinal number and placing a second prescribed voltage level on the input line identified by the ordinal number M that is higher; respective circuitry respectively responding to said first through $M^{th}$ single-bit digital input signals being ZERO, for placing a third voltage level both on the input line identified by the corresponding ordinal number and on the input line identified by the ordinal number M that is higher, said third voltage level being midway between said first and second prescribed voltage levels;

N output lines identified by respective ones of consecutive first through $N^{th}$ ordinal numbers; a plurality of weighting capacitors having respective first plates and second plates, each of said weighting capacitors having its first plate connected to one of said first through $2M^{th}$ input lines and having its second plate connected to one of said first through $N^{th}$ output lines; and

N charge sensing circuits identified by respective ones of consecutive first through $N^{th}$ ordinal numbers, each said charge sensing circuit connected for sensing the charge on said output line identified by the corresponding ordinal number and responding to generate the respective analog output signal identified by the corresponding ordinal number.

4. A system as set forth in Claim 1 for performing N weighted summations of single-bit digital input signals, said system CHARACTERIZED BY said plurality N in number of analog weighted summers identified by respective ones of consecutive first through $N^{th}$ ordinal numbers together comprising:

N pairs of output lines, said output lines identified by respective ones of consecutive first through $2N^{th}$ ordinal numbers, each air including output lines identified by one of the N ordinal numbers and each pair being identified by the same ordinal number as the lower of the ordinal numbers identifying the output lines in said pair; M input lines, said input lines identified by respective ones of consecutive first through $N^{th}$ ordinal numbers; respective circuitry respectively responding to said first through $M^{th}$ single-bit digital input signals being ZERO, for placing a first prescribed voltage level on the input line identified by the corresponding ordinal number; respective circuitry respectively responding to said first through $M^{h}$ single-bit digital input signals being ONE, for placing a second voltage level on the input line identified by the corresponding ordinal number; a plurality of weighting capacitors having respective first plates and second plates, each of said weighting capacitors having its first plate connected to one of said first through $2N^{th}$ output lines and having its second plate connected to one of said first through $M^{th}$ input lines; N charge sensing circuits identified by respective ones of consecutive first through $N^{th}$ ordinal numbers, each of said first through $N^{th}$ charge sensing circuits connected for sensing the differential charge between said output line identified by the corresponding ordinal number and said output line identified by the ordinal number that is N higher, each of said first through $N^{th}$ charge sensing circuits responding to the differential charge it senses to generate the respective analog output signal identified by the corresponding ordinal number; and circuitry for periodically zeroing said system during which periods of zeroing said system said first prescribed voltage level is applied to the first and second plates of each of said plurality of weighting capacitors.

5. A system for performing N weighted summations of input signals as set forth in any of Claims 1-4 CHARACTERIZED BY being included in a neural network layer with:

N non-linear processors, each having a sigmoidal transfer characteristic, being receptive of a respective one of said first through $N^{th}$ analog output signals, and responding to generate a respective axonal response.

6. A system for performing N weighted summations of input signals as set forth in any of Claims 1-4 CHARACTERIZED BY being included in a neural network layer with:

   N non-linear processors, each having a sigmoidal transfer characteristic, being receptive of a respective one of said first through $N^{th}$ analog output signals, and responding to generate a respective axonal response; and analog-to-digital conversion circuitry for digitizing each of said N axonal responses.

7. A system for performing N weighted summations of input signals as set forth in any of Claims 1-4 CHARACTERIZED BY being included in combination with:
   analog-to-digital conversion circuitry for digitizing said first through $N^{th}$ analog output signals.

8. A system for performing N weighted summations of input signals as set forth in Claim 7 CHARACTERIZED BY:

   each of said M digital input signals having B bits in each successive word thereof,
   B being an integer greater than one, each of said M digital input signals having its words aligned in time with the words of each other of said M digital input signals; and
   a plurality N in number of digital weighted accumulators identified by respective ones of consecutive first through $N^{th}$ ordinal numbers, each of said digital weighted accumulators being of a type for receiving sequentially via said analog-to-digital conversion circuitry from said analog weighted summer identified by the same ordinal number as its own B digital input signals each representative of a respective partial weighted summation result, which respective partial weighted summation results are shifted in accordance with the weights of the bit slices respectively giving rise to them and then summed to generate a respective digital output signal representative of a respective final weighted summation result.

9. A system for performing N weighted summations of input signals as set forth in Claim 8 CHARACTERIZED BY being included in a neural network layer with:
   N non-linear digital circuits, each having a sigmoidal transfer characteristic and receptive of a respective one of said digital output signals representative of final weighted summation results, to generate a respective axonal response.

10. A system for performing N weighted summations of input signals as set forth in any of Claims 1-4 CHARACTERIZED BY being included in a neural network layer with:

    analog-to-digital conversion circuitry for digitizing said first through $N^{th}$ analog output signals; and
    N non-linear digital circuits, each having a sigmoidal transfer characteristic and receptive of a respective one of said digitized first through $N^{th}$ analog output signals, to generate a respective axonal response.

11. A system for performing N weighted summations of input signals as set forth in any of Claims 1-4 CHARACTERIZED BY:

    each of said M digital input signals having B bits in each successive word thereof,
    B being an integer greater than one, and each of said M digital input signals having its words aligned in time with the words of each other of said M digital input signals.

12. A system for performing N weighted summations of input signals as set forth in Claim 11 CHARACTERIZED BY being included in combination with:
    a plurality N in number of analog weighted accumulators identified by respective ones of consecutive first through $N^{th}$ ordinal numbers, each connected for receiving sequentially the B successive values of said analog output signal identified by the corresponding ordinal number, as generated responsive to respective bit slices of said M input signals and weighting those B sequentially received values of said analog output signal in accordance with the weights of the bit slices respectively giving rise to them to generate a final weighted summation signal.

13. A system for performing N weighted summations of input signals as set forth in Claim 12 CHARACTERIZED BY being included in a neural network layer with:
    N non-linear processors, each having a sigmoidal transfer characteristic, being receptive of a respective one of said final weighted summation signals, and responding to generate a respective axonal response.

14. A system for performing N weighted summations of input signals as set forth in Claim 12 CHARACTERIZED BY being included in a neural network layer with:

N non-linear processors, each having a sigmoidal transfer characteristic, being receptive of a respective one of said final weighted summation signals, and responding to generate a respective axonal response; and analog-to-digital conversion circuitry for digitizing each of said N axonal responses.

**15.** A system for performing N weighted summations of input signals as set forth in Claim 12 CHARACTERIZED BY being included in combination with:
analog-to-digital conversion circuitry for digitizing each of said final weighted summation signals.

**16.** A system for performing N weighted summations of input signals as set forth in Claim 12 CHARACTERIZED BY being included in a neural network layer with:

analog-to-digital conversion circuitry for digitizing each of said final weighted summation signals; and N non-linear digital circuits, each having a sigmoidal transfer characteristic and receptive of a respective one of said digitized final weighted summation signals, to generate a respective axonal response.

**17.** A system for performing N weighted summations of digital input signals connected in a neural net layer, as set forth in any of Claims 9, 10, 13, 14 and 16, CHARACTERIZED BY said neural net layer being one layer of a plural-layer neural net.

## Patentansprüche

**1.** System zur Durchführung einer Anzahl N gewichteter Summierungen einer Anzahl M Eingangssignale ($x_i$), wobei N eine ganze Zahl größer Null und M eine ganze Zahl größer 1 und jedes der Eingangssignale ein digitales Signal ist, wobei das System dadurch gekennzeichnet ist, daß

das System eine Einrichtung zum Anlegen eines Mehrbit-Wortes von jedem der M Eingangssignale, jeweils ein Bit zu einer Zeit, auf einer Bitscheibenbasis enthält; und
das System eine Einrichtung ($WSN_1$, $WSN_2$) zur Durchführung der N gewichteten Summierungen auf einer Bitscheibenbasis enthält,
wobei die Einrichtung eine Anzahl N von analogen gewichteten Summierern ($C_{i,j}$) enthält, die durch entsprechende von den ersten bis N-ten Ordnungszahlen bezeichnet sind,
wobei jeder analoge gewichtete Summierer für eine parallele Aufnahme von aus den M digitalen Eingangssignalen (xi) erhaltenen M analogen Eingangssignalen verbunden ist, wie sie durch entsprechende der ersten bis M-ten aufeinanderfolgenden Ordnungszahlen bezeichnet sind, und
wobei jeder analoge gewichtete Summierer ein entsprechendes analoges Ausgangssignal ($y_i$, $z_i$) als erste bis N-te teilweise gewichtete Summierungsergebnisse erzeugt, die durch dieselbe von der ersten bis N-ten aufeinanderfolgenden Ordnungszahl wie der sie erzeugende analoge gewichtete Summierer bezeichnet sind, wobei dann gewichtete Summierungen der teilweise gewichteten Summierungsergebnisse mit gleicher Ordnungszahl in Übereinstimmung mit der Signifikanz derjenigen Bitscheiben durchgeführt werden, mit denen sie jeweils zusammenhängen, um erste bis N-te endgültige gewichtete Summierungsergebnisse zu erzeugen.

**2.** System nach Anspruch 1 zur Durchführung von N gewichteten Summierungen von digitalen Einzelbit-Eingangssignalen, wobei das System gekennzeichnet ist durch die Anzahl N analoger gewichteter Summierer, die durch entsprechende von aufeinanderfolgenden ersten bis N-ten Ordnungszahlen bezeichnet sind, gemeinsam enthaltend:

M Paare von Eingangsleitungen, wobei die Eingangsleitungen bezeichnet sind durch entsprechende der aufeinanderfolgenden ersten bis 2M-ten Ordnungszahlen, wobei jedes Paar durch eine der M Ordnungszahlen bezeichnete Eingangsleitung enthält und jedes Paar durch dieselbe Ordnungszahl bezeichnet ist wie die niedrigere der die Eingangsleitungen in dem Paar bezeichnenden Ordnungszahlen;
entsprechende Schaltkreise, die jeweils darauf ansprechen, wenn die ersten bis M-ten digitalen Einzelbit-Eingangssignale im Zustand EINS sind, um einen ersten vorgeschriebenen Spannungswert auf die durch die entsprechende Ordnungszahl bezeichnete Eingangsleitung und einen zweiten vorgeschriebenen Spannungswert auf die durch die um M höhere Ordnungszahl bezeichnete Eingangsleitung zu legen;
entsprechende Schaltkreise, die jeweils darauf ansprechen, wenn die ersten bis M-ten digitalen Einzelbit-Eingangssignale im Zustand NULL sind, um den zweiten vorgeschriebenen Spannungswert auf die durch die entsprechende Ordnungszahl bezeichnete Eingangsleitung und den ersten vorgeschriebenen Spannungswert auf die durch die um M höhere Ordnungszahl bezeichnete Eingangsleitung zu legen;

N Ausgangsleitungen, die durch entsprechende der aufeinanderfolgenden ersten bis N-ten Ordnungszahlen bezeichnet sind;

mehrere Gewichtungskondensatoren mit jeweiligen ersten Platten und zweiten Platten, wobei jeder der Gewichtungskondensatoren seine erste Platte mit einer der ersten bis 2M-ten Eingangsleitungen und seine zweite Platte mit einer der ersten bis N-ten Ausgangsleitungen verbunden hat; und

N Ladungsabfühlschaltungen, die durch entsprechende von aufeinanderfolgenden ersten bis N-ten Ordnungszahlen bezeichnet sind, die jede zum Abfühlen der Ladung auf der durch die entsprechende Ordnungszahl bezeichneten Ausgangsleitung verbunden sind und darauf ansprechen, um das jeweilige durch die entsprechende Ordnungszahl bezeichnete analoge Ausgangssignal zu erzeugen.

3. System nach Anspruch 1 zur Durchführung von N gewichteten Summierungen von digitalen Einzelbit-Eingangssignalen, wobei das System gekennzeichnet ist durch die mehreren N analogen gewichteten Summierer, die durch entsprechende von aufeinanderfolgenden ersten bis N-ten Ordnungszahlen bezeichnet sind, gemeinsam enthaltend:

M Paare von Eingangsleitungen, wobei die Eingangsleitungen bezeichnet sind durch entsprechende der aufeinanderfolgenden ersten bis 2M-ten Ordnungszahlen, wobei jedes Paar durch eine der M Ordnungszahlen bezeichnete Eingangsleitungen enthält und jedes Paar durch dieselbe Ordnungszahl bezeichnet ist wie die niedrigere der die Eingangsleitungen in dem Paar bezeichnenden Ordnungszahlen;

entsprechende Schaltkreise, die jeweils darauf ansprechen, wenn die ersten bis M-ten digitalen Einzelbit-Eingangssignale im Zustand EINS sind, um einen ersten vorgeschriebenen Spannungswert auf die durch die entsprechende Ordnungszahl bezeichnete Eingangsleitung und einen zweiten vorgeschriebenen Spannungswert auf die durch die um M höhere Ordnungszahl bezeichnete Eingangsleitung zu legen;

entsprechende Schaltkreise, die jeweils darauf ansprechen, wenn die ersten bis M-ten digitalen Einzelbit-Eingangssignale im Zustand NULL sind, um einen dritten vorgeschriebenen Spannungswert sowohl auf die durch die entsprechende Ordnungszahl bezeichnete Eingangsleitung als auch auf die durch die um M höhere Ordnungszahl bezeichnete Eingangsleitung zu legen, wobei der dritte Spannungswert in der Mitte zwischen den ersten und zweiten vorgeschriebenen Spannungswerten liegt;

N Ausgangsleitungen, die durch entsprechende der aufeinanderfolgenden ersten bis N-ten Ordnungszahlen bezeichnet sind;

mehrere Gewichtungskondensatoren mit jeweiligen ersten Platten und zweiten Platten, wobei jeder der Gewichtungskondensatoren seine erste Platte mit einer der ersten bis 2M-ten Eingangsleitungen und seine zweite Platte mit einer der ersten bis N-ten Ausgangsleitungen verbunden hat; und

N Ladungsabfühlschaltungen, die durch entsprechende von aufeinanderfolgenden ersten bis N-ten Ordnungszahlen bezeichnet sind, wobei jede Ladungsabfühlschaltung zum Abfühlen der Ladung auf der durch die entsprechende Ordnungszahl bezeichneten Ausgangsleitung verbunden ist und darauf anspricht, um das jeweilige durch die entsprechende Ordnungszahl bezeichnete analoge Ausgangssignal zu erzeugen.

4. System nach Anspruch 1 zur Durchführung von N gewichteten Summierungen von digitalen Einzelbit-Eingangssignalen, wobei das System gekennzeichnet ist durch die mehreren N analogen gewichteten Summierer, die durch entsprechende von aufeinanderfolgenden ersten bis N-ten Ordnungszahlen bezeichnet sind, gemeinsam enthaltend:

N Paare von Ausgangsleitungen, wobei die Ausgangsleitungen bezeichnet sind durch entsprechende der aufeinanderfolgenden ersten bis 2N-ten Ordnungszahlen, wobei jedes Paar durch eine der N Ordnungszahlen bezeichnete Ausgangsleitungen enthält und jedes Paar durch dieselbe Ordnungszahl bezeichnet ist wie die niedrigere der die Ausgangsleitungen in dem Paar bezeichnenden Ordnungszahlen;

M Eingangsleitungen, die durch entsprechende der aufeinanderfolgenden ersten bis N-ten Ordnungszahlen bezeichnet sind;

entsprechende Schaltkreise, die jeweils darauf ansprechen, wenn die ersten bis M-ten digitalen Einzelbit-Eingangssignale im Zustand NULL sind, um einen ersten vorgeschriebenen Spannungswert auf die durch die entsprechende Ordnungszahl bezeichnete Eingangsleitung zu legen;

entsprechende Schaltkreise, die jeweils darauf ansprechen, wenn die ersten bis M-ten digitalen Einzelbit-Eingangssignale im Zustand EINS sind, um einen zweiten vorgeschriebenen Spannungswert auf die durch die entsprechende Ordnungszahl bezeichnete Eingangsleitung zu legen;

mehrere Gewichtungskondensatoren mit jeweiligen ersten Platten und zweiten Platten, wobei jeder der Gewichtungskondensatoren seine erste Platte mit einer der ersten bis 2N-ten Ausgangsleitungen und seine zweite Platte mit einer der ersten bis M-ten Eingangsleitungen verbunden hat; und

N Ladungsabfühlschaltungen, die durch entsprechende von aufeinanderfolgenden ersten bis N-ten Ordnungszahlen bezeichnet sind, wobei jede der ersten bis N-ten Ladungsabfühlschaltungen zum Abfühlen der Differenzladung zwischen der durch die entsprechende Ordnungszahl bezeichneten Ausgangsleitung und der durch die um M höhere Ordnungszahl bezeichnete Ausgangsleitung verbunden ist, wobei jede der ersten bis N-ten Ladungsabfühlschaltungen auf die von ihr abgefühlte Ladung anspricht, um das jeweilige durch die entsprechende Ordnungszahl bezeichnete analoge Ausgangssignal zu erzeugen; und

eine Schaltung für eine periodische Nullpunkteinstellung des Systems, während welcher Perioden der Nullpunkteinstellung des Systems der erste vorgeschriebene Spannungswert an die ersten und zweiten Platten von jedem der mehreren Gewichtungskondensatoren angelegt wird.

5. System zur Durchführung von N gewichteten Summierungen von Eingangssignalen nach einem der Ansprüche 1 bis 4, dadurch gekennzeichnet, daß es in einer neuronale Netzwerkschicht enthalten ist mit:

N nichtlinearen Prozessoren, wobei jeder eine S-förmige Übertragungskennlinie (sigmoidal transfer characteristic) besitzt, für ein entsprechendes der ersten bis N-ten analogen Ausgangssignale empfänglich ist und darauf mit der Erzeugung einer entsprechenden axonalen Antwort reagiert.

6. System zur Durchführung von N gewichteten Summierungen von Eingangssignalen nach einem der Ansprüche 1 bis 4, dadurch gekennzeichnet:

N nichtlineare Prozessoren, wobei jeder eine S-förmige Übertragungskennlinie besitzt, für ein entsprechendes der ersten bis N-ten analogen Ausgangssignale empfänglich ist und darauf mit der Erzeugung einer entsprechenden axonalen Antwort reagiert; und
einer Analog-Digital-Umsetzerschaltung zum Digitalisieren von jeder der N axonalen Antworten.

7. System zur Durchführung von N gewichteten Summierungen von Eingangssignalen nach einem der Ansprüche 1 bis 4,

dadurch gekennzeichnet,
daß es in einer Kombination mit einer Analog-Digital-Umsetzerschaltung zum Digitalisieren der ersten bis N-ten analogen Ausgangssignale enthalten ist.

8. System zur Durchführung von N gewichteten Summierungen von Eingangssignalen nach Anspruch 7, dadurch gekennzeichnet, daß

jedes der M digitalen Eingangssignale B Bits in jedem aufeinanderfolgenden Wort darin aufweist,
B eine ganze Zahl größer eins ist,
jedes der M digitalen Eingangssignale seine Wörter zeitlich zu den Wörtern von jedem anderen der M digitalen Eingangssignale ausgerichtet hat; und
eine Anzahl N digitaler gewichteter Akkumulatoren durch entsprechende der aufeinanderfolgenden ersten bis N-ten Ordnungszahlen bezeichnet sind, wobei jeder der digitalen gewichteten Akkumulatoren von einem Typ ist, der sequentiell über die Analog-Digital-Umsetzerschaltung von dem durch dieselbe Ordnungszahl wie seine eigenen B digitalen Eingangssignale bezeichneten analogen gewichteten Summierer jede Darstellung eines entsprechenden teilweise gewichteten Summierungsergebnisses erhält, welche entsprechenden teilweise gewichteten Summierungsergebnisse gemäß den Gewichtungen der sie jeweils veranlassenden Bitscheiben verschoben und dann aufsummiert werden, um ein jeweiliges digitales Ausgangssignal zu erzeugen, das repräsentativ für ein entsprechendes endgültiges gewichtetes Summierungsergebnis ist.

9. System zur Durchführung von N gewichteten Summierungen von Eingangssignalen nach Anspruch 8, dadurch gekennzeichnet, daß es in einer neuronalen Netzwerkschicht enthalten ist mit
N nichtlinearen digitalen Schaltkreisen, wobei jeder eine S-förmige Übertragungskennlinie besitzt und für ein entsprechendes der digitalen Ausgangssignale, welche die endgültigen gewichteten Summierungsergebnisse darstellen, aufnahmefähig ist, um eine entsprechende axonale Antwort zu erzeugen.

10. System zur Durchführung von N gewichteten Summierungen von Eingangssignalen nach einem der Ansprüche 1 bis 4,
dadurch gekennzeichnet, daß es in einer neuronalen Netzwerkschicht enthalten ist mit:

Analog-Digital-Umsetzerschaltungen zum Digitalisieren der ersten bis N-ten analogen Ausgangssignale; und N nichtlinearen digitalen Schaltkreisen, wobei jeder eine S-förmige Übertragungskennlinie besitzt und für ein entsprechendes der digitalisierten ersten bis N-ten analogen Ausgangssignale aufnahmefähig ist, um eine entsprechende axonale Antwort zu erzeugen.

11. System zur Durchführung von N gewichteten Summierungen von Eingangssignalen nach einem der Ansprüche 1 bis 4,
dadurch gekennzeichnet, daß

jedes der M digitalen Eingangssignale B Bits in jedem aufeinanderfolgenden Wort darin aufweist,
B eine ganze Zahl größer eins ist, und

jedes der M digitalen Eingangssignale seine Wörter zeitlich zu den Wörtern von jedem anderen der M digitalen Eingangssignale ausgerichtet hat

12. System zur Durchführung von N gewichteten Summierungen von Eingangssignalen nach Anspruch 11, dadurch gekennzeichnet, daß es in einer Kombination enthalten ist mit:
eine Anzahl N von analogen gewichteten Akkumulatoren, die durch entsprechende der aufeinanderfolgenden ersten bis N-ten Ordnungszahlen bezeichnet sind, wobei jeder Akkumulator verbunden ist zur sequentiellen Aufnahme der B aufeinanderfolgenden Werte des durch die entsprechende Ordnungszahl bezeichneten analogen Ausgangssignales, wie es als Reaktion auf entsprechende Bitscheiben der M Eingangssignale erzeugt wurde, und zur Gewichtung jener B sequentiell erhaltenen Werte des analogen Ausgangssignales gemäß den Gewichtungen der sie jeweils veranlassenden Bitscheiben, um ein endgültiges gewichtetes Summierungssignal zu erzeugen.

13. System zur Durchführung von N gewichteten Summierungen von Eingangssignalen nach Anspruch 12, dadurch gekennzeichnet, daß es in einer neuronalen Netzwerkschicht enthalten ist mit:
N nichtlinearen Prozessoren, wobei jeder eine S-förmige Übertragungskennlinie besitzt, für ein entsprechendes der endgültigen gewichteten Summierungssignale aufnahmefähig ist und darauf mit der Erzeugung einer entsprechenden axonalen Antwort reagiert.

14. System zur Durchführung von N gewichteten Summierungen von Eingangssignalen nach Anspruch 12, dadurch gekennzeichnet, daß es in einer neuronalen Netzwerkschicht enthalten ist mit:

N nichtlinearen Prozessoren, wobei jeder eine S-förmige Übertragungskennlinie besitzt, für ein entsprechendes der endgültigen gewichteten Summierungssignale aufnahmefähig ist und darauf mit der Erzeugung einer entsprechenden axonalen Antwort reagiert; und
einer Analog-Digital-Umsetzerschaltung zum Digitalisieren von jeder der N axonalen Antworten.

15. System zur Durchführung von N gewichteten Summierungen von Eingangssignalen nach Anspruch 12, dadurch gekennzeichnet,
daß es in einer Kombination mit einer Analog-Digital-Umsetzerschaltung zum Digitalisieren von jedem der endgültigen gewichteten Summierungssignale enthalten ist.

16. System zur Durchführung von N gewichteten Summierungen von Eingangssignalen nach Anspruch 12, dadurch gekennzeichnet, daß es in einer neuronalen Netzwerkschicht enthalten ist mit:

einer Analog-Digital-Umsetzerschaltung zum Digitalisieren von jedem der endgültigen gewichteten Summierungssignale; und
N nichtlinearen digitalen Schaltungen, die jede eine S-förmige Übertragungskennlinie besitzt und für ein entsprechendes der digitalisierten endgültigen gewichteten Summierungssignale aufnahmefähig ist, um eine entsprechende axonale Antwort zu erzeugen.

17. System zur Durchführung von N gewichteten Summierungen von digitalen Eingangssignalen, das in eine neuronale Netzschicht eingebunden ist, nach einem der Ansprüche 9, 10, 13, 14 und 16, dadurch gekennzeichnet, daß die neuronale Netzschicht eine Schicht von einem mehrschichtigen neuronalen Netz ist.

**Revendications**

1. Système pour effectuer une pluralité de sommations pondérées, en nombre N, d'une pluralité de signaux d'entrée ($x_i$), en nombre M, N étant un nombre entier supérieur à zéro, et M étant un nombre entier supérieur à 1, chacun desdits signaux d'entrée étant un signal numérique, ledit système étant caractérisé par le fait que :

   ledit système comprend un appareil destiné à fournir un mot multibit de chacun des M signaux d'entrée précités, à raison d'un bit à la fois, sur une base de tranches de bits; et

   ledit système comprend un appareil ($WSN_1$, $WSN_2$) destiné à effectuer les N sommations pondérées précitées sur une base de tranches de bits, ledit appareil comprenant une pluralité, en nombre N, de sommateurs analogiques pondérés ($C_{i,j}$) identifiés par ceux respectifs des premier à $N^{ième}$ nombres ordinaux consécutifs, chacun desdits sommateurs analogiques pondérés étant connecté en vue de recevoir en parallèle M signaux d'entrée analogiques obtenus à partir des M signaux numériques d'entrée précités ($x_i$) identifiés par ceux respectifs des premier à $M^{ième}$ nombres ordinaux consécutifs et chaque sommateur analogique pondéré précité générant un signal de sortie analogique respectif ($y_i$, $Z_i$) comme premier à $N^{ième}$ résultats partiels de sommations pondérées identifiés par le même nombre des premier à $N^{ième}$ nombres ordinaux consécutifs que celui dudit sommateur analogique pondéré qui le génère, les sommations pondérées des résultats partiels de sommations pondérées de nombre ordinal similaire étant ensuite effectuées, en fonction de l'importance desdites tranches de bits auxquelles ils sont associés respectivement, pour générer des premier à $N^{ième}$ résultats finals de sommations pondérées.

2. Système selon la revendication 1 destiné à effectuer N sommations pondérées de signaux d'entrée numériques monobits, ledit système étant caractérisé par le fait que ladite pluralité de N sommateurs analogiques pondérés, identifiés par ceux respectifs des premier à $N^{ième}$ nombres ordinaux consécutifs comprennent ensemble :

   M paires de lignes d'entrée, lesdites lignes d'entrée étant identifiées par ceux respectifs des premier à $2M^{ième}$ nombres ordinaux consécutifs, chaque paire comprenant des lignes d'entrée étant identifiée par un des M nombres ordinaux et chaque paire étant identifiée par le même nombre ordinal que le plus faible des nombres ordinaux identifiant les lignes d'entrée de ladite paire;

   un ensemble de circuits respectifs réagissant respectivement auxdits premier à $M^{ième}$ signaux d'entrée numériques monobits lorsqu'ils sont UN, en plaçant un premier niveau de tension préconisé sur la ligne d'entrée identifiée par le nombre ordinal correspondant et en plaçant un deuxième niveau de tension préconisé sur la ligne d'entrée identifiée par le nombre ordinal M qui est le plus élevé;

   un ensemble de circuits respectifs réagissant respectivement auxdits premier à $M^{ième}$ signaux d'entrée numériques monobits lorsqu'ils sont ZERO, en plaçant ledit deuxième niveau de tension préconisé sur la ligne d'entrée identifiée par le nombre ordinal correspondant et en plaçant ledit premier niveau de tension préconisé sur la ligne d'entrée identifiée par le nombre ordinal M qui est le plus élevé;

   N lignes de sortie identifiées par ceux respectifs des premier à $N^{ième}$ nombres ordinaux consécutifs;

   une pluralité de condensateurs de pondération comportant des premières plaques et deuxièmes plaques respectives, chacun desdits condensateurs de pondération ayant sa première plaque connectée à une desdites première à $2M^{ième}$ lignes d'entrée et ayant sa deuxième plaque connectée à une desdites première à $N^{ième}$ lignes de sortie; et

   N circuits de détection de charge identifiés par ceux respectifs des premier à $N^{ième}$ nombres ordinaux consécutifs, chacun étant connecté en vue de détecter la charge sur ladite ligne de sortie identifiée par le nombre ordinal correspondant et réagissant de manière à générer le signal de sortie analogique respectif identifié par le nombre ordinal correspondant.

3. Système selon la revendication 1 destiné à effectuer N sommations pondérées de signaux d'entrée numériques monobits, ledit système étant caractérisé par le fait que ladite pluralité, en nombre N, de sommateurs analogiques pondérés identifiés par ceux respectifs des premier à $N^{ième}$ nombres ordinaux consécutifs comprenant ensemble :

   M paires de lignes d'entrée, lesdites lignes d'entrée identifiées par ceux respectifs des premier à $2M^{ième}$ nombres ordinaux consécutifs, chaque paire comprenant des lignes d'entrée identifiées par un des M nombres ordinaux et chaque paire étant identifiée par le même nombre ordinal que le plus faible des nombres ordinaux identifiant les lignes d'entrée de ladite paire;

   un ensemble de circuits respectifs réagissant respectivement auxdits premier à $M^{ième}$ signaux d'entrée numériques monobits lorsqu'ils sont UN, en plaçant un premier niveau de tension préconisé sur la ligne d'entrée identifiée par le nombre ordinal correspondant et en plaçant un deuxième niveau de tension préconisé sur la ligne d'entrée identifiée par le nombre ordinal M qui est le plus élevé;

un ensemble de circuits respectifs réagissant respectivement auxdits premier à $M^{ième}$ signaux d'entrée numériques monobits lorsqu'ils sont ZERO, en plaçant un troisième niveau de tension à la fois sur la ligne d'entrée identifiée par le nombre ordinal correspondant et sur la ligne d'entrée identifiée par le nombre ordinal qui est M fois plus élevé, ledit troisième niveau de tension se trouvant à midis tance entre lesdits premier et deuxième niveaux de tension préconisés;

N lignes de sortie identifiées par ceux respectifs des premier à $N^{ième}$ nombres ordinaux consécutifs;

une pluralité de condensateurs de pondération comportant des premières plaques et deuxièmes plaques respectives, chacun desdits condensateurs de pondération ayant sa première plaque connectée à une desdites première à $2M^{ième}$ lignes d'entrée et ayant sa deuxième plaque connectée à une desdites première à $N^{ième}$ lignes de sortie; et

N circuits de détection de charge identifiés par ceux respectifs des premier à $N^{ième}$ nombres ordinaux consécutifs, chaque circuit de détection de charge précité étant connecté en vue de détecter la charge sur ladite ligne de sortie identifiée par le nombre ordinal correspondant et réagissant de manière à générer le signal de sortie analogique respectif identifié par le nombre ordinal correspondant.

4. Système selon la revendication 1, destiné à effectuer N sommations pondérées de signaux d'entrée numériques monobits, ledit système étant caractérisé par le fait que ladite pluralité, en nombre N, de sommateurs analogiques pondérés identifiés par ceux respectifs des premier à $N^{ième}$ nombres ordinaux consécutifs comprenant ensemble:

N paires de lignes de sortie, lesdites lignes de sortie étant identifiées par ceux respectifs des premier à $2N^{ième}$ nombres ordinaux consécutifs, chaque paire comprenant des lignes de sortie identifiées par un des N nombres ordinaux et chaque paire étant identifiée par le même nombre ordinal que le plus faible des nombres ordinaux identifiant les lignes de sortie de ladite paire;

M lignes d'entrée, lesdites lignes d'entrée étant identifiées par ceux respectifs des premier à $N^{ième}$ nombres ordinaux consécutifs;

un ensemble de circuits respectifs réagissant respectivement auxdits premier à $M^{ième}$ signaux d'entrée numériques monobits lorsqu'ils sont ZERO, en plaçant un premier niveau de tension préconisé sur la ligne d'entrée identifiée par le nombre ordinal correspondant;

un ensemble de circuits respectifs réagissant respectivement auxdits premier à $M^{ième}$ signaux d'entrée numériques monobits lorsqu'ils sont UN, en plaçant un deuxième niveau de tension préconisé sur la ligne d'entrée identifiée par le nombre ordinal correspondant;

une pluralité de condensateurs de pondération comportant des premières plaques et deuxièmes plaques respectives, chacun desdits condensateurs de pondération ayant sa première plaque connectée à une des première à $2N^{ième}$ lignes de sortie et ayant sa deuxième plaque connectée à une desdites première à $M^{ième}$ lignes d'entrée;

N circuits de détection de charge identifiés par ceux respectifs des premier à $N^{ième}$ nombres ordinaux consécutifs, chacun desdits premier à $N^{ième}$ circuits de détection de charge étant connecté en vue de détecter la charge différentielle entre ladite ligne de sortie identifiée par le nombre ordinal correspondant et ladite ligne de sortie identifiée par le nombre ordinal N qui est le plus élevé, chacun desdits premier à $N^{ième}$ circuits de détection de charge réagissant à la charge différentielle qu'il détecte en générant le signal de sortie analogique identifié par le nombre ordinal correspondant; et

un ensemble de circuits pour périodiquement mettre à zéro ledit système, ledit premier niveau de tension préconisé étant appliqué aux première et deuxième plaques de chacun desdits condensateurs de ladite pluralité de condensateurs de pondération pendant ces périodes de mise à zéro dudit système.

5. Système pour effectuer N sommations pondérées de signaux d'entrée selon l'une quelconque des revendications 1-4, caractérisé par le fait qu'il est inclus dans une couche de réseaux neuronaux avec:

N processeurs non-linéaires, chacun présentant une caractéristique de transfert sigmoïde, étant récepteur d'un signal respectif desdits premier à $N^{ième}$ signaux de sortie analogiques, et réagissant en générant une réponse axonale respective.

6. Système pour effectuer N sommations pondérées de signaux d'entrée selon l'une quelconque des revendications 1-4, caractérisé par le fait qu'il est inclus dans une couche de réseaux neuronaux avec:

N processeurs non-linéaires, chacun présentant une caractéristique de transfert sigmoïde, étant récepteur d'un signal desdits premier à $N^{ième}$ signaux de sortie analogiques, et réagissant en générant une réponse axonale respective; et

un ensemble de circuits de conversion analogique-numérique destinés à numériser chacune desdites N réponses axonales.

7. Système pour effectuer N sommations pondérées de signaux d'entrée selon l'une quelconque des revendications 1-4, caractérisé par le fait qu'il est inclus en combinaison avec:
une ensemble de circuits de conversion analogique-numérique destinés à numériser lesdits premier à N$^{ième}$ signaux de sortie analogiques.

8. Système destiné à effectuer N sommations pondérées de signaux d'entrée selon la revendication 7, caractérisé par:

chacun desdits M signaux d'entrée numériques ayant B bits dans chacun des ses mots successifs,
B étant un nombre entier supérieur à un, et
chacun des M signaux d'entrée numériques précités ayant ses mots alignés dans le temps avec les mots de chaque autre desdits M signaux d'entrée numériques; et
une pluralité, en nombre N, d'accumulateurs numériques pondérés identifiés par ceux respectifs des premier à N$^{ième}$ nombres ordinaux consécutifs, chacun desdits accumulateurs numériques pondérés étant d'un type destiné à recevoir de façon séquentielle, par l'intermédiaire dudit ensemble de circuits de conversion analogique-numérique à partir dudit sommateur analogique pondéré identifié par le même nombre ordinal que ses propres B signaux d'entrée numériques représentatifs chacun d'un résultat partiel respectif de sommation pondérée, ces résultats partiels respectifs de sommation pondérée étant décalés en fonction des poids des tranches de bits leur donnant respectivement naissance et additionnés ensuite de manière à générer un signal de sortie numérique respectif représentatif d'un résultat de sommation pondérée final respectif.

9. Système destiné à effectuer N sommations pondérées de signaux d'entrée selon la revendication 8, caractérisé par le fait qu'il est inclus dans une couche de réseaux neuronaux avec:
N circuits numériques non-linéaires, chacun présentant une caractéristique de transfert sigmoïde et étant récepteur d'un signal respectif desdits signaux de sortie numériques représentatifs de résultats finals de sommation pondérée, de manière à générer une réponse axonale respective.

10. Système destiné à effectuer N sommations pondérées de signaux d'entrée selon l'une quelconque des revendications 1-4, caractérisé par le fait qu'il est inclus dans une couche de réseaux neuronaux avec:

un ensemble de circuits de conversion analogique-numérique destiné à numériser lesdits premier à N$^{ième}$ signaux de sortie analogiques; et
N circuits numériques non-linéaires, chacun présentant une caractéristique de transfert sigmoïde et étant récepteur d'un signal respectif desdits premier à N$^{ième}$ signaux de sortie analogiques numérisés, de manière à générer un réponse axonale respective.

11. Système destiné à effectuer N sommations pondérées de signaux d'entrée selon l'une quelconque des revendications 1-4 caractérisé par:

chacun desdits M signaux d'entrée numériques ayant B bits dans chacun de ses mots successifs,
B étant un nombre entier supérieur à un, et
chacun desdits M signaux d'entrée numériques ayant ses mots alignés dans le temps avec les mots de chaque autre desdits M signaux d'entrée numériques.

12. Système pour effectuer N sommations pondérées de signaux d'entrée selon la revendication 11, caractérisé par le fait qu'il est inclus en combinaison avec:
une pluralité, en nombre N, d'accumulateurs analogiques pondérés identifiés par ceux respectifs des premier à N$^{ième}$ nombres ordinaux consécutifs, connectés chacun en vue de recevoir de façon séquentielle les B valeurs successives dudit signal de sortie analogique identifié par le nombre ordinal correspondant, tel que généré en réponse à des tranches de bits respectives des M signaux d'entrée précités, et de pondérer celles des B valeurs reçues de façon séquentielle dudit signal de sortie analogique en fonction des poids des tranches de bits leur donnant respectivement naissance de manière à générer un signal de sommation pondérée final.

13. Système pour effectuer N sommations pondérées de signaux d'entrée selon la revendication 12, caractérisé par le fait qu'il est inclus dans une couche de réseaux neuronaux avec:

N processeurs non-linéaires, chacun présentant une caractéristique de transfert sigmoïde, étant récepteur d'un signal respectif desdits signaux de sommation pondérés finals, et réagissant en générant une réponse axonale respective.

**14.** Système pour effectuer N sommations pondérées de signaux d'entrée selon la revendication 12, caractérisé par le fait qu'il est inclus dans une couche de réseaux neuronaux avec:

N processeurs non-linéaires, chacun présentant une caractéristique de transfert sigmoïde, étant récepteur d'un signal respectif desdits signaux de sommation pondérés finals, et réagissant en générant une réponse axonale respective; et
un ensemble de circuits de conversion analogique-numérique destiné à numériser chacune des N réponses axonales précitées.

**15.** Système pour effectuer N sommations pondérées de signaux d'entrée selon la revendication 12, caractérisé par le fait qu'il est inclus en combinaison avec:
un ensemble de circuits de conversion analogique-numérique destiné à numériser chacun desdits signaux de sommation pondérés finals.

**16.** Système pour effectuer N sommations pondérées de signaux d'entrée selon la revendication 12, caractérisé par le fait qu'il est inclus dans une couche de réseaux neuronaux avec :

un ensemble de circuits de conversion analogique-numérique destiné à numériser chacun desdits signaux de sommation pondérée finals; et
N circuits numériques non-linéaires, chacun présentant une caractéristique de transfert sigmoïde et étant récepteur d'un signal respectif desdits signaux de sommation pondérés finals numérisés, de manière à générer une réponse axonale respective.

**17.** Système pour effectuer N sommations pondérées de signaux d'entrée numériques appliqués dans une couche de réseaux neuronaux, selon l'une quelconque des revendications 9, 10, 13, 14 et 16, caractérisé par le fait que ladite couche de réseaux neuronaux est une couche d'un réseau neuronal à plusieurs couches.

CHARGE-SENSING AMPLIFIER

$QS_K$

RESET

OUT
OUTBAR

TG1

INV

$V_{DD}$

$V_{SS}$

$V_{SS}$

TG2

OA

$V_{DD}$

MC

TG3

$OL_K$

$(V_{SS} + V_{DD})/2$

*FIG. 1*
*PRIOR ART*

FIG. 2

EP 0 469 885 B1

FIG. 3

EP 0 469 885 B1

# FIG. 4

*FIG. 5*

EP 0 469 885 B1

EP 0 469 885 B1

$X_1$ $X_2$ $X_3$ $X_M$

• • •

| WEIGHTED SUMMATION NETWORK PER FIGURE 2, 3, OR 4 | WSN $_1$ |

WHERE $X_1, X_2, X_3 ... X_M$
HAVE 1-BIT WORDS,
OMIT WSN$_2$' & MAKE
$Z_1 = y_1, Z_2 = y_2,$
$Z_3 = y_3, ... Z_N = y_N$

$y_1$ $y_2$ $y_3$ • • • $y_N$

| WEIGHTED SUMMATION NETWORK PER FIGURE 5 | WSN $_2$ |

$Z_1$ $Z_2$ $Z_3$ • • • $Z_N$

NLP $_1$ — | NON-LINEAR PROCESSOR | NON-LINEAR PROCESSOR | NON-LINEAR PROCESSOR | NON-LINEAR PROCESSOR |

NLP $_2$ NLP $_3$ NLP $_N$

N ANALOG AXONAL OUTPUT RESPONSES

ADC$_1$ — | ANALOG-TO-DIGITAL CONVERTER | ANALOG-TO-DIGITAL CONVERTER | ANALOG-TO-DIGITAL CONVERTER | ANALOG-TO-DIGITAL CONVERTER |

ADC$_2$ ADC$_3$ ADC $_N$

N DIGITAL AXONAL OUTPUT RESPONSES

• • •

NEXT — | SUCCEEDING CIRCUITRY (E.G. AN OUTPUT NEURAL NET LAYER) |

## FIG. 6

FIG. 7

$V_{DD} = +5.0V$

$V_{HI} = +2.1V$

$Q_{23}$

$Q_{24}$

$Q_{26}$

$Q_{20A}$

IN

OUT

2.5V

$Q_{20B}$

$Q_{24}$

$V_{LO} = + 1.4V$

$Q_{21}$

$Q_{22}$

$V_{SS} = OV$

NON-LINEAR VOLTAGE FOLLOWER     BIAS NETWORK

38

FIG. 8

SIGN BIT FLAG

*y_N* → | A - TO - D CONVERTER | → | SELECTIVE COMPLEMENTOR | → | ACCUMULATOR | → | LATCH | → (+) → Σ*y_N*

RADC_N    RCMP_N    RACC_N    CARRY    LCH_N    ADD_N

WIRED SHIFT RIGHT
WSR_N

*y_2* → | A - TO - D CONVERTER | → | SELECTIVE COMPLEMENTOR | → | ACCUMULATOR | → | LATCH | → (+) → Σ*y_2*

RADC_2    RCMP_2    RACC_2    CARRY    LCH_2    ADD_2

WIRED SHIFT RIGHT    WSR_2

*y_1* → | A - TO - D CONVERTER | → | SELECTIVE COMPLEMENTOR | → | ACCUMULATOR | → | LATCH | → (+) → Σ*y_1*

RADC_1    RCMP_1    RACC_1    CARRY    LCH_1    ADD_1

WIRED SHIFT RIGHT    WSR_1

EP 0 469 885 B1

39

*FIG. 9A*

$X_1$　　$X_2$　　$X_3$　　$X_M$

· · ·

| WEIGHTED SUMMATION NETWORK<br>PER FIGURE 2,3, OR 4 | ~WSN$_1$ |

ANALOG<br>WEIGHTED SUMS

· · ·

· · ·

| ADC$_1$ ~ ANALOG-<br>TO-DIGITAL<br>CONVERTER | ANALOG-<br>TO-DIGITAL<br>CONVERTER | ANALOG-<br>TO-DIGITAL<br>CONVERTER | ANALOG-<br>TO-DIGITAL<br>CONVERTER |

ADC$_2$　　ADC$_3$　　ADC$_N$

DIGITAL<br>WEIGHTED SUMS

· · ·

$y_1$　　$y_2$　　$y_3$　　$y_N$

WHERE $X_1, X_2, X_3 \ldots X_M$<br>HAVE 1-BIT WORDS,<br>OMIT WSN$_2$ & MAKE<br>$Z_1 = y_1, Z_2 = y_2,$<br>$Z_3 = y_3, \ldots Z_N = y_N$

| WEIGHTED SUMMATION NETWORK<br>PER FIGURE 8 | ~ WSN$_2$ |

$\Sigma y_1$　　$\Sigma y_2$　　$\Sigma y_3$ · · · $\Sigma y_N$

$\Sigma y_1'$

ADD$_1$　　$\Sigma y_2'$

ADD$_2$　　$\Sigma y_3'$

ADD$_3$

ADD$_N$　　$\Sigma y_N'$

| NON-LINEAR<br>PROCESSOR | NON-LINEAR<br>PROCESSOR | NON-LINEAR<br>PROCESSOR | NON-LINEAR<br>PROCESSOR |

NLP$_1$　　NLP$_2$　　NLP$_3$　　NLP$_N$

· · ·

N DIGITAL AXONAL<br>OUTPUT RESPONSES

$Z_1$　　$Z_2$　　$Z_3$　　$Z_N$

NEXT ~ | SUCCEEDING CIRCUITRY (E.G.<br>AN OUTPUT NEURAL NET LAYER) |

*FIG. 9B*

FIG. 10

FIG. 11

EP 0 469 885 B1

FIG. 12

# FIG. 13

FIG. 14

FIG. 15

WHERE $X_1, X_2, X_3 ... X_M$
HAVE 1-BIT WORDS,
OMIT $WSN_2'$ & MAKE
$Z_1 = y_1, Z_2 = y_2,$
$Z_3 = y_3, ... Z_N = y_N$

$X_1$   $X_2$   $X_3$   $X_M$

WEIGHTED SUMMATION NETWORK PER FIGURE 12 OR FIGURE 13   $WSN_1'$

$y_1$   $y_2$   $y_3$ ... $y_N$

WEIGHTED SUMMATION NETWORK PER FIGURE 14   $WSN_2'$

$Z_1$   $Z_2$   $Z_3$ ... $Z_N$

$NLP_1$   NON-LINEAR PROCESSOR   NON-LINEAR PROCESSOR   NON-LINEAR PROCESSOR   NON-LINEAR PROCESSOR

$NLP_2$   $NLP_3$   $NLP_N$

N ANALOG AXONAL OUTPUT RESPONSES

$ADC_1$   ANALOG-TO-DIGITAL CONVERTER   ANALOG-TO-DIGITAL CONVERTER   ANALOG-TO-DIGITAL CONVERTER   ANALOG-TO-DIGITAL CONVERTER

$ADC_2$   $ADC_3$   $ADC_N$

N DIGITAL AXONAL OUTPUT RESPONSES

NEXT   SUCCEEDING CIRCUITRY (E.G. AN OUTPUT NEURAL NET LAYER)

EP 0 469 885 B1

## FIG. 16

## FIG. 17

FIG. 18

EP 0 469 885 B1

## FIG. 19A

$X_1$   $X_2$   $X_3$   $X_M$

・・・

WEIGHTED SUMMATION NETWORK
PER FIGURE 12 AND 13   ~ WSN$_1$'

ANALOG
WEIGHTED SUMS ~   ・・・

・・・

| ANALOG-TO-DIGITAL CONVERTER | ANALOG-TO-DIGITAL CONVERTER | ANALOG-TO-DIGITAL CONVERTER | ANALOG-TO-DIGITAL CONVERTER |

ADC$_1$ ~

ADC$_2$   ADC$_3$   ADC$_N$

DIGITAL
WEIGHTED SUMS ~   ・・・

$y_1$   $y_2$   $y_3$   $y_N$

WHERE $X_1, X_2, X_3 \ldots X_M$
HAVE 1-BIT WORDS,
OMIT WSN$_2$ & MAKE
$Z_1 = y_1, Z_2 = y_2,$
$Z_3 = y_3, \ldots Z_N = y_N$

WEIGHTED SUMMATION NETWORK
PER FIGURE 18   ~ WSN$_2$'

$\Sigma y_1$   $\Sigma y_2$   $\Sigma y_3$ ・・・ $\Sigma y_N$

$\Sigma y_1'$

ADD$_1$  (+)

$\Sigma y_2'$

ADD$_2$ ~ (+)

$\Sigma y_3'$

ADD$_3$ ~ (+)

ADD$_N$ ~ (+)   $\Sigma y_N'$

| NON-LINEAR PROCESSOR | NON-LINEAR PROCESSOR | NON-LINEAR PROCESSOR | NON-LINEAR PROCESSOR |

NLP$_1$   NLP$_2$   NLP$_3$   NLP$_N$

・・・

N DIGITAL AXONAL
OUTPUT RESPONSES

$Z_1$   $Z_2$   $Z_3$   $Z_N$

SUCCEEDING CIRCUITRY (E.G.
AN OUTPUT NEURAL NET LAYER)

NEXT ~

FIG. 19B

*FIG. 20A*

## FIG. 20B

EP 0 469 885 B1

FIG. 21A

FIG. 21B

FIG. 22A

FIG. 22B

FIG. 23A

FIG. 23B

EP 0 469 885 B1

FIG. 24A

# FIG. 24B

EP 0 469 885 B1

*FIG. 25*

EP 0 469 885 B1

EP 0 469 885 B1

*FIG. 26*

$X_g$ INPUT SIGNALS TO $L_2$ LAYER

$L_2$ — SECOND HIDDEN NEURAL NET LAYER

$\delta_h$

BACK-PROPAGATION PROCESSOR

BPP$_2$

READ/WRITE

g ADDRESS

h ADDRESS

$Z_h$ OUTPUT SIGNALS FROM $L_2$ LAYER = $X_h$ INPUT SIGNALS TO $L_1$ LAYER

$\Delta_h$

$L_1$ — FIRST HIDDEN NEURAL NET LAYER

$\delta_i$

BACK-PROPAGATION PROCESSOR

BPP$_1$

READ/WRITE

h ADDRESS

i ADDRESS

$Z_i$ OUTPUT SIGNALS FROM $L_1$ LAYER = $X_i$ INPUT SIGNALS TO $L_0$ LAYER

$\Delta_i$

$L_0$ — OUTPUT NEURAL NET LAYER

$\delta_j$

BACK-PROPAGATION PROCESSOR

BPP$_0$

READ/WRITE

i ADDRESS

j ADDRESS

$Z_j$ OUTPUT SIGNALS FROM $L_0$ LAYER

$\Delta_j$

FIG. 27A

## FIG. 27B

EP 0 469 885 B1

FIG. 28A

FIG. 28B

EP 0 469 885 B1

FIG. 29A

*FIG. 29B*

*FIG. 30A*

70

## FIG. 30B

EP 0 469 885 B1

FIG. 31A

# FIG. 31B

EP 0 469 885 B1

FIG. 32

FIG. 33

74